# EUROPEAN PATENT APPLICATION

(11) **EP 4 032 701 A1**
(43) Date of publication of application: **27.07.2022**
(21) Application number: 21152757.7
(22) Date of filing: 21.01.2021
(51) Int. Cl.: B32B 18/00, C04B 35/119, C04B 35/44, C04B 35/443, C04B 35/505, C04B 35/645

(54) **MULTILAYER SINTERED CERAMIC BODY**

(71) Applicant: Heraeus Conamic North America LLC, Chandler, AZ 85226 (US)
(72) Inventor: Walker, Luke, Chandler, AZ 85226 (US); Donelon, Matthew Joseph, Chandler, AZ 85226 (US)
(74) Representative: Gille Hrabal Partnerschaftsgesellschaft mbB Patentanwälte

(57) **Abstract**

Disclosed herein is a multilayer sintered ceramic body comprising: a first layer selected from the group consisting of YAG, magnesium aluminate spinel and at least one crystalline phase comprising yttria and zirconia, wherein the zirconia is present in an amount of not less than 10 mol% ZrO₂ and not greater than 25 mol% ZrO₂, a second layer comprising Al₂O₃ and ZrO₂ wherein ZrO₂ is present in an amount of not less than 10 % ZrO₂ by volume and not greater than 25% ZrO₂ by volume, and a third layer comprising combinations of the first layer and the second layer and the second layer is disposed between the first layer and the third layer, and the absolute value of the coefficient of thermal expansion (CTE) of the first, second and third layers differ in an amount of from 0 to less than 0.6 x 10⁻⁶/°C. The multilayer sintered ceramic body and chamber components fabricated therefrom may have enhanced adhesion between layers, high mechanical strength and excellent machinability through the CTE matching layers disclosed herein. Use in semiconductor plasma processing chambers and methods of making are disclosed.

## Description

### TECHNICAL FIELD

The disclosure relates to a multilayer corrosion-resistant sintered ceramic comprising at least one layer comprising combinations of alumina, yttria and zirconia that exhibit corrosion resistance, high strength and low loss of RF transmission when used as a component of a semiconductor processing tool. These may be components such as chamber liners, RF or microwave transparent windows, showerheads, focus rings, wafer chucks, gas injectors or nozzles, shield rings, clamping rings, mixing manifolds, and gas distribution assemblies. The disclosure also relates to a method of preparing the sintered ceramic compositions.

### BACKGROUND

Semiconductor processing requires the use of halogen-based gases in combination with high electric and magnetic fields to create a plasma environment for etch and/or deposition processes within vacuum chambers. The harsh plasma environment necessitates the use of highly corrosion and erosion resistant materials as chamber components to minimize release of particles from the component surface into the chamber which results in semiconductor device yield loss.

To address this, oftentimes chamber components have a surface layer which is resistant to corrosion and erosion upon exposure to the process gases. The surface layer may be formed atop a base or substrate which may have superior mechanical, electrical or other preferred properties. Corrosion resistant films or coatings of for example yttrium oxide or yttrium aluminum garnet (YAG) have been known to be deposited atop a base or substrate formed of a different material which are lower in price and higher in strength than most corrosion resistant materials. Such films or coatings have been made through several methods. Vapor deposition methods have been used to deposit corrosion resistant films on substrates, however vapor deposition is limited to relatively thin layers due to internal film stresses and often small holes are present in the thin film, resulting in poor adhesion and delamination. Aerosol or plasma spray techniques typically exhibit high levels of porosity of between 3% to 10%, and correspondingly low density and poor film adhesion.

Other approaches to form a corrosion resistant, high strength multilayer chamber component involve co-sintering laminated layers to form a green body comprising the corrosion resistant surface layer and a substrate or base material. These methods typically use pressureless sintering and the flatness of the sintered body is dependent upon closely matching the sintering rates of the layers. If the sintering rate of the corrosion resistant first layer is greater than that of the substrate, the sintered ceramic body will have a corrosion resistant surface which is concave, whereas if the sintering rate of the substrate is greater than that of the surface layer, the sintered ceramic body will have a corrosion resistant surface which is convex and may place stress upon the corrosion resistant first layer. As such, variances in sintering rate create residual stress in the sintered body, making it prone to breakage, microcracking and subsequent particle release, thus materials selected for co-sintering are limited to those having the same or very similar sintering profiles. Additionally, the residual stress arising from variances in sintering rates makes these co-sintered chamber component bodies prone to microcracking and/or fracture upon machining, in particular at large dimension.

When considering pressure assisted sintering methods, differences in coefficient of thermal expansion (CTE) between materials selected for the corrosion resistant first layer and the substrate forming the chamber component play a role in the ability to form high strength, multilayer chamber components. If the CTE difference between the corrosion resistant first layer and the substrate is too great, microcracking or fracture may occur within the sintered body or at interfaces between layers resulting from stress generated due to CTE mismatch in the brittle, nonmetallic materials used for chamber components. Thus, materials selected to form the corrosion resistant first layer and those selected as a substrate of the chamber component must closely match in CTE across temperature ranges necessary for processing and use.

As dimensions of semiconductor substrates increase, there is a need for large dimension (greater than for example 100 mm and up to 625 mm), chamber components which may be readily machined into corrosion resistant, multilayer components for use in plasma processing chambers. However, drilling of holes and machining of features may result in small, almost invisible microcracks beneath (subsurface) and on the surface of these brittle, nonmetallic materials. This surface and subsurface damage may lead to particle contamination due to erosion or spalling of the brittle material and/or fracture. Machinability of the components formed from brittle materials becomes increasingly challenging to prevent the release of particles into the plasma processing chamber and/or fracture, in particular at large component dimensions.

As a result, there is a need for a multilayer sintered ceramic body having the properties of plasma resistance and machinability of the ceramic body enabling formation of high strength components for use in plasma processing chambers.

### SUMMARY

These and other needs are addressed by the various embodiments, aspects and configurations as disclosed herein.

Multilayer sintered ceramic bodies, also referred to herein as corrosion resistant bodies or ceramic bodies, and methods of making are described herein. These ceramic bodies provide high corrosion resistance to chlorine and fluorine-based process gases, low dielectric loss, high thermal conductivity and enhanced machinability, and are thus desirable for use as components in semiconductor processing chambers utilizing halogen-based process gases. The ceramic bodies are particularly suited for use as large chamber components of dimension 100 mm and greater.
/1/ A multilayer sintered ceramic body comprising: a first layer selected from the group consisting of: YAG, magnesium aluminate spinel and at least one crystalline phase comprising yttria and zirconia, wherein the zirconia is present in an amount of not less than 10 mol % ZrO2 and not greater than 25 mol % ZrO2, a second layer comprising Al₂O₃ and ZrO₂ wherein ZrO₂ is present in an amount of not less than 10 % ZrO₂ by volume and not greater than 25% ZrO₂ by volume, and a third layer comprising combinations of the first layer and the second layer, wherein the second layer is disposed between the first layer and the third layer, and wherein an absolute value of the coefficient of thermal expansion (CTE) of the first, second and third layers differ in an amount of from 0 to less than 0.6 x 10⁻⁶/°C as measured in accordance with ASTM E831.
/2/ The multilayer sintered ceramic body of embodiment 1 wherein the absolute value of the coefficient of thermal expansion (CTE) of the second layer and the third layer differ in an amount of from 0 to less than 0.55 x 10⁻⁶/°C as measured in accordance with ASTM E831.
/3/ The multilayer sintered ceramic body of any of the preceding embodiments wherein the absolute value of the coefficient of thermal expansion (CTE) of the first layer and the second layer differ in an amount of from 0 to less than 0.5 x 10⁻⁶/°C as measured in accordance with ASTM E831.
/4/ The multilayer sintered ceramic body of any of the preceding embodiments wherein the absolute value of the coefficient of thermal expansion (CTE) of the first, second and third layers differ in an amount of from 0.003 x 10⁻⁶/°C to less than 0.55 x 10⁻⁶/°C as measured in accordance with ASTM E831.
/5/ The multilayer sintered ceramic body of any of the preceding embodiments wherein the third layer comprises YAG in an amount of not less than 10% and not greater than 60%, preferably not less than 20% and not greater than 60%, preferably not less than 30% and not greater than 60%, preferably not less than 40% and not greater than 60%, preferably not less than 45% and not greater than 55%, each by weight relative to the total weight of the third layer.
/6/ The multilayer sintered ceramic body of any of the preceding embodiments wherein the second layer comprises zirconia in an amount by volume of ZrO₂ of not less than 12% and not greater than 25 %, preferably not less than 15% and not greater than 25 %, preferably not less than 18% and not greater than 25 %, preferably not less than 10% and not greater than 23 %, preferably not less than 10% and not greater than 20 %, preferably not less than 12% and not greater than 23 %, preferably not less than 15% and not greater than 20 %, preferably not less than 15% and not greater than 18 %, relative to a total volume of the second layer.
/7/ The multilayer sintered ceramic body of any of the preceding embodiments wherein a difference in the absolute value of the coefficient of thermal expansion between any of the layers is from 0 to 0.5 x 10⁻⁶/°C, preferably from 0 to 0.45 x 10⁻⁶/°C, preferably from 0 to 0.4 x 10⁻⁶/°C, preferably from 0 to 0.35 x 10⁻⁶/°C, preferably from 0 to 0.3 x 10⁻⁶/°C, preferably from 0 to 0.25 x 10⁻⁶/°C, preferably from 0 to 0.2 x 10⁻⁶/°C, preferably from 0 to 0.15 x 10⁻⁶/°C, preferably from 0 to 0.1 x 10⁻⁶/°C, preferably from 0 to 0.08 x 10⁻⁶/°C, preferably from 0 to 0.06 x 10⁻⁶/°C, preferably from 0 to 0.04 x 10⁻⁶/°C, preferably from 0 to 0.02 x 10⁻⁶/°C, preferably from 0 to 0.01 x 10⁻⁶/°C as measured in accordance with ASTM E831.
/8/ The multilayer sintered ceramic body of any of the preceding embodiments wherein a difference in the absolute value of the coefficient of thermal expansion between any of the layers is from 0.003 x 10⁻⁶/°C to 0.5 x 10⁻⁶/°C, preferably from 0.003 x 10⁻⁶/°C to 0.45 x 10⁻⁶/°C, preferably from 0.003 x 10⁻⁶/°C to 0.4 x 10⁻⁶/°C, preferably from 0.003 x 10⁻⁶/°C to 0.35 x 10⁻⁶/°C, preferably from 0.003 x 10⁻⁶/°C to 0.3 x 10⁻⁶/°C, preferably from 0.003 x 10⁻⁶/°C to 0.25 x 10⁻⁶/°C, preferably from 0.003 x 10⁻⁶/°C to 0.2 x 10⁻⁶/°C, preferably from 0.003 x 10⁻⁶/°C to 0.15 x 10⁻⁶/°C, preferably from 0.003 x 10⁻⁶/°C to 0.1 x 10⁻⁶/°C, preferably from 0.003 x 10⁻⁶/°C to 0.08 x 10⁻⁶/°C, preferably from 0.003 x 10⁻⁶/°C to 0.06 x 10⁻⁶/°C, preferably from 0.003 x 10⁻⁶/°C to 0.04 x 10⁻⁶/°C, preferably from 0.003 x 10⁻⁶/°C to 0.02 x 10⁻⁶/°C, preferably from 0.003 x 10⁻⁶/°C to 0.01 x 10⁻⁶/°C as measured in accordance with ASTM E831.
/9/ The multilayer sintered ceramic body of any of the preceding embodiments wherein the absolute value of the coefficient of thermal expansion (CTE) between any of the layers differ within a temperature range of from ambient temperature to about 1400°C by from 0 to less than 0.55 x 10⁻⁶/°C as measured in accordance with ASTM E831.
/10/ The multilayer sintered ceramic body of any of the preceding embodiments wherein the first layer comprises YAG in an amount of from about 98% to about 99.5% by volume and the balance comprises at least one crystalline phase selected from the group consisting of aluminum oxide, yttrium oxide, YAM and YAP.
/11/ The multilayer sintered ceramic body of any of the preceding embodiments wherein the first layer comprises pores wherein the pores have a maximum size of from 0.1 um to 5 um, preferably from 0.1 um to 4 um, preferably from 0.1 um to 3 um, preferably from 0.1 um to 2 um, from 0.1 um to 1 um.
/12/ The multilayer sintered ceramic body of any of the preceding embodiments wherein the first layer has a cumulative pore distribution of from about 2 um²/mm² to about 800 um²/mm², preferably from about 2 um²/mm² to about 600 uum²/mm², preferably from about 2 um²/mm² to about 400 uum²/mm², preferably from about 2 um²/mm² to about 300 um²/mm².
/13/ The multilayer sintered ceramic body of any of the preceding embodiments wherein the first layer comprises porosity by percentage of total area of from 0.0005 to 2%, preferably from 0.0005 to 1%, preferably from 0.0005 to 0.5%, preferably from 0.0005 to 0.05%, preferably from 0.0005 to 0.005%, preferably from 0.0005 to 0.003%, preferably from 0.0005 to 0.001%, preferably from 0.005 to 2%, preferably from 0.05 to 2%, preferably from 0.5 to 2%, preferably from 0.005 to 2%, preferably from 0.005 to 1%, preferably from 0.05 to 2%, preferably from 0.05 to 1%, preferably from 0.5 to 2%.
/14/ The multilayer sintered ceramic body of any of the preceding embodiments wherein the first layer has a total impurity content of less than 100 ppm, preferably less than 75 ppm, preferably less than 50 ppm, preferably less than 25 ppm, preferably less than 15 ppm, preferably less than 10 ppm, preferably less than 8 ppm, preferably less than 5 ppm, preferably from 5 to 50 ppm, preferably from 5 to 30 ppm, preferably from 5 to 20 ppm relative to a mass of the first layer as measured using ICPMS methods.
/15/ The multilayer sintered ceramic body of any of the preceding embodiments wherein the first layer is free of dopants.
/16/ The multilayer sintered ceramic body of any of the preceding embodiments wherein the first layer comprises silica in an amount of from 14 to 100 ppm, preferably from 14 to 75 ppm, preferably from 14 to 50 ppm, preferably from 14 to 25 ppm, preferably from 14 to 20 ppm, preferably about 14 ppm relative to a total mass of the first layer.
/17/ The multilayer sintered ceramic body of any of the preceding embodiments wherein the first layer has an Sa of from 0.0005 to 20 um, preferably from 0.0005 to 18 um, preferably from 0.0005 to 15 um, preferably from 0.0005 to 12 um, preferably from 0.0005 to 10 um, preferably from 0.0005 to 5 um, preferably from 0.0005 to 3 um, preferably from 0.001 to 20 um, preferably from 0.005 to 20 um, preferably from 0.001 to 15 um, preferably from 0.001 to 10 um, preferably from 0.001 to 5 um as measured in accordance with ISO standard 25178-2-2012, section 4.1.7.
/18/ The multilayer sintered ceramic body of any of the preceding embodiments wherein the second layer comprises zirconia in an amount of from 10% to 25% by volume and has a coefficient of thermal expansion of from 6.899 x 10⁻⁶/°C to 9.630 x 10⁻⁶/°C across a temperature range of from about 200°C to about 1400°C.
/19/ The multilayer sintered ceramic body of claim 18 wherein the second layer has a density of from 4.192 to 4.462 g/cc as measured in accordance with ASTM B962-17.
/20/ The multilayer sintered ceramic body of any of the preceding embodiments wherein the second layer comprises ZrO₂ in an amount of about 16% by volume, having a CTE of about 7.112 x 10⁻⁶/°C and a density of about 4.319 g/cc as measured in accordance with ASTM B962-17.
/21/ The multilayer sintered ceramic body of any of the preceding embodiments wherein the first and second layers are contiguous.
/22/ The multilayer sintered ceramic body of any of the preceding embodiments wherein the second and third layers are contiguous.
/23/ The multilayer sintered ceramic body of claim 20 wherein the second layer has a thermal conductivity at ambient temperature of about 27 W/m K as calculated from thermal diffusivity measurements as performed in accordance with ASTM E1461-13.
/24/ The multilayer sintered ceramic body of claim 20 wherein the second layer has a thermal conductivity at 200°C of about 14 W/m K as calculated from thermal diffusivity measurements as performed in accordance with ASTM E1461-13.
/25/ The multilayer sintered ceramic body of any of the preceding embodiments wherein the second layer has a total impurity content of from 5 to 200 ppm, preferably from 5 to 150 ppm, preferably less than 100 ppm, preferably less than 50 ppm, preferably less than 25 ppm, preferably less than 15 ppm, preferably from 10 to 100 ppm, preferably from 10 to 80 ppm, preferably from 10 to 60 ppm, preferably from 10 to 40 ppm, preferably from 20 to 80 ppm, preferably from 30 to 60 ppm relative to a total mass of the second layer as measured using ICPMS methods.
/26/ The multilayer sintered ceramic body of any of the preceding embodiments wherein the second layer comprises silica in an amount of from 14 to 100 ppm, preferably from 14 to 75 ppm, preferably from 14 to 50 ppm, preferably from 14 to 25 ppm, preferably from 14 to 20 ppm, preferably about 14 ppm relative to a total mass of the composite oxide as measured using ICPMS methods.
/27/ The multilayer sintered ceramic body of any of the preceding embodiments wherein the second layer comprises magnesia in an amount of from about 2 to 100 ppm, preferably from about 2 to 75 ppm, preferably from about 2 to 50 ppm, preferably from about 2 to 25 ppm, preferably from about 2 to 20 ppm, preferably about 2 ppm relative to a total mass of the second layer.
/28/ The multilayer sintered ceramic body of any of the preceding embodiments wherein the second layer comprises calcia in an amount of from about 2 to 100 ppm, preferably from about 2 to 75 ppm, preferably from about 2 to 50 ppm, preferably from about 2 to 25 ppm, preferably from about 2 to 20 ppm, preferably about 2 ppm relative to a total mass of the second layer.
/29/ The multilayer sintered ceramic body of any of the preceding embodiments wherein the first layer is free of lithium or lithium fluoride.
/30/ The multilayer sintered ceramic body of claim 20 wherein the second layer has a dielectric loss of 0.7 x 10⁻⁴ and less at a frequency of 1 MHz at ambient temperature as measured in accordance with ASTM D150.
/31/ The multilayer sintered ceramic body of any of the preceding embodiments wherein the second layer comprises zirconia wherein the zirconia is selected from the group consisting of unstabilized, partially yttria stabilized or fully yttria stabilized zirconia.
/32/ The multilayer sintered ceramic body of claim 31 wherein the yttria is present in an amount of about 3 mol % and less.
/33/ The multilayer sintered ceramic body of any of the preceding embodiments wherein the second layer and the first layer are contiguous at an interface having an interfacial area of 2,919 cm² and less, preferably from 78 to 2,919 cm², preferably from 314 to 2,919 cm², preferably from 707 to 2,919 cm².
/34/ The multilayer sintered ceramic body of any of the preceding embodiments wherein the second layer and the third layer are contiguous at an interface having an interfacial area of 2,919 cm² and less, preferably from 78 to 2,919 cm², preferably from 314 to 2,919 cm², preferably from 707 to 2,919 cm².
/35/ The multilayer sintered ceramic body of any of the preceding embodiments wherein an interface defined by the second layer and the first layer comprises from 0.2 to 0.8 grains per um, preferably from 0.3 to 0.6 grains per um, preferably from 0.4 to 0.55 grains per um.
/36/ The multilayer sintered ceramic body of any of the preceding embodiments wherein an interface defined by the second layer and the first layer comprises at least one dovetail-shaped interface as determined by SEM imaging.
/37/ The multilayer sintered ceramic body of any of the preceding embodiments wherein an interfacial length defined by the second layer and the first layer is increased in length by from 20 to 80 %, preferably from 20 to 60%, preferably from 20 to 40%, preferably from 30 to 80%, preferably from 40 to 80%, preferably from 30 to 70% relative to a linear interfacial length.
/38/ The multilayer sintered ceramic body of any of the preceding embodiments wherein the first layer has a thickness, the second layer has a thickness, the third layer has a thickness wherein the thickness of the second layer is from 70 % to 95%, preferably from 70 % to 90%, preferably from 70 % to 85%, preferably from 80 % to 95%, preferably from 85 % to 95% of the combined thickness of the 3 layers.
/39/ A method of making a multilayer sintered ceramic body, the method comprising the steps of: combining yttria powder and alumina powder to make a first powder mixture, combining zirconia powder and alumina powder to make a second powder mixture, calcining the first and second powder mixtures by applying heat to raise the temperature of the powder mixtures to a calcination temperature and maintaining the calcination temperature to perform calcination to form first and second calcined powder mixtures, combining first and second calcined powder mixtures to make a third calcined powder mixture, separately disposing the first, second and third calcined powder mixtures inside a volume defined by a tool set of a sintering apparatus to form at least one layer of the first calcined powder mixture, at least one layer of the second calcined powder mixture, and at least one layer of the third calcined powder mixture, and creating vacuum conditions inside the volume, applying pressure to the layers of the first, second and third calcined powder mixtures while heating to a sintering temperature and performing sintering to form the multilayer sintered ceramic body, wherein the at least one layer of the first calcined powder mixture forms a first layer, the at least one layer of the second powder mixture forms a second layer, and the at least one layer of the third powder mixture forms a third layer, and lowering the temperature of the multilayer sintered ceramic body wherein the first layer comprises YAG, the second layer comprises Al₂O₃ and ZrO₂ wherein the ZrO₂ is present in an amount of not less than 10 % ZrO₂ by volume and not greater than 25% ZrO₂ by volume, and the third layer comprises combinations of the first layer and the second layer, wherein the second layer is disposed between the first layer and the third layer, wherein the absolute value of the coefficient of thermal expansion (CTE) of the first, second and third layers differ in an amount of from 0 to less than 0.6 x 10⁻⁶/°C as measured in accordance with ASTM E831.
/40/ The method according to claim 39 wherein the absolute value of the coefficient of thermal expansion of the second layer and the third layer differ in an amount of from 0 to less than 0.55 x 10⁻⁶/°C as measured in accordance with ASTM E831.
/41/ The method according to any of embodiments 39 to 40 wherein the absolute value of the coefficient of thermal expansion of the first layer and the second layer differ in an amount of from 0 to less than 0.5 x 10⁻⁶/°C as measured in accordance with ASTM E831.
/42/ The method according to any of embodiments 39 to 41 wherein the absolute value of the coefficient of thermal expansion of the first, second and third layers differ in an amount of from 0.003 x 10⁻⁶/°C to less than 0.55 x 10⁻⁶/°C as measured in accordance with ASTM E831.
/43/ The method according to any of embodiments 39 to 42 wherein the absolute value of the coefficient of thermal expansion (CTE) between any of the layers differ within a temperature range of from ambient temperature to about 1400°C by from 0 to less than 0.6 x 10⁻⁶/°C as measured in accordance with ASTM E831.
/44/ The method according to any of embodiments 39 to 43 wherein the first layer comprises YAG in an amount of from about 98% to about 99% by volume and the balance comprises at least one crystalline phase selected from the group consisting of aluminum oxide, yttrium oxide, YAM and YAP.
/45/ The method according to any of embodiments 39 to 44 wherein the first layer comprises pores wherein the pores have a maximum size of from 0.1 um to 5 um, preferably from 0.1 um to 4 um, preferably from 0.1 um to 3 um, preferably from 0.1 um to 2 um, from 0.1 um to 1 um.
/46/ The method according to any of embodiments 39 to 45 wherein the first layer comprises porosity by percentage of total area of from 0.0005 to 2%, preferably from 0.0005 to 1%, preferably from 0.0005 to 0.5%, preferably from 0.0005 to 0.05%, preferably from 0.0005 to 0.005%, preferably from 0.0005 to 0.003%, preferably from 0.0005 to 0.001%, preferably from 0.005 to 2%, preferably from 0.05 to 2%, preferably from 0.5 to 2%, preferably from 0.005 to 2%, preferably from 0.005 to 1%, preferably from 0.05 to 2%, preferably from 0.05 to 1%, preferably from 0.5 to 2%.
/47/ The method according to any of embodiments 39 to 46 wherein the first layer has a total impurity content of less than 100 ppm, preferably less than 75 ppm, preferably less than 50 ppm, preferably less than 25 ppm, preferably less than 15 ppm, preferably less than 10 ppm, preferably less than 8 ppm, preferably less than 5 ppm, preferably from 5 to 50 ppm, preferably from 5 to 30 ppm, preferably from 5 to 20 ppm relative to a mass of the first layer as measured using ICPMS methods.
/48/ The method according to any of embodiments 39 to 47 wherein the second layer has a total impurity content of from 5 to 200 ppm, preferably from 5 to 150 ppm, preferably less than 100 ppm, preferably less than 50 ppm, preferably less than 25 ppm, preferably less than 15 ppm, preferably from 10 to 100 ppm, preferably from 10 to 80 ppm, preferably from 10 to 60 ppm, preferably from 10 to 40 ppm, preferably from 20 to 80 ppm, preferably from 30 to 60 ppm relative to a total mass of the second layer as measured using ICPMS methods.
/49/ The method according to any of embodiments 39 to 48 wherein the second layer comprises silica in an amount of from 14 to 100 ppm, preferably from 14 to 75 ppm, preferably from 14 to 50 ppm, preferably from 14 to 25 ppm, preferably from 14 to 20 ppm, preferably about 14 ppm relative to a total mass of the composite oxide as measured using ICPMS methods.
/50/ The method according to any of embodiments 39 to 49 wherein first, second and third calcined powder mixtures have a combined impurity content of 150 ppm and less.
/51/ The method according to any of embodiments 39 to 50 wherein the second calcined powder mixture comprises zirconia in an amount by weight of not less than 15% and not greater than 34%, preferably not less than 17% and not greater than 34 %, preferably not less than 21% and not greater than 34 %, preferably not less than 25% and not greater than 34 %, preferably not less than 15% and not greater than 31 %, preferably not less than 15% and not greater than 28, preferably not less than 17% and not greater than 31 %, preferably not less than 21% and not greater than 28 %, preferably not less than 21% and not greater than 25 % relative to the powder mixture weight.
/52/ The method according to any of embodiments 39 to 51 wherein the third calcined powder mixture comprises YAG in an amount by weight of from 40% to 80%, preferably from 45% to 80%, preferably from 50% to 80%, preferably from 40% to 70%, preferably from 40% to 60%, preferably from 45% to 55%, preferably about 50%.
/53/ The method according to any of embodiments 39 to 52 wherein the third calcined powder mixture comprises zirconia in an amount of about 23% by weight.
/54/ The method according to any of embodiments 39 to 53 wherein first, second and third powder mixtures are crystalline.
/55/ The method according to any of embodiments 39 to 54 wherein each of first, second and third calcined powder mixtures have a specific surface area of from about 1 m²/g to about 18 m²/g, preferably from about 1 m²/g to about 14 m²/g, preferably from about 1 m²/g to about 10 m²/g, preferably from about 1 m²/g to about 8 m²/g, preferably from about 2 m²/g to about 18 m²/g, preferably from about 2 m²/g to about 14 m²/g, preferably from about 2 m²/g to about 10 m²/g, preferably from about 3 m²/g to about 6 m²/g as measured according to ASTM C1274.
/56/ The method according to any of embodiments 39 to 55 wherein the second powder mixture comprises zirconia and alumina in amounts allowing for the multilayer sintered ceramic body to conform with embodiments 1 or 3.
/57/ The method according to any of embodiments 39 to 56 wherein the first and second layers are free of sintering aids.
/58/ The method according to any of embodiments 39 to 57 wherein the first and second layers are free of dopants.
/59/ The method according to any of embodiments 39 to 58, further comprising the steps of optionally annealing the multilayer sintered ceramic body by applying heat to raise the temperature of the multilayer sintered ceramic body to reach an annealing temperature, performing annealing, and lowering the temperature of the annealed multilayer sintered ceramic body.
/60/ The method according to any of embodiments 39 to 59 further comprising the step of optionally machining the multilayer sintered ceramic body to create a sintered ceramic component in the shape of a focus ring, a deposition ring, a shield ring, a dielectric window, an RF window, a nozzle, an injector, a shower head, a gas distribution plate, a chamber liner, a plasma source adapter, a gas inlet adapter, a diffuser, an electronic wafer chuck, an ESC chuck, a mixing manifold, an ion suppressor element, and a faceplate.
/61/ The method according to any of embodiments 39 to 60 wherein the first layer has a thickness, the second layer has a thickness and the third layer has a thickness wherein the thickness of the second layer is from 70 % to 95%, preferably from 70 % to 90%, preferably from 70 % to 85%, preferably from 80 % to 95%, preferably from 85 % to 95% of the combined thickness of the 3 layers.
/62/ he method according to any of embodiments 39 to 61 wherein the first and second layers are contiguous.
/63/ The method according to any of embodiments 39 to 62 wherein the second and third layers are contiguous.
/64/ A multilayer sintered ceramic body for production of semiconductor manufacturing chamber components made by the process of any one of embodiments 39 to 63.
/65/ A multilayer sintered ceramic body according to any of embodiments 1 to 38 having a greatest dimension of between 100 mm to 622 mm, preferably between 200 to 622 mm, preferably between 250 to 622 mm, preferably between 300 to 622 mm, more preferably between 350 to 622 mm, more preferably between 400 to 622 mm, more preferably between 450 to 622 mm, more preferably between 500 to 622.
/66/ The multilayer sintered ceramic body of any of embodiments 1 to 38 wherein the first layer comprises magnesium aluminate spinel or at least one crystalline phase comprising yttria and zirconia, wherein the zirconia is present in an amount of not less than 10 mol % ZrO₂ and not greater than 25 mol % ZrO2.

### BRIEF DESCRIPTION OF THE DRAWINGS

FIG. 1 depicts a schematic of the multilayer sintered ceramic body as disclosed herein;
FIG. 2 depicts variation in CTE (coefficient of thermal expansion) of the multilayer sintered ceramic body comprising a corrosion resistant, first layer comprising YAG and variations of the composite oxide, second layer according to embodiments as disclosed herein;
FIG. 3 illustrates x ray diffraction results of the corrosion resistant first layer comprising YAG;
FIG. 4 illustrates pore area versus pore size for a multilayer sintered ceramic body comprising a corrosion resistant first layer comprising YAG and a composite oxide comprising about 16% by volume of zirconia;
FIG. 5 illustrates cumulative pore area versus pore size for a multilayer sintered ceramic body comprising a corrosion resistant first layer 100 comprising YAG and a composite oxide comprising about 16% by volume of zirconia;
FIG. 6 depicts SEM images of exemplary corrosion resistant layers 100 comprising a) YAG, b) spinel and c) at least one crystalline phase of yttria and zirconia, each depicting a high density, sintered microstructure of the corrosion resistant layer 100 of the multilayer component;
FIG. 7 illustrates variation in CTE of a multilayer sintered ceramic body comprising a corrosion resistant first layer 100 comprising spinel and at least one composite oxide second layer 102 according to embodiments as disclosed herein.
FIG. 8 depicts variation in CTE of a multilayer sintered ceramic body comprising a corrosion resistant first layer 100 comprising at least one crystalline phase of yttria and zirconia and at least one composite oxide layer according to embodiments as disclosed herein.
FIG. 9 illustrates variation in CTE for embodiments of the composite oxides forming second layer 102 having zirconia in amounts from 10% to 30% by volume and the balance alumina, according to embodiments as disclosed herein;
FIG. 10 illustrates x ray diffraction results of the composite oxide second layer according to embodiments as disclosed herein;
FIG. 11 A) depicts a schematic of the multilayer sintered ceramic body and B) illustrates an enlarged schematic illustrating first and second interfaces 104 and 105 respectively, according to embodiments as disclosed herein;
FIG. 12 a) depicts an SEM micrograph at 5000x of the multilayer sintered ceramic body and b) illustrates measurement of length of first interface 104 according to embodiments as disclosed herein;
FIG. 13 illustrates an SEM image at 500x of first interface 104 of the multilayer sintered ceramic body as disclosed herein;
FIG. 14 a and b illustrate plots characterizing the first interface, 104 according to embodiments as disclosed herein;
FIG. 15 A to C illustrates cross section views of embodiments of the multilayer sintered ceramic body as disclosed herein before and after a machining process to create through holes 112 according to embodiments as disclosed herein;
FIG. 16 a) and b) illustrate SEM micrographs at 500x and 1000x respectively, of the third layer of the multilayer sintered ceramic body as disclosed herein;
FIGS. 17-18 depict semiconductor processing systems 9500 and 9600;
FIG. 19 is a cross-sectional view of a SPS sintering apparatus having a tool set located in a vacuum chamber (not shown) with a simple arrangement used for sintering yttrium aluminum oxide ceramic materials;
FIG. 20A illustrates an embodiment of FIG. 19 showing one foil layer;
FIG. 20B illustrates an alternative embodiment of FIG. 19 showing two foil layers;
FIG. 20C illustrates another alternative embodiment of FIG. 19 showing three foil layers;
FIGS. 21A and 21B are top plan views of the SPS sintering apparatus of FIG. 19; and
FIG. 22 is a graph depicting radial variance in average coefficient of thermal expansion (CTE) of graphite materials A and B at 1200°C.

### DETAILED DESCRIPTION

Corrosion resistant ceramics and in particular multilayer sintered ceramic bodies for use in semiconductor reactor chambers and the making thereof are described herein. Semiconductor etch and deposition reactors require reactor components having surfaces which have high resistance to corrosion and erosion by halogen containing plasmas necessary for processing. The surfaces preferably minimize release of particles from the component surface into the chamber. Additionally, chamber components must possess enough mechanical strength for handleability and use. The sintered bodies may be machined into sintered components and as such, must be able to be handled and machined at large (> 100 mm) dimension while providing corrosion resistance, low particle generation and high mechanical strength

As the semiconductor fabrication industry moves towards greater semiconductor substrate diameters, chamber components of larger dimension, on the order of 100 to about 625 mm, are needed. As such, the multilayer sintered ceramic bodies as disclosed herein must have enough strength during use and handling, thus the multilayer sintered ceramic bodies as disclosed herein further comprise a second layer comprising a composite oxide of zirconia and alumina which is high in mechanical strength.

The present disclosure relates to a specific multilayer sintered ceramic body having a corrosion resistant first layer providing a controlled distribution of porosity at a small pore size, an impurity content below a certain value, a surface roughness not exceeding a specific value, and a coefficient of thermal expansion (CTE) which is within a certain range of, or substantially the same as, the CTE of the composite oxide and the machinable layer. Further, the corrosion resistant, multilayer sintered ceramic of the present disclosure comprises at least one non-planar interface increased in area relative to a planar surface, providing enhanced adhesion between the corrosion resistant first layer, the composite oxide and/or the machining layer.

The present disclosure further relates to a specific multilayer sintered ceramic body comprising a composite oxide having a range of compositions comprising zirconia and alumina, which contributes mechanical strength and enhanced stiffness as necessary for the preparation of components of large dimension. Additionally, methods for the preparation of such a corrosion resistant ceramic and the use thereof in etch and deposition chambers are also disclosed.

DEFINITIONS-As used herein, the following terms are defined following: "Alumina" is understood to be aluminum oxide, comprising Al₂O₃, "zirconia" is understood to be zirconium oxide, comprising ZrO2, and "Yttria" is understood to be yttrium oxide, comprising Y₂O₃.

As used herein, the terms "semiconductor wafer," "wafer," "substrate," and "wafer substrate," are used interchangeably. A wafer or substrate used in the semiconductor device industry typically has a diameter of 200 mm, or 300 mm, or 450 mm.

As used herein, the term "multilayer sintered ceramic body" is synonymous with "multilayer corrosion resistant ceramic", "sintered corrosion resistant body", "multilayer corrosion resistant body", "sintered ceramic", "sintered ceramic body" and similar terms and refers to a solid ceramic article formed from more than one powder mixture upon being subjected to a pressure and heat treatment process which creates a sintered body from the powder mixture which is thereafter machined into a multilayer sintered ceramic component.

As used herein, the term "sintered ceramic component" refers to a multilayer sintered ceramic body or multilayer corrosion resistant ceramic or sintered ceramic body which is subjected to a machining step to form the ceramic body into a specific shape of a desired component for use in a semiconductor processing chamber as disclosed herein, providing a multilayer sintered ceramic component, or "ceramic component" or "sintered ceramic component".

As used herein, the term "powder mixture" means more than one starting powder mixed together prior to a sintering process which after a sintering step are thereby formed into the "multilayer sintered ceramic body."

The term "annealing" when applied to heat treatment of ceramics is understood herein to mean a heat treatment conducted on the disclosed multilayer sintered ceramic bodies in air to relieve stress and/or normalize stoichiometry.

As used herein, the term "tool set" is one that may comprise at least a die and at least two punches. When fully assembled, the tool set defines a volume for disposition of the calcined powder mixtures as disclosed.

The term "phase" as used herein is understood to mean a crystalline region having a specific crystallographic structure.

A "solid solution" as used herein is defined as a mixture of different elements that share the same crystal lattice structure. The mixture within the lattice may be substitutional, in which the atoms of one starting crystal replace those of the other, or interstitial, in which the atoms occupy positions normally vacant in the lattice.

As used herein, the term "nanopowder" is intended to encompass those powders having a specific surface area of greater than 20 m²/g.

As used herein, the term "layer" is understood to span a range of thicknesses from about 0.5 mm to thicknesses of about 5 millimeters.

As used herein, "ambient temperature" refers to a temperature range of from about 22 °C to 25°C.

As used herein, the term "purity" refers to the absence of various contaminants in a) a starting material from which a powder mixture may be formed, b) a powder mixture after processing, and c) a multilayer sintered ceramic body or component as disclosed herein. Higher purity, closer to 100%, represents a material having essentially no contaminants or impurities, comprising the material compositions present in the starting powders as disclosed.

As used herein, the term "impurity" refers to those compounds/contaminants present in the powders or sintered ceramics other than the intended compounds themselves. Impurities may be present in the starting powders, a powder mixture, the powder mixture after processing, and a multilayer sintered ceramic body. ICPMS methods were used to determine the impurity content of the powders and powder mixtures as disclosed herein. Reporting limits to detect presence of lighter elements using ICPMS as disclosed herein are higher than reporting limits of heavier elements. In other words, heavier elements, such as from Sc and higher, are detected with greater accuracy than those lighter elements, from for example Li to Ca. Thus, impurity contents for those powders comprising lighter elements, such as from Li to Ca, may be determined to about 14 ppm and greater.

The term "dopants" as used herein with respect to the corrosion resistant first layer does not include the starting materials of yttrium oxide, zirconium oxide or aluminum oxide to the extent they may remain in the corrosion resistant first layer of the multilayer sintered ceramic body.

The term "dopants" as used herein with respect to the composite oxide does not include the starting materials of yttrium oxide, zirconium oxide or aluminum oxide.

Impurities differ from dopants in that dopants as defined herein are those compounds intentionally added to the starting powders or to the powder mixture to achieve certain electrical, mechanical, optical or other properties such as grain size modification for example, in the multilayer sintered ceramic body. The term "dopants" as used herein do not include Hf and Y as included in the starting material of zirconium oxide to the extent they may remain in the multilayer sintered ceramic body.

The term "sintering aid" as used herein refers to additives, such as silica, LiF, magnesia (MgO), and/or calcia (CaO), that enhance densification, and thereby reduce porosity, during the sintering process. Using ICPMS, impurity contents for those powders comprising lighter elements, such as from Li to Ca, may be determined to about 14 ppm and greater.

As used herein, the terms "substantially," "approximately," and "about" as they are used in connection with numbers or features as disclosed herein allow for a variance of plus or minus 10%.

Hf and Y present in the starting powders and to the extent they remain in the sintered ceramic do not comprise sintering aids, impurities or dopants as defined herein.

The following detailed description assumes the disclosure is implemented within equipment such as etch or deposition chambers necessary as part of the making of a semiconductor wafer substrate. However, the invention is not so limited. The work piece may be of various shapes, sizes, and materials. In addition to semiconductor wafer processing, other work pieces that may take advantage of this invention include various articles such as fine feature size inorganic circuit boards, magnetic recording media, magnetic recording sensors, mirrors, optical elements, micromechanical devices and the like.

During processing of semiconductor devices, corrosion resistant chamber components are used within etch and/or deposition chambers and exposed to harsh corrosive and erosive environments which cause the release of particles into the chamber, resulting in yield loss due to wafer-level contamination. The multilayer sintered ceramic body and related components fabricated therefrom as disclosed herein provide improved plasma resistance, thermal conductivity, and enhanced mechanical strength for use within semiconductor processing chambers by way of specific material properties and features to be described following.

The embodiments of the multilayer sintered ceramic body as disclosed herein can be combined in any specific multilayer sintered ceramic body. Thus, two or more of the characteristics disclosed herein can be combined to describe the multilayer sintered ceramic body in more detail as, for example, outlined in the embodiments.

In preferred embodiments, disclosed herein is a multilayer sintered ceramic body comprising a first layer comprising YAG (yttrium aluminum oxide, Y₃Al₅O₁₂, garnet structure), a second layer comprising Al₂O₃ and ZrO₂ wherein ZrO₂ is present in an amount of not less than 10 % ZrO₂ by volume and not greater than 25% ZrO₂ by volume, and a third layer comprising combinations of the first layer and the second layer wherein the second layer is disposed between the first layer and the third layer, and the absolute value of the coefficient of thermal expansion (CTE) of the first, second and third layers differ in an amount of from 0 to less than 0.6 x 10⁻⁶/°C as measured in accordance with ASTM E831.

The first layer 100 comprising YAG provides a chamber component having a surface 96 which provides plasma resistance (resistance to chemical corrosion and erosion from halogen-based gases and ion bombardment used during plasma processing) when subjected to halogen-based plasma processing conditions.

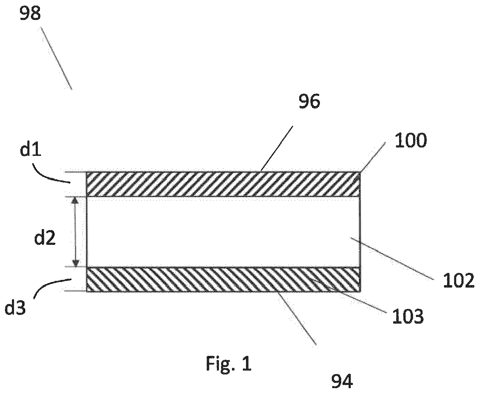

FIG. 1 depicts a schematic of the multilayer sintered ceramic bodies disclosed herein, Illustrating the first layer 100 comprising YAG having a corrosion and erosion resistant surface 96. Preferable is a corrosion resistant, first layer 100 comprising YAG (Y₃Al₅O₁₂, garnet phase)in an amount of more than 98%, preferably more than 98.5%, preferably more than 99%, preferably more than 99.5%, preferably more than 99.8% each by volume and the balance comprising at least one crystalline phase selected from the group consisting of YAM, YAP, alumina and yttria and combinations thereof. Highly phase pure (about 99% by volume), solid YAG sintered ceramic bodies and methods of making are disclosed in International Application No. PCT/US20/60918, which is herein incorporated by reference. The International Application discloses formation of a sintered ceramic body comprising highly phase pure YAG (> 99% by volume) which may be accomplished through an in-situ, reactive sintering process to form YAG using the yttria and alumina powder mixtures as disclosed herein. The yttria and alumina powder mixtures may be calcined to form a calcined powder mixture comprising at least one crystalline phase selected from the group consisting of yttria, alumina, YAP and YAM. The calcined powder mixtures are thereafter sintered (using pressure and current assisted methods) to form highly phase pure YAG as part of the in-situ reactive sintering process. The high phase purity comprising YAG was measured using a combination of XRD, SEM imaging, and image processing methods across the sintered bodies.

The material selected for use as corrosion resistant first layer 100 having very high purity provides the corrosive and erosive properties to enable their use as components in semiconductor etch and deposition applications. This high purity (and low porosity as disclosed herein) prevents roughening of the surface of the corrosion resistant first layer by halogen based gaseous species which may otherwise chemically attack and etch, or erode by ion bombardment, those materials made from powders and powder mixtures lower in purity. However, these corrosion and erosion resistant materials pose challenges to sinter to the high densities required for application to semiconductor etch and deposition chambers.

Impurities and contaminants within the corrosion resistant first layer 100 serve as a site for initiation of corrosion and erosion, and as such high purity, and correspondingly low impurity content expressed in ppm of contaminants is preferable within the corrosion resistant first layer of the multilayer corrosion resistant sintered body. Table 1 lists impurities of the powder mixtures which are sintered to form the corrosion resistant first layer, 100 comprising at least one crystalline phase of yttrium aluminum oxide (YAG, YAM and YAP), and preferably the YAG phase. Impurity measurements were performed using ICPMS as known to those skilled in the art on the powder mixtures as disclosed herein. N/A as indicated relates to an element that is an intended component of the powder mixture from starting powders. N/D as indicated conveys that the element was not detected in the powder mixture. P and CI were not measured. As such, the corrosion resistant first layer 100 may have a total impurity content of less than 100 ppm, preferably less than 75 ppm, less than 50 ppm, preferably less than 25 ppm, preferably less than 15 ppm, preferably less than 10 ppm, preferably less than 8 ppm, preferably less than 5 ppm, preferably from 5 to 30 ppm, preferably from 5 to 20 ppm.

**TABLE 1**

| **YAG (Y₃Al₅O₁₂) Powder Mixture** | | | |
|---|---|---|---|
| **Element** | **Average Impurity (ppm)** | **Element** | **Average Impurity (ppm)** |
| **Li 6/7** | N/D | **Ag 107/109** | 0.1044 |
| **Be** 9 | N/D | **Cd 111** | 0.5896 |
| **B 11** | N/D | **In 115** | <0.0035 |
| **Na 23** | N/D | **Sn 118** | 0.4087 |
| **Mg 24** | N/D | **Sb 121** | 0.0315 |
| **Al 27** | N/A | **Te 126,8,30** | <0.014 |
| **Si 28** | N/D | **Cs 133** | <0.007 |
| **P 31** | N/A | **Ba 137** | <0.056 |
| **Cl- 35** | N/A | **La 138/139** | 0.1301 |
| **K 39 /41*** | N/D | **Ce 140** | 0.0943 |
| **Ca 43/44*** | N/D | **Pr 141** | <0.007 |
| **Sc 45** | 0.0954 | **Nd 146** | 0.0341 |
| **Ti 47** | <0.035 | **Sm 147** | 0.0326 |
| **V 51** | 0.0438 | **Eu 153** | 0.0082 |
| **Cr 52** | 1.3612 | **Gd 157** | 0.1448 |
| **Mn 55** | 0.3423 | **Tb 159** | <0.0035 |
| **Fe 56** | <0.14 | **Dy 163** | 0.0077 |
| **Co 59** | 0.5984 | **Ho 165** | 0.2215 |
| **Ni 60** | 0.1751 | **Er 166** | 0.1546 |
| **Cu 63** | 0.3612 | **Tm 169** | 0.1623 |
| **Zn 66** | 0.0454 | **Yb 171,2,3** | 0.2014 |
| **Ga 71** | 0.4091 | **Lu 175** | 0.0193 |
| **Ge 72** | <0.007 | **Hf 178** | 0.0540 |
| **As 75** | <0.014 | **Ta 181** | <0.0035 |
| **Se 78** | <0.035 | **W 182** | <0.007 |
| **Rb 85** | 0.2803 | **Re 185** | <0.0035 |
| **Sr 84/87/88** | 0.6618 | **Ir 193** | <0.0035 |
| **Y 89** | N/A | **Pt 195** | <0.056 |
| **Zr 90/92/94** | 3.2205 | **Au 197** | 0.0637 |
| **Nb 93** | <0.007 | **Tl 205** | 0.0825 |
| **Mo 95** | 0.1568 | **Pb 208** | <0.0035 |
| **Ru 101** | <0.007 | **Bi 209** | 0.0500 |
| **Rh 103** | <0.042 | **Th 232** | <0.007 |
| **Pd 104,8,10** | <0.007 | **U 238** | <0.0035 |

Table 1 N/D is not detectable to < 2 ppm (except for Si which is < 14 ppm); N/A represents elements present in sintered ceramics;

Lighter elements, such as for example those from Li to Ca, including Mg and Li, are known to those skilled in the art to be more difficult to measure accurately using ICPMS methods, and these elements may be measured in amounts of about 2 ppm and greater by ICPMS. Si using ICPMS methods as disclosed herein may be measured to an accuracy of about 14 ppm and greater.

Sintering aids such as silica, MgO, CaO and LiF, are known to promote densification. However, these sintering aids may degrade corrosion resistance and performance in etch and deposition applications. LiF is known to promote grain growth and thereby increase grain size in YAG which reduces mechanical strength. As such, the at least one corrosion resistant, first layer 100 may be formed from at least one powder mixture comprising li in the form of lithium fluoride, calcia, and/or magnesia in amounts of from about 2 to 100 ppm, preferably from 2 to 75 ppm, preferably from 2 to 50 ppm, preferably from 2 to 25 ppm, preferably from 2 to 20 ppm, preferably about 2 ppm relative to a total mass of the first layer. In further embodiments, the corrosion resistant, first layer 100 as disclosed herein may be formed from at least one powder mixture having a Si content of about 14 ppm and greater, preferably from 14 to 100 ppm, preferably from 14 to 75 ppm, preferably from 14 to 50 ppm, preferably from 14 to 25 ppm, preferably from 14 to 20 ppm, preferably about 14 ppm relative to a total mass of the first layer. Thus, in some embodiments, the corrosion resistant, first layer 100 is free of, or substantially free of, Li in the form of lithium fluoride, calcia, and/or magnesia.

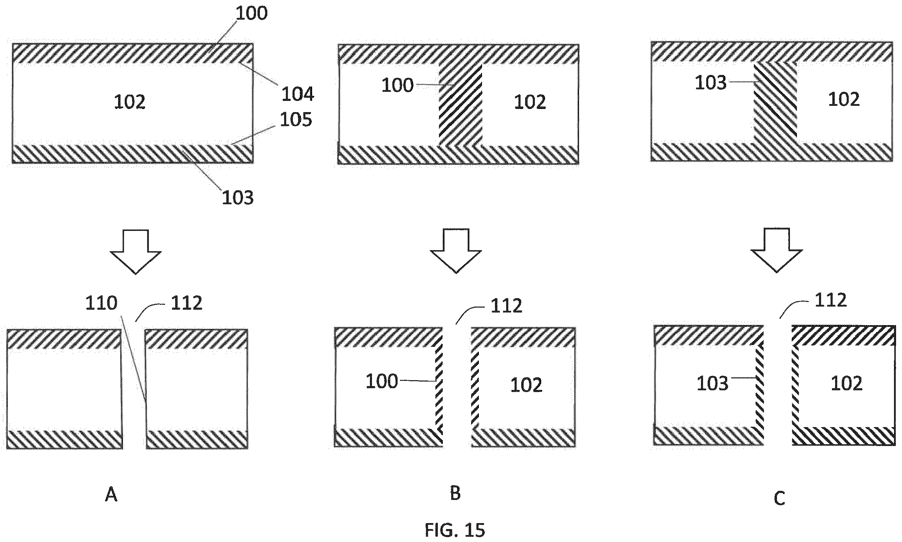

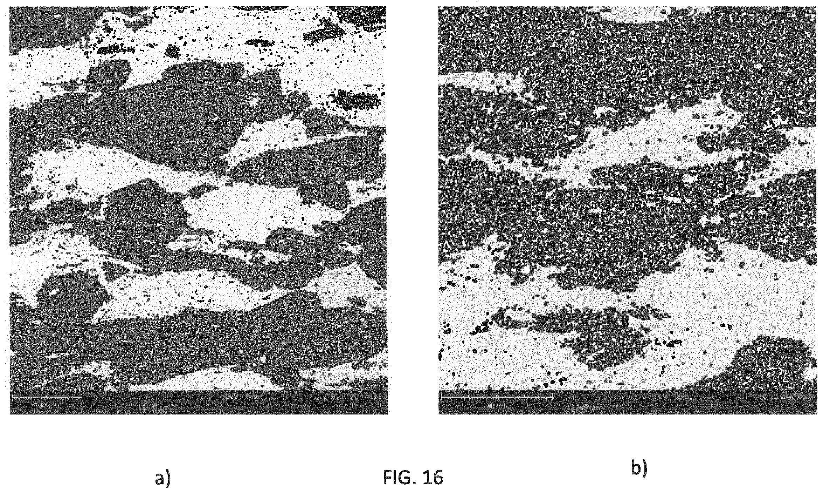

In certain embodiments, to enhance strength and corrosion resistance in the corrosion resistant first layer 100, it may be preferable that the corrosion resistant first layer may be formed from a powder mixture which comprises Li in the form of LiF in amounts of about 2 ppm, and comprising silica in amounts of about 14 ppm, each relative to the mass of the first layer 100. The high purities of the powder mixtures and the corrosion resistant first layers 100 formed therefrom may provide enhanced resistance to corrosion and erosion to the plasma environments used in the plasma processing chambers of FIGS. 15 and 16.

In embodiments, the corrosion resistant first layer 100 of the aforementioned multilayer sintered ceramic bodies may be made with optional dopants of for example a rare earth oxide selected from the group consisting of Sc, La, Er, Ce, Cr, Pr, Nd, Pm, Sm, Eu, Gd, Tb, Dy, Ho, Tm, Yb, and Lu and oxides and combinations thereof in amounts of ≥ 0.002% by weight, preferably ≥ 0.0035% by weight, preferably ≥ 0.005% by weight, preferably ≥ 0.0075% by weight, which may be added into the starting powders or powder mixtures at step a).

In embodiments, the corrosion resistant first layer 100 of the aforementioned ceramic sintered bodies may be made with optional dopants of for example a rare earth oxide selected from the group consisting of Sc, La, Er, Ce, Cr, Pr, Nd, Pm, Sm, Eu, Gd, Tb, Dy, Ho, Tm, Yb, and Lu and oxides and combinations thereof in amounts of ≤ 0.05% by weight, preferably ≤ 0.03% by weight, preferably ≤ 0.01% by weight, preferably from 0.002 to 0.02 % by weight, which may be added into the starting powders or powder mixture at step a.

In alternate embodiments as disclosed herein, the corrosion resistant first layer 100 of the aforementioned multilayer sintered ceramic bodies 98 may be made without the aforementioned dopants. In particular, for semiconductor chamber applications requiring chemical inertness and resistance to corrosion and erosion combined with high strength, it is preferable that the corrosion resistant first layer of the multilayer sintered ceramic body is free of dopants. Thus, in certain embodiments, the multilayer sintered ceramic body is substantially free of, or free of, at least one of, or all of the aforementioned dopants.

According to embodiments, excess yttria and/or alumina within the YAG layer are not considered dopants or sintering aids to the extent they may remain in the corrosion resistant first layer. The high purity and correspondingly low impurity of the corrosion resistant first layer as disclosed may enable reductions in particle generation and corrosion and erosion as required for use in semiconductor reactors. Purities of for example 99.995% and higher, preferably 99.999% and higher, preferably 99.9995% and higher, preferably about 99.9999% may be measured for the corrosion resistant first layer 100 comprising YAG.

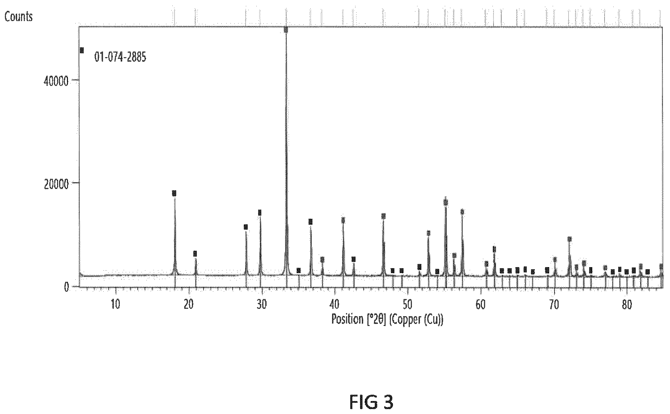

FIG. 3 depicts x ray diffraction results confirming formation of highly phase pure YAG comprising the first layer 100. YAG exists as a line compound according to known phase diagrams, thus formation of phase pure YAG poses challenge and requires careful compositional and process control. The corrosion resistant, first layer 100 comprising YAG may in embodiments comprise excess alumina, and is substantially free of, or free of, dopants. In other embodiments, the corrosion resistant, first layer 100 comprising YAG is substantially free of, or free of, sintering aids.

In other embodiments, the YAG corrosion resistant, first layer 100 is substantially free of, or free of, dopants and sintering aids. However, in other embodiments, the YAG corrosion resistant, first layer 100 may comprise sintering aids and/or dopants in the amounts as disclosed herein, as desired. As illustrated by Fig. 3, a corrosion resistant, first layer 100 comprising phase pure YAG with no other phases was identified using X ray diffraction methods.

In order to meet corrosion and erosion resistance requirements for use as components in semiconductor processing chambers, multilayered sintered ceramic bodies comprising corrosion resistant first layers 100 having low porosity across a surface and within the bulk corrosion resistant first layer are preferable. Porosity may serve as a site for initiation of corrosion and erosion, and as such it is preferable that there is minimal pores or voids within the corrosion resistant first layer of the sintered body. The corrosion resistant first layers 100 disclosed herein may have very small pores both on the surface and throughout. Preferably, the corrosion resistant first layers comprising YAG are, thus, an integral layer having pores distributed uniformly throughout. In other words, pores or voids or porosity measured on a surface 96 may be representative of pores or voids or porosity within the bulk corrosion resistant first layer 100.

### Porosity Measurements

Porosity was measured using the method as disclosed following.

The level of porosity was measured across samples through use of SEM images obtained from a Phenom XL scanning electron microscope at 5000x magnification. Images were imported into ImageJ Software for analysis. ImageJ has been developed at the National Institute of Health (NIH), USA, and is a Java-based public domain image processing and analysis program for image processing of scientific multi-dimensional images. Use of semiautomatic and automatic image analysis methods for measuring grain size is described in ASTM standard E1382. Multiple images having dimension 53.7 um x 53.7 um were analysed to determine the number of pores, area of porosity and pore diameter present across the combined image area.

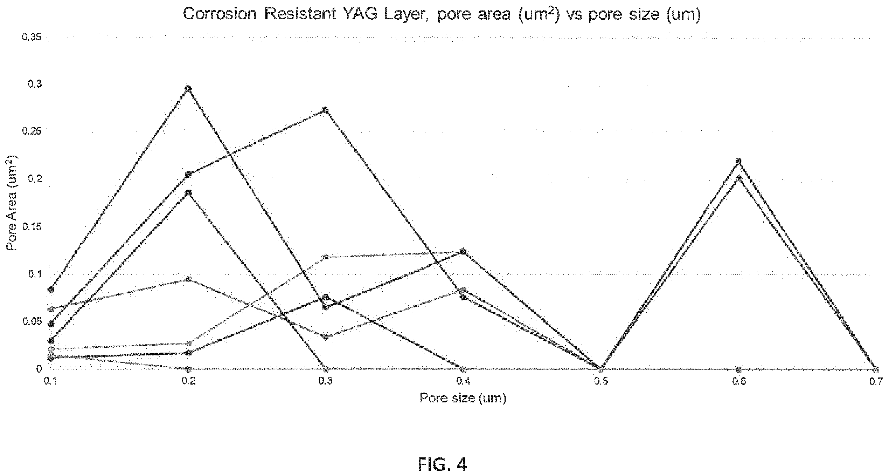

FIG. 4 illustrates porosity results from a surface 96 of the corrosion resistant first layer 100 comprising YAG, depicting total pore area (um²) on the vertical axis and a horizontal axis representing pore size in microns. Measurements were performed across 8 images taken at 5000x, each of area 53.7 um x 53.7 um for a total measurement area of about 2885 um². A total area across the 8 images comprising porosity measured on a surface of first layer 100 was measured from about 0.015 to about 0.3 um2, preferably from about 0.015 to about 0.2 um², preferably from about 0.015 to about 0.15 um2. The measurements across 8 images correspond to a corrosion resistant first layer 100 comprising porosity across a surface in an amount of from 0.0005 to 2%, preferably from 0.0005 to 1%, preferably from 0.0005 to 0.5%, preferably from 0.0005 to 0.05%, preferably from 0.0005 to 0.005%, preferably from 0.0005 to 0.003%, preferably from 0.0005 to 0.001%, preferably from 0.005 to 2%, preferably from 0.05 to 2%, preferably from 0.5 to 2%, preferably from 0.005 to 2%, preferably from 0.005 to 1%, preferably from 0.05 to 2%, preferably from 0.05 to 1%, preferably from 0.5 to 2%. A maximum pore size of 0.7 um was measured, and a maximum area comprising porosity was found to be about 0.3 um2 and less. No pores of pore size larger than 0.7 um were measured across the 8 images analyzed within the YAG corrosion resistant first layer 100.

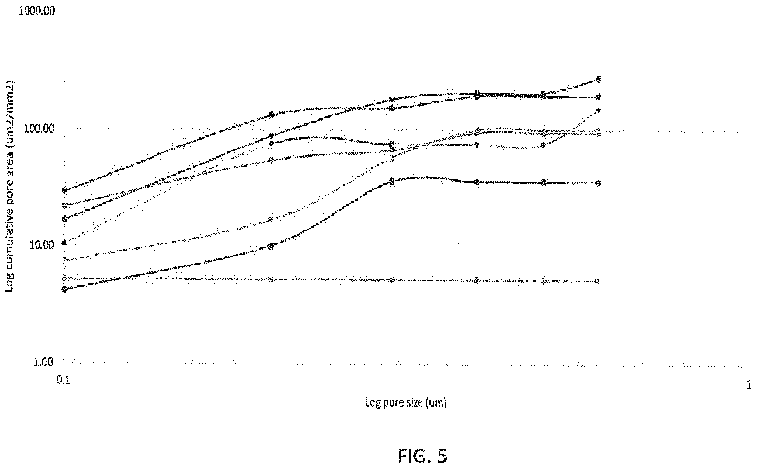

FIG. 5 depicts the cumulative pore area in um²/mm² of the 8 images as referenced in FIG. 4 as measured across a surface of the first layer 100. Porosity was measured within each image in um² and normalized across the total image area measured. The corrosion resistant first layer 100 as disclosed herein comprises a cumulative pore area of from about 2 to about 800 um²/mm², preferably from about 2 to about 600 uum²/mm², preferably from about 2 to about 400 um²/mm², preferably from about 2 to about 300 um²/mm². The multilayer sintered ceramic body may comprise pore sizes on the order of 5 um and less, down to sub-micron scale pore sizes of from about 0.1 to about 1 um. According to embodiments as disclosed herein, corrosion resistant first layers of the sintered ceramic body formed from the materials and processes may comprise pores which have a maximum size of from 0.1 to 5 um, preferably from 0.1 to 4 um, preferably from 0.1 to 3 um, preferably from 0.1 to 2 um, from 0.1 to 1 um.

The small pore/void maximum size and minimal % area of porosity of the corrosion resistant first layer 100 of the multilayer sintered bodies may enable reductions in corrosion and erosion and thereby particle generation as required for use in semiconductor plasma processing reactors. This minimal porosity corresponds to a high density, corrosion and erosion resistant first layer 100.

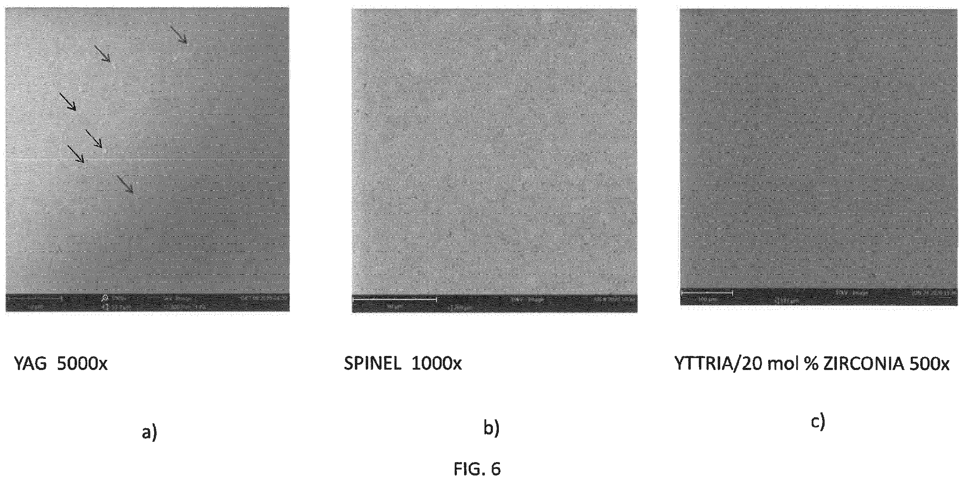

FIG. 6 illustrates 500x to 5000x SEM images illustrating high density, sintered microstructures of embodiments of the corrosion resistant first layer 100 comprising a) YAG (after a thermal etching process to define surface features) b) spinel and c) at least one crystalline phase of yttria and zirconia. Very fine scale porosity on a surface of the YAG corrosion resistant first layer is indicated. About 20 pores of diameter less than about 1 um were counted across the 53 x 53 um surface 96 of first layer 100 comprising YAG. Nearly fully dense microstructures are depicted, having minimal porosity.

In addition to low porosity and high purity, surface roughness of the corrosion resistant first layer 100 may impact performance in semiconductor processing chambers. Surface roughness measurements were performed using a Keyence 3D laser scanning confocal digital microscope model VK-X250X under ambient conditions in a class 1 cleanroom. The microscope rests on a TMC tabletop CSP passive benchtop isolator with 2.8 Hz Natural Frequency. This non-contact system uses laser beam light and optical sensors to analyse the surface through reflected light intensity. The surface roughness parameters Sa, Sdr and Sz are well-known in the underlying technical field and, for example, described in ISO standard 25178-2-2012. The ISO 25178 Surface Texture (Areal Roughness Measurement) is a collection of international standards relating to the analysis of surface roughness with which this microscope is compliant. Sa represents an average roughness value calculated across a user-defined area of a surface of the multilayer sintered ceramic body. Sz represents the maximum peak-to-valley distance across a user-defined area of a surface of the multilayer sintered ceramic body. Sdr is a calculated numerical value defined as the "developed interfacial area ratio" and is a proportional expression for an increase in actual surface area beyond that of a completely flat surface. A flat surface is assigned an Sdr of zero, and the value increases with the slope of the surface. Larger numerical values correspond with greater increases in surface area. This allows for numerical comparison of the degree of surface area increase of a sample. It represents additional surface area arising from texture or surface features as compared to a planar area.

The surface 96 of samples was laser scanned using the confocal microscope at 50X magnification to capture a detailed image of the sample. The parameters of Sa (arithmetical mean height), Sz (maximum height), Ra (line roughness) and Sdr (developed interfacial area) were measured on the corrosion resistant first layer of the sintered ceramic body. These parameters were obtained on a profile of 7 partitioned blocks. The lambda chi(λ), which represents the measurement sampling lengths or areas, was adjusted so that the line reading was limited to measurements from the 5 middle blocks of the 7 according to ISO specification 4288: Geometrical Product Specifications (GPS) -- Surface texture: Profile method -- Rules and procedures for the assessment of surface texture. Surface areas were selected within polished surfaces of a sample of first layer 100 for measurement. Areas were selected to be most representative of the typical sample surface and used to calculate Ra, Sdr, Sa and Sz.

According to the preferred embodiment wherein the corrosion resistant first layer 100 comprises YAG, surface roughness measurements were performed in accordance with ISO standard 25178-2-2012, and Sa values of from 0.0005 to 20 um, preferably from 0.0005 to 18 um, preferably from 0.0005 to 15 um, preferably from 0.0005 to 12 um, preferably from 0.0005 to 10 um, preferably from 0.0005 to 5 um, preferably from 0.0005 to 3 um, preferably from 0.001 to 20 um, preferably from 0.005 to 20 um, preferably from 0.001 to 15 um, preferably from 0.001 to 10 um, preferably from 0.001 to 5 um across a surface 96 were measured. The following table lists Sa, Sz and Sdr values for a corrosion resistant first layer 100 comprising YAG according to embodiments as disclosed herein.

| | YAG | | | | |
|---|---|---|---|---|---|
| | Sa | Sz | Sdr | Ra | Rz |
| | µm | µm | N/A | µm | µm |
| | 0.0018 | 0.5514 | 0.00052 | 0.0018 | 0.0373 |
| | 0.0021 | 0.6236 | 0.00058 | 0.0017 | 0.0259 |
| | 0.0025 | 0.6902 | 0.00136 | 0.0027 | 0.0714 |
| | 0.0016 | 0.5379 | 0.00041 | 0.0015 | 0.0251 |
| | 0.0007 | 0.3702 | 0.00007 | 0.0006 | 0.0060 |
| | 0.0007 | 0.4437 | 0.00007 | 0.0006 | 0.0044 |
| | 0.0007 | 0.3488 | 0.00007 | 0.0007 | 0.0150 |
| | 0.0009 | 0.8121 | 0.00015 | 0.0008 | 0.0196 |
| | 0.0030 | 0.6495 | 0.00028 | 0.0017 | 0.0250 |
| | 0.0029 | 0.6752 | 0.00043 | 0.0016 | 0.0162 |
| | 0.0060 | 1.1173 | 0.00526 | 0.0054 | 0.1176 |
| | 0.0029 | 2.2639 | 0.00039 | 0.0017 | 0.0179 |
| | 0.0059 | 1.3057 | 0.00546 | 0.0048 | 0.1378 |
| | 0.0051 | 0.9395 | 0.00389 | 0.0041 | 0.0910 |
| | 0.0054 | 0.7969 | 0.00432 | 0.0044 | 0.1092 |
| | 0.0030 | 1.1078 | 0.00033 | 0.0017 | 0.0401 |
| Average | 0.0028 | 0.8271 | 0.00148 | 0.0022 | 0.0475 |
| SD | 0.0019 | 0.4711 | 0.00199 | 0.0016 | 0.0434 |

According to a preferred embodiment having a corrosion resistant first layer 100 comprising YAG, an Sa of from about 2 nm to about 20 nm may be measured across a surface using the method as disclosed herein, and an Ra of from about 0.5 nm to about 6 nm was measured across a surface 96 using the method as disclosed herein.

In order to assess performance in halogen-based plasma applications, etching was carried out on a multilayer sintered ceramic body prepared according to the preferred embodiment comprising a YAG corrosion resistant first layer as described following.

### Etch Procedure:

To assess etch performance, polished ceramic samples having a surface comprising YAG of dimension 6 mm x 6 mm x 2 mm were mounted onto a c plane sapphire wafer using a silicone-based heat sink compound. Regions of each part were blocked from exposure to the etch process by bonding a 5 mm x 5 mm square sapphire ceramic to the sample surface.

The dry etch process was performed using a Plasma-Therm Versaline DESC PDC Deep Silicon Etch which is standard equipment for the industry. Etching was completed using a 2-step process for a total duration of 6 hours. The etch method was performed having a pressure of 10 millitorr, a bias of 600 volts and ICP power of 2000 watts. The etch method was conducted with a first etch step having a CF₄ flow rate of 90 standard cubic centimetres per minute (sccm), an oxygen flow rate of 30 standard cubic centimetres per minute (sccm), an argon flow rate of 20 standard cubic centimetres per minute (sccm), and a second etch step having an oxygen flow rate of 100 standard cubic centimetres per minute (sccm) and an argon flow rate of 20 standard cubic centimetres per minute (sccm), wherein first and second etch steps are performed for 300 seconds each and repeated for a combined duration of 6 hours. The etch conditions as used here to assess sample performance were selected to subject the disclosed materials to extreme etch conditions in order to differentiate performance. Upon completion of the etch procedure, surface roughness parameters of Sa, Sz and Sdr were measured using the methods as disclosed herein.

The present disclosure relates to a multilayer sintered ceramic body and/or component made therefrom having a corrosion resistant first layer 100 having a surface 96 before an etch or deposition process providing an arithmetical mean height, Sa, in an unetched area of less than 15 nm, more preferably loss than 13 nm, more preferably less than 10 nm, preferably less than 8 nm, preferably less than 5 nm, preferably about 2 nm, preferably an average arithmetical mean height, Sa, of about 2.8 um, according to ISO standard 25178-2-2012, section 4.1.7. surface roughness and not exceeding a specific value.

The present disclosure relates to a multilayer sintered ceramic body and/or component made therefrom having a corrosion resistant first layer 100 having a surface 96 before an etch or deposition process providing a maximum height, Sz, of less than 5.0 µm, more preferably loss than 4.0 µm, most preferably less than 3.5 µm, more preferably less than 2.5 µm, more preferably less than 2 µm, more preferably less than 1.5 µm, preferably an average maximum height, Sz, of about 0.83 um, according to ISO standard 25178-2-2012, section 4.1.6. surface roughness and not exceeding a specific value.

The present disclosure relates to a multilayer sintered ceramic body and/or component made therefrom having a corrosion resistant first layer 100 having a surface 96 before an etch or deposition process providing a developed interfacial area, Sdr, of less than 1500 x 10⁻⁵, more preferably loss than 1200 x 10⁻⁵, more preferably less than 1000 x 10⁻⁵, more preferably less than 800 x 10⁻⁵, more preferably less than 600 x 10⁻⁵, more preferably less than 400 x 10⁻⁵, more preferably an average developed interfacial area, Sdr of about 0.5 x 10⁻⁵ um, according to ISO standard 25178-2-2012, section 4.3.2. surface roughness and not exceeding a specific value.

The present disclosure relates to a multilayer sintered ceramic body and/or component made therefrom having a corrosion resistant first layer 100 having a surface 96 after the etch or deposition process as disclosed herein providing an arithmetical mean height, Sa, of less than 25 nm, less than 20 nm, more preferably loss than 18 nm, more preferably less than 16 nm, more preferably less than 14 nm, more preferably less than 12 nm, according to ISO standard 25178-2-2012, section 4.1.7. surface roughness and not exceeding a specific value.

The present disclosure relates to a multilayer sintered ceramic body and/or component made therefrom having a corrosion resistant first layer 100 having a surface 96 after the etch or deposition process as disclosed herein providing a maximum height, Sz, of less than 4.8 µm, more preferably less than 3.8 µm, most preferably less than 3.2 µm, more preferably less than 2.5 µm, more preferably less than 2 µm, more preferably less than 1.5 µm, according to ISO standard 25178-2-2012, section 4.1.6. surface roughness and not exceeding a specific value.

The present disclosure relates to a multilayer sintered ceramic body and/or component made therefrom having a corrosion resistant first layer 100 having a surface 96 after the etch or deposition process as disclosed herein providing a developed interfacial area, Sdr, of less than 3000 x 10⁻⁵, more preferably less than 2500 x 10⁻⁵, more preferably less than 2000 x 10⁻⁵, more preferably less than 1500 x 10⁻⁵, more preferably less than 1000 x 10⁻⁵, more preferably less than 800 x 10-5, according to ISO standard 25178-2-2012, section 4.3.2. surface roughness and not exceeding a specific value.

By using the above-described multilayer sintered ceramic body having a first layer 100 and a surface 96 comprising YAG, a significant corrosion and erosion resistant material is provided which allows continuous, extended use as components in etch and deposition processes. This corrosion and erosion resistant material minimizes particle generation through improved surface characteristics, high purity, low porosity and highly phase pure YAG as disclosed herein, providing improved performance during use and reduced contamination of semiconductor substrates during processing.

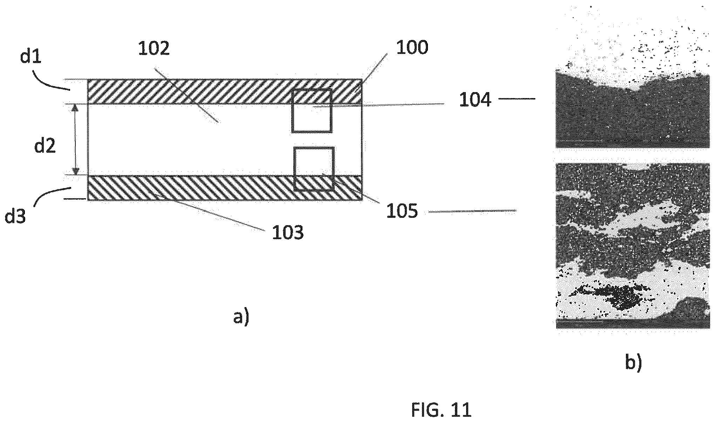

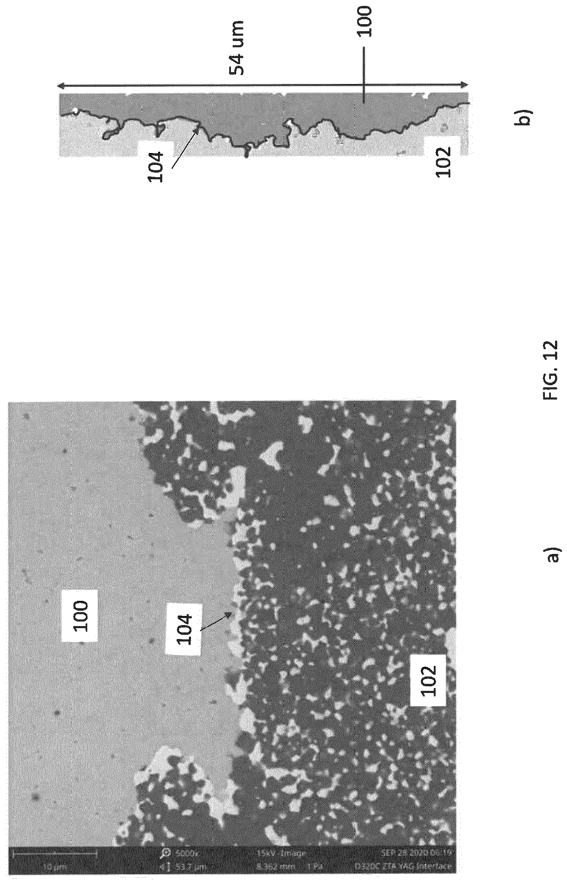

Non-metal, brittle ceramic layered bodies as known to those skilled in the art often suffer from delamination at an interfaces between layers due to insufficient interfacial bonding between layers, resulting in spalling and particle release during use in semiconductor reactors. Disclosed herein is a multilayer sintered ceramic body comprising a first interface 104 between the corrosion resistant first layer 100 and the composite oxide, second layer 102 as depicted in the schematic of FIG. 11 a) and b). As illustrated, the first interface **104** which is described in greater detail herein, may provide for enhanced adhesion between the corrosion resistant first layer **100** and the composite oxide second layer **102.** This improved adhesion may be achieved by a number of factors, including the increased interfacial length, increased area of the interface, an interlocking effect provided by the morphology of the first interface **104**, and closely matching coefficient of thermal expansion (CTE) between the first and second layers (100 and 102 respectively). FIG. 12 a) and b) illustrates SEM images of the first interface 104 between the corrosion resistant first layer **100** (comprising YAG) and the composite oxide second layer **102** wherein a straight line interfacial length is about 54 um, and the interfacial length of the first interface 104 as depicted in the exemplary image of FIG. 12 b) was measured (using ImageJ software analysis as disclosed herein) across 9 images to be about 90 um, representing about a 66% increase in interfacial length. Thus disclosed herein is a multilayer sintered ceramic body having a first interface defined by the at least one composite oxide second layer 102 and the corrosion resistant first layer 100 wherein the interfacial length is increased by from 20 to 80 %, preferably from 20 to 60%, preferably from 20 to 40%, preferably from 30 to 80%, preferably from 40 to 80%, preferably from 30 to 70% relative to a linear interface length. Correspondingly, the composite oxide second layer 102 and the corrosion resistant first layer 100 may contact one another at an interface commensurate in interfacial area to the greatest dimension of the multilayer sintered ceramic body. For multilayer sintered bodies having greatest dimensions of from 100 to 620 mm, the composite oxide second layer and the corrosion resistant first layer contact one another at an interface having an interfacial area of 2,919 cm² and less, preferably from 78 to 2,919 cm², preferably from 314 to 2,919 cm², preferably from 707 to 2,919 cm². In embodiments, it may be preferable that the first and second layers are in direct contact, forming first interface 104, and thus are contiguous layers. In other embodiments, circuitry, heating elements, RF coils/RF antennae and the like may be disposed between first, second and/or third layers as required by the specific component application, and irrespective of these features, first and second layers may be contiguous or substantially contiguous. This increased interfacial length and interfacial area may enhance adhesion at the first interface 104 between the corrosion resistant first layer **100** and the composite oxide second layer **102.**

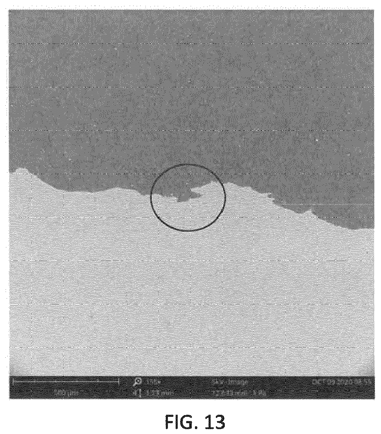

FIG. 13 illustrates an SEM micrograph at 500 x of a first interface 104 of the multilayer sintered ceramic body 98 wherein the interface defined by the composite oxide second layer 102 and the corrosion resistant, YAG first layer 100 comprises an irregular, nonlinear boundary which in embodiments may comprise reverse, discontinuous angles also depicted in FIG 12 a) and b). In some embodiments as depicted in FIG. 12 a), the first interface 104 may comprise at least one dovetail structure and/or a portion of a dovetail structure. In other embodiments at least a portion of the first interface may comprise a trapezoidal shape. These reverse angles and structures may provide an anchoring effect, increasing interfacial and tensile strength and bonding across the first interface 104 defined by the composite oxide second layer 102 and the corrosion resistant first layer 100.

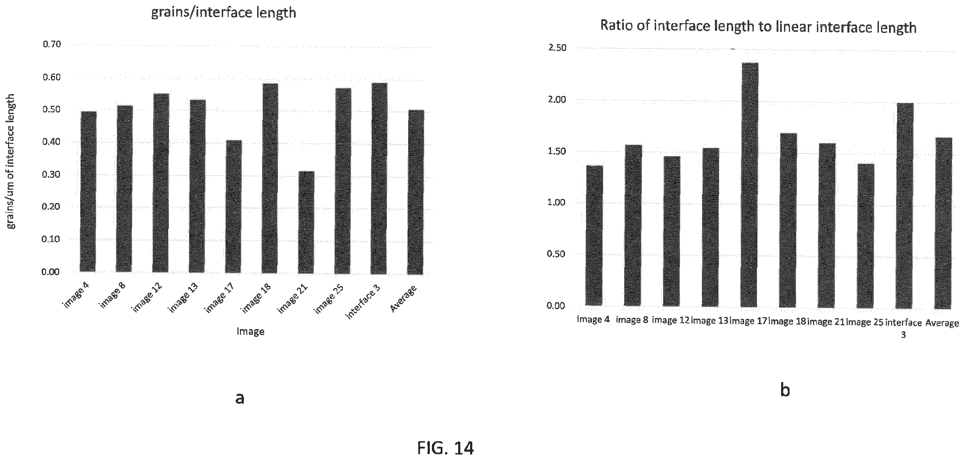

The number of grains in contact across the first interface 104 may also play a role in adhesion and strength characteristics of first interface 104. The number of grains were counted across an interface length to obtain the number of grains per um. FIG. 14 a illustrates the number of grains per interface length in um of the first interface 104 defined by the corrosion resistant first layer **100** and the composite oxide second layer **102** across 10 images, with smaller numbers of grains per micron preferable to enhance adhesion and the "interlocking" effect. In embodiments, the number of grains per micron comprises from 0.2 to 0.8 grains per um, preferably from 0.3 to 0.6 grains per um, preferably from 0.4 to 0.55 grains per micron along a first interface 104 of the multilayer sintered ceramic body 98 comprising YAG as a corrosion resistant first layer 100 and a composite oxide second layer 102 of about 15% by volume of zirconia in an alumina matrix. FIG. 14 b depicts the ratio of interface length to the linear measurement across the image as disclosed, of about 54 um. Higher ratios of interface length to linear interface length are preferable.

In embodiments, it may be preferred to select compositions for first layer 100 and second layer 102 wherein the absolute value of the coefficient of thermal expansion (CTE) of the first layer and the second layer differ in an amount of from 0 to less than 0.5 x 10⁻⁶/°C, preferably from about 0.003 x 10⁻⁶/°C to less than 0.5 x 10⁻⁶/°C, as measured in accordance with ASTM E831. The CTE matching between first and second layers may be provided across a temperature range of ambient to about 1700°C, (or at least from 200°C to 1400°C as depicted in the figures) in accordance with that of the method as disclosed herein. Selection of these materials providing this difference in CTE may reduce the interfacial stress on first interface 104, thereby improving adhesion between the first layer 100 and second layer 102.

As described herein, first interface **104**, which may be created after sintering and annealing steps of the method as disclosed herein, may provide for enhanced adhesion strength between the corrosion resistant first layer **100** and the composite oxide second layer 102. This improved adhesion strength may be achieved by the increased interfacial roughness, specific morphology and thereby increased area of the first interface 104, an interlocking effect between the corrosion resistant first layer 100 and the composite oxide second layer 102, and closely matching coefficient of thermal expansion (CTE) between the first and second layers (100 and 102, respectively).

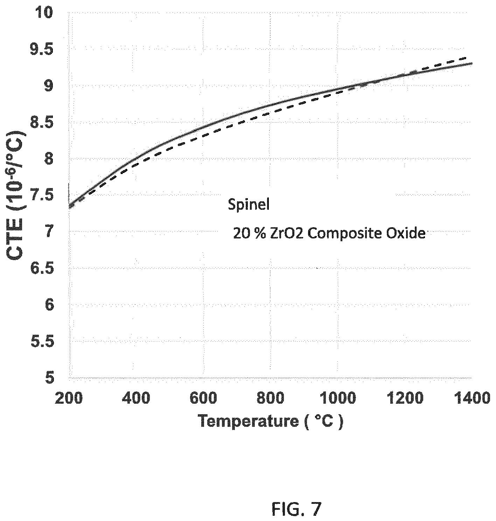

In alternate embodiments, the corrosion resistant, first layer 100 may comprise magnesium aluminate spinel (MgAl₂O₄). FIG. 7 depicts a variation in CTE of about 0.2 x 10-6/°C and less across a temperature from 200 to 1400°C of an exemplary multilayer sintered ceramic body comprising a corrosion resistant layer 100 of magnesium aluminate spinel and a composite oxide 102 of about 20% by volume of zirconia and the balance alumina. The variation in CTE between the composite oxide and corrosion resistant layer is within the disclosed ranges for successful fabrication of multilayer sintered ceramic bodies as disclosed herein, in particular those of large dimension up to and including about 625 mm in greatest dimension.

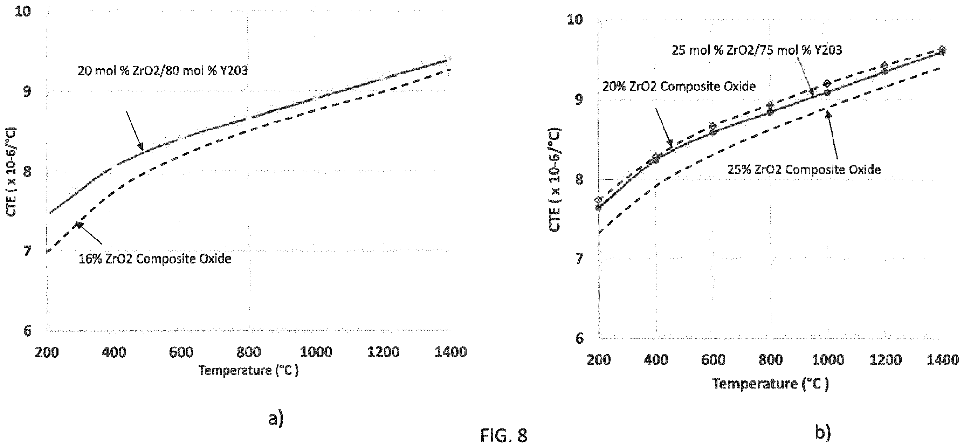

In further embodiments, the corrosion resistant, first layer 100 may comprise at least one crystalline phase of yttria and zirconia and at least one composite oxide layer 102. FIG. 8 depicts variation in CTE of a multilayer sintered ceramic body comprising a corrosion resistant layer comprising at least one crystalline phase of yttria and zirconia and at least one composite oxide layer according to embodiments as disclosed. FIGS. 8 a and b illustrates a variation in CTE of about 0.3 x 10-6/°C and less across a temperature from 200 to 1400°C of a multilayer sintered ceramic body comprising a corrosion resistant layer 100 comprising at least one yttria-zirconia crystalline phase.

FIG. 8 a) depicts a multilayer sintered ceramic body comprising a corrosion resistant layer 100 of about 20 mol % zirconia and the balance yttria, CTE matching to a composite oxide having about 16 % by volume zirconia and the balance alumina. These compositions of corrosion resistant first layer 100 and second layer 102 provided a CTE match within the preferred ranges as disclosed herein across the temperature range of from ambient (or 200°C as supported by the figures) 1800°C of the method as disclosed herein (or 1400°C as supported by the figures).

FIG. 8 b) depicts a multilayer sintered ceramic body comprising a corrosion resistant layer 100 of about 25 mol % zirconia and the balance yttria, CTE matching to a composite oxide having about 25 % by volume zirconia and the balance alumina. The CTE data for the corrosion resistant layer comprising about 25 mol % was averaged across experimental CTE measurements for materials having compositions above and below that of 25 mol % zirconia by volume. As depicted in FIG. 8 b), the closest CTE match to a corrosion resistant first layer 100 comprising about 25 mol % zirconia (and the balance yttria) is a composite oxide second layer 102 comprising about 20% by volume of zirconia (and the balance alumina). These compositions of corrosion resistant first layer 100 and second layer 102 provided a CTE match within the preferred ranges as disclosed herein across the temperature range of from ambient (or 200°C as supported by the figures) 1800°C of the method as disclosed herein (or 1400°C as supported by the figures).

The embodiments depicted in FIG. 8 may comprise a corrosion resistant first layer 100 comprising at least one crystalline phase comprising yttria and zirconia, wherein the zirconia is present in an amount of not less than 10 mol % ZrO₂ and not greater than 25 mol % ZrO₂, preferably not less than 12 and not greater than 25 mol % ZrO₂, preferably not less than 15 and not greater than 25 mol % ZrO₂, preferably not less than 18 and not greater than 25 mol % ZrO₂, preferably not less than 10 and not greater than 23 mol % ZrO₂, preferably not less than 10 and not greater than 20 mol % ZrO₂, preferably not less than 15 and not greater than 23 mol % ZrO₂, and the balance comprising Y2O3. These compositions for corrosion resistant layer 100 may be combined with the composite oxide 102 as disclosed herein wherein the composite oxide has suitable composition to CTE match the crystalline phases selected from the group consisting of a type C solid solution or combinations of a fluorite solid solution and a type C solid solution or combinations of a compound phase comprising Zr₃Y₄O₁₂ and a type C solid solution as selected for the corrosion resistant layer 100. These crystalline phases are consistent with the disclosed compositional ranges as reported in "phase relationships in the yttria-rich part of the yttria-zirconia system", (J. Mater. Sci 12 (1977) 311-316, H. G. Scott). In embodiments, the corrosion resistant first layer 100 comprising at least one crystalline phase comprising yttria and zirconia, wherein the zirconia is present in an amount of not less than 10 mol % ZrO₂ and not greater than 25 mol % ZrO₂ is substantially free of, or free of, dopants.

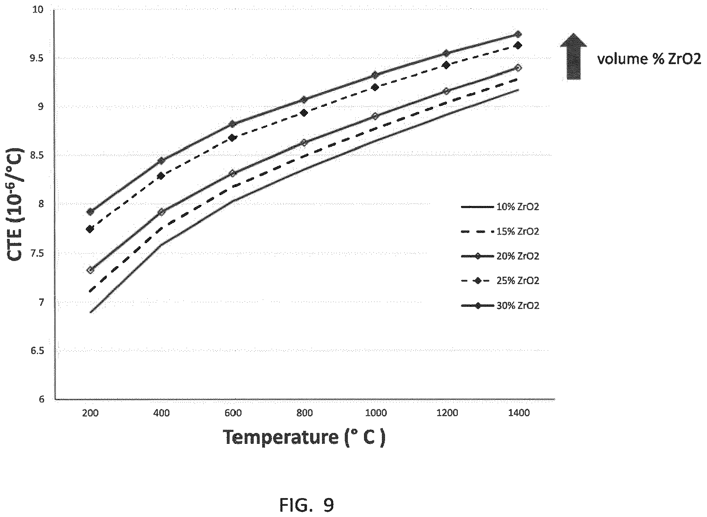

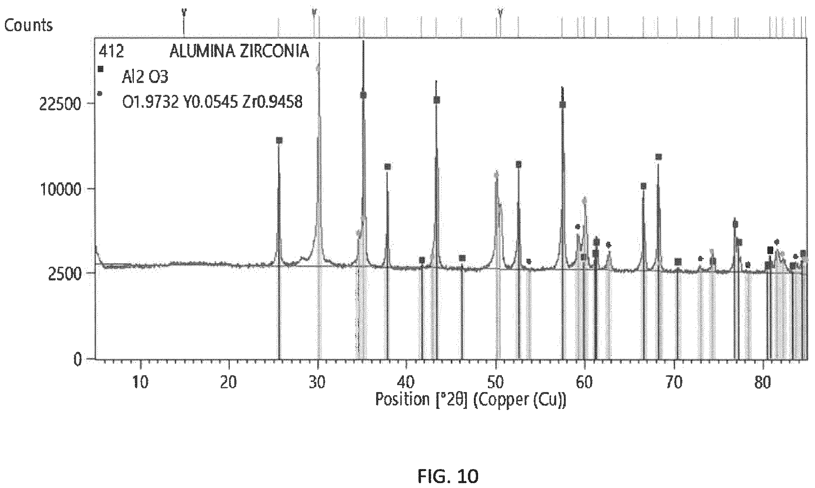

The second layer 102 comprising at least one composite oxide layer comprises alumina and zirconia wherein the zirconia is present in an amount by volume of not less than 10 % and not greater than 25%, preferably not less than 12% and not greater than 25 %, preferably not less than 15% and not greater than 25 %, preferably not less than 18% and not greater than 25 %, preferably not less than 10% and not greater than 23 %, preferably not less than 10% and not greater than 20 %, preferably not less than 12% and not greater than 23 %, preferably not less than 15% and not greater than 20 %, preferably not less than 15% and not greater than 18 %, relative to a total volume of the second layer 102. Across this compositional range, in accordance with FIG. 9, the coefficient of thermal expansion (CTE) of the composite oxide second layer may vary from a composite oxide second layer comprising about 10% by volume of zirconia, having a CTE of about 6.899 x 10⁻⁶/°C as measured at 200°C, to a composite oxide second layer comprising about 25% by volume of zirconia and having a CTE of about 9.630 x 10⁻⁶/°C as measured at 1400°C. The CTE may vary at a selected temperature by an amount of up to 1 ppm/°C and less. The volumetric amount of zirconia in the composite oxide second layer 102 provides the ability to tailor the CTE to closely match, within the disclosed CTE matching ranges, or providing a material having a CTE substantially the same as, or the same as, that of the first layer 100 and/or the third layer 103 (as depicted in FIG. 1) across the temperature ranges as disclosed. CTE experimental data was taken using dilatometry methods in accordance with ASTM E831 for 10, 15 and 20 volume % ZrO₂. The at least one composite oxide comprising the second layer 102 comprises separate crystalline phases of zirconia and alumina as illustrated from x ray diffraction results of FIG. 10, thus the volumetric mixing rule as known to those skilled in the art was used to calculate CTE values for 25 and 30% by volume zirconia. The ability to tailor the CTE characteristics of the composite oxide comprising the second layer 102 provides CTE matching between the composite oxide of the second layer, the YAG of the first layer, and the third layer 103 comprising combinations of YAG and the second layer, in particular across a temperature range corresponding to that of the method (from ambient to about 1700°C or at least to 1400°C as disclosed in the figures) and sintering temperatures as disclosed herein.

Compositions of the composite oxide second layer 102 may be tailored to CTE match the corrosion resistant first layer 100 comprising YAG. In preferred embodiments, to more closely CTE match the YAG corrosion resistant first layer 100, a composite oxide second layer 102 comprising about 16% zirconia by volume may be preferable. Depicted in FIG.11, the CTE is shown to increase with increasing amounts by volume of zirconia and where a lower CTE is desired, the amount of zirconia may be decreased or increased in order to CTE match the corrosion resistant first layer 100 and/or the machinable layer 103 within the ranges as disclosed. Multilayer sintered ceramic bodies according to embodiments disclosed herein were formed having greatest dimensions of from 100 to about 625 mm.

For use in plasma processing chambers and in particular those operating in the RF range, preferable is a multilayer sintered ceramic body 98 having low dielectric loss (tangent δ). The composite oxide second layer 102 may in embodiments comprise the greatest volume of the multilayer sintered ceramic body, thus the associated properties of the composite oxide second layer may greatly influence the electrical and other properties, such as thermal conductivity, of the sintered body. Dielectric loss for the sintered body may be impacted by the purity of the composite oxide second layer 102, in particular the silica content. As such, the at least one composite oxide second layer 102 may comprise magnesia and/or calcia in amounts of from about 2 to 100 ppm, preferably from about 2 to 75 ppm, preferably from about 2 to 50 ppm, preferably from about 2 to 25 ppm, preferably from about 2 to 20 ppm, preferably from about 2 to 10 ppm, preferably about 2 ppm, each relative to the mass of the composite oxide second layer 102. In further embodiments, the composite oxide second layer 102 as disclosed herein may be formed from at least one powder mixture having a Si content of about 14 ppm and greater, preferably from 14 to 100 ppm, preferably from 14 to 75 ppm, preferably from 14 to 50 ppm, preferably from 14 to 25 ppm, preferably from 14 to 20 ppm, preferably about 14 ppm relative to the total mass of the second layer 102. In embodiments, the second layer may have a total impurity content of from 5 to 200 ppm, preferably from 5 to 150 ppm, preferably less than 100 ppm, preferably less than 50 ppm, preferably less than 25 ppm, preferably less than 15 ppm, preferably from 10 to 100 ppm, preferably from 10 to 80 ppm, preferably from 10 to 60 ppm, preferably from 10 to 40 ppm, preferably from 20 to 80 ppm, preferably from 30 to 60 ppm, relative to the total mass of the second layer.

The dielectric loss/tangent delta of the YAG first layer 100 and the composite oxide, second layer 102 are listed in the following table. The high purity of the respective layers comprising the multilayer sintered ceramic body provides low loss tangents of from 5.5 x 10⁻³ and less to 1 x 10⁻⁴ and less, preferably from 1 x 10⁻⁴ to 5.5 x 10⁻³.

| **material** | **frequency** | **dielectric constant** | **loss tangent** |
|---|---|---|---|
| YAG | 1 MHz | 11.56 | <0.0001 |
| YAG | 1 MHz | 11.65 | 0.0055 |
| YAG | 1 GHz | 11.03 | <0.0001 |
| YAG | 1 GHz | 11.06 | <0.0001 |
| Alumina 16 vol.% Zirconia | 1 MHz | 12 | < 0.0007 |

While corrosion resistant first layer 100 provides a chemically inert, plasma-facing surface 98 resistant to the corrosive effects of halogen process gases and the erosive effects of plasma ion bombardment (often an inert gas such as Ar may be used), the composite oxide second layer 102 provides mechanical strength to the multilayer corrosion resistant sintered bodies as disclosed herein. The composite oxide second layer 102 may be sintered to a very high density, and in embodiments sintered to a fully dense body, which provides the mechanical strength necessary for fabrication of multilayer sintered bodies of large dimension, for example from 100 to about 625 mm in diameter, preferably between 200 to about 625 mm, preferably between 250 to about 625 mm, preferably between 300 to about 625 mm, more preferably between 350 to about 625 mm, more preferably between 400 to about 625 mm, more preferably between 450 to about 625 mm, more preferably between 500 to about 625 mm. Density measurements were performed in accordance with ASTM B962-17 for composite oxides having zirconia in amounts from 10 to 16 volume % and the volumetric mixing rule was used to estimate densities for those composite oxides having 20 and 25% zirconia. Table 4 lists densities of the composite oxide second layer 102 of zirconia and alumina as disclosed herein.

**Table 4**

| Vol % ZrO2 | Vol % Al2O3 | Average Density (g/cc) | % Theoretical Density | % Volumetric Porosity |
|---|---|---|---|---|
| 10 | 90 | 4.192 | 100 | 0 |
| 12 | 88 | 4.228 | 99.9 | 0.12 |
| 12 | 88 | 4.224 | 99.8 | 0.21 |
| 12 | 88 | 4.198 | 99.2 | 0.83 |
| 16 | 84 | 4.319 | 100 | 0 |
| 20 | 80 | 4.358 | 99 | < 1 |
| 25 | 75 | 4.462 | 99 | < 1 |

Zirconia is reported to have a theoretical density of 6.09 g/cc, and alumina is reported to have a theoretical density of 3.98 g/cc. The theoretical density was calculated using these densities and the volume fraction of the crystalline phases of zirconia and alumina in accordance with the volumetric mixing rule as known to those skilled in the art. Very high densities, from 99 to 100% of theoretical, and ranging from 4.192 to 4.462 g/cc as measured in accordance with ASTM B962-17, were measured for embodiments of the composite oxide second layer as disclosed in Table 4. These high densities provide mechanical strength sufficient for formation of multilayer corrosion resistant sintered bodies of large dimension up to and including about 625 mm greatest dimension.

Processing chambers for fabrication of semiconductor devices are required to accommodate substrates having ever-increasing diameters which correspondingly require chamber components of large dimension. These components may be on the order of between for example 100 and about 625 mm, preferably 200 to about 625 mm. A number of materials which provide resistance to corrosion and erosion are known to have low sintering strengths which result in breakage, making fabrication of large, solid body components from these bulk corrosion resistant materials challenging. Thus, there is a need for a high strength material forming the composite oxide second layer 102 to enable fabrication of large size chamber components. The composite oxide second layer as disclosed herein was tested in four-point flexural testing using test bars prepared in accordance with ASTM standard C 1161-3, "Standard Test Method for Flexural Strength of Advanced Ceramics at Ambient Temperature" to determine the flexural strength. A four-point bending configuration was used as set forth in the ASTM standard. Four-point bend testing is preferable over three-point bend testing as it exposes a larger volume of the sample to the maximum stress, and thus yields strengths which are more representative of the material under test. Three-point bend testing exposes a comparatively smaller volume of the sample to maximum stresses, and as such, reported strength values are often higher from 3-point flexural testing. Using ASTM standard C 1161-3, very high strength values were achieved in a four-point bend configuration for the composite oxide second layer 102. Table 5 lists material properties for a composite oxide second layer comprising about 16% ZrO₂ in an alumina matrix. During use in semiconductor reactors under vacuum conditions, corrosion resistant components fabricated from the multilayer sintered ceramic bodies as disclosed herein may be subjected to a bending stress across component dimensions in excess of 500 mm. The properties of high strength and increased stiffness/young's modulus may be necessary for application of the components as disclosed herein to large scale etch and/or deposition chambers. The flexural strength of 98% dense aluminum oxide is reported to be about 550 MPa, and the stiffness is reported at about 360 GPa. The at least one composite oxide second layer as disclosed herein may provide mechanical strength and stiffness/young's modulus in the range of that of alumina while providing the required CTE match to the corrosion resistant first layer. Use of composite oxide second layer **102** as disclosed herein may significantly enhance strength and rigidity of the corrosion resistant components fabricated from the multilayer sintered ceramic bodies as disclosed herein to enable fabrication of large (> 100 to 200 mm dimension) components.

**Table 5**

| **Material Property** | **Test Method** | **Units** | **Aluminum Zirconium Oxide** |
|---|---|---|---|
| Theoretical Density | as reported | g/cc | 4.3 |
| Typical Measured Density | C 20-97 | g/cc | >4.19 |
| Largest Pore Size (d90) | SEM | µm | < 5 |
| Bulk Purity | ICP-MS | % | >99.99 |
| Grain Size-Average | Line intercept | µm | 1 to 3 |
| Grain Size-Max | Line intercept | µm | 5 |
| 4pt Flexural Strength (MOR) | ASTM C1161 | MPa | 575 |
| Young's Modulus | ASTM C1259-15 | GPa | 395 |
| Vickers Hardness | ASTM C1327 | GPa | 20 |
| Fracture Toughness | Indention Method | MPa-m1/2 | 4.2 |
| Thermal Conductivity 20°C | ASTM E1461-13 | W/(m-K) | 27 |
| Thermal Conductivity 200°C | ASTM E1461-13 | W/(m-K) | 14 |
| C.T.E. (RT-200C) | ASTM E228-17 | x 10-6/°C | 7.1 max |
| Volume Resistivity 200°C | ASTM D257 | ohm-cm | >1 E12 |
| Dielectric Constant @ 1MHz | ASTM D150 | - | 12 |
| Dielectric loss @ 1MHz | ASTM D150 | - | 0.0007 |

High thermal conductivity may also be a requirement for certain applications such as a dielectric or RF window component comprising the zirconia toughened alumina compositions selected for use as composite oxide second layer 102. Although pure aluminum oxide is reported to have a high thermal conductivity, the mismatch in CTE precludes it's use in combination with the materials disclosed herein for use as corrosion resistant first layer 100. As a result, the composite oxide second layer 102 may preferably comprise a particle composite of the crystalline phases of zirconia and alumina in the amounts by volume as disclosed. In embodiments as disclosed herein, the particle composite may comprise particles of zirconia dispersed in a matrix of alumina wherein the particle composite comprises two separate crystalline phases and preferably the composite oxide second layer 102 does not form a solid solution. Formation of a solid solution may degrade thermal conductivity and as such the composite oxide second layer comprises separate crystalline phases of zirconia and alumina. FIG. 10 depicts the separate crystalline phases of zirconia and alumina from x ray diffraction results. X ray diffraction was performed using a PANanlytical Aeris model XRD capable of crystalline phase identification to about +/- 5%. Small amounts of yttria present in the x-ray diffraction pattern may result from the stabilization of zirconia. While there may be no practical lower limit to the minimum amount of zirconia in the composite oxide second layer for thermal conductivity reasons, in order to provide CTE matching and high thermal conductivity on the order of that of alumina, a composite oxide second layer 102 comprising a first crystalline phase of zirconia from about 10% by volume up to and including 25% by volume, with the balance comprising a second crystalline phase of alumina from about 75% by volume up to and including 90% by volume may be preferable. In order to provide thermal conductivity sufficient for use for example as a window or lid component in semiconductor processing chambers, composite oxide second layers 102 having up to and including about 25% by volume of zirconia may be preferable. Composite oxide second layers 102 having greater than about 25% by volume of zirconia may not provide sufficient thermal conductivity for use as components in semiconductor etch and deposition chambers for which high thermal conductivity is a requirement, thus the composite oxide second layer 102 comprises zirconia in amounts by volume of 25% and less. The composite oxide second layer 102 comprising zirconia in an amount of about 25% by volume was measured to have a density of about 4.462 g/cc, and a CTE of about 7.745 x 10⁻⁶/°C at 200°C and 9.630 x 10⁻⁶/°C at 1400°C. Further, use of MgO as a sintering aid may result in a low thermal conductivity glassy phase present between grains, thus adversely affecting thermal conductivity as well as corrosion and erosion resistance. As a result, in specific embodiments, it is preferred that the composite oxide second layer 102 comprises magnesia in the ranges as defined herein, for example in amounts of about 2 ppm and less. Thermal conductivity was calculated (as the product of the diffusivity, the density and the known heat capacity) from thermal diffusivity measurements as performed in accordance with ASTM E1461-13 at ambient and at 200°C temperature, and values of 27 and 14 W/m K were measured, respectively, for a composite oxide second layer 102 as disclosed herein comprising about 16% by volume of zirconia and the balance alumina. The composite oxide second layers having compositions within the ranges as disclosed herein provide high thermal conductivity sufficient for use in chamber components where high thermal conductivity is a requirement, such as for example a dielectric or RF window.

In order to prevent localized hot spots and overheating during use, in particular for RF applications, a low dielectric loss is preferable. Dielectric loss may be affected by such material properties as grain size and impurity content for example. The presence of impurities and/or sintering aids and/or dopants, such as in particular silica, in the composite oxide second layer 102 may result in a higher dielectric loss. The use of highly pure/low impurity content starting powders and a method that preserves that purity in the powder and calcined powder mixtures, results in a composite oxide second layer 102 of high total purity (> 99.999%) and correspondingly low in total impurities. As such, in embodiments, the composite oxide second layer 102 as disclosed may have a total impurity content of from 5 to 150 ppm, preferably less than 100 ppm, preferably less than 50 ppm, preferably less than 25 ppm, preferably less than 15 ppm, preferably from 10 to 100 ppm, preferably from 10 to 80 ppm, preferably from 10 to 60 ppm, preferably from 10 to 40 ppm, preferably from 20 to 80 ppm, preferably from 30 to 60 ppm relative to a total mass of the second layer 102. In certain embodiments, the composite oxide second layer is formed from a powder which comprises silica in an amount of about 14 ppm as defined herein. This low total impurity content and low silica content provides a composite oxide second layer 102 having a dielectric loss of less than 0.7 x 10⁻⁴ at a frequency of 1 MHz at ambient temperature as measured in accordance with ASTM D150, as listed in Table 5. The composite oxide second layer 102 as disclosed herein provides low dielectric loss suitable for use as a chamber component, in particular for RF plasma chambers and related chamber components.

The multilayer sintered ceramic body as disclosed herein further comprises a third layer 103 as depicted in FIG. 1 wherein the third layer comprises combinations of the corrosion resistant, first layer 100 comprising YAG and the composite oxide, second layer 102 wherein the second layer comprises Al₂O₃ and ZrO₂ wherein ZrO₂ is present in an amount of not less than 10 % ZrO₂ by volume and not greater than 25% by volume. The third layer 103 may provide improved machinability of a surface 94, and CTE matching (within the ranges as disclosed herein) to the first layer 100 and second layer 102. The third layer comprises a multiple phase (first layer 100 and alumina/zirconia layer 102) layer comprising the first layer (in embodiments comprising YAG, spinel and/or yttria/zirconia) in an amount of not less than 10% and not greater than 60%, preferably not less than 20% and not greater than 60%, preferably not less than 30% and not greater than 60%, preferably not less than 40% and not greater than 60%, preferably not less than 45% and not greater than 55%, preferably about 50%, each by weight relative to the total weight of the third layer 103. The multiple phase structure is depicted for a YAG first layer 100 in the SEM micrographs of FIG. 16 a) at 500x and b) at 1000x for the third layer 103 comprising about 50% YAG and about 50% zirconia each by weight. A uniform distribution of regions of YAG and alumina/zirconia are depicted, where light gray regions (comprising YAG) and alumina/zirconia regions (depicted as dark gray or black having small white regions within) each form single phase regions of about 100 um and greater in dimension as illustrated within the multi-phase, third layer 103. The multi-phase, uniformly distributed structure of the third layer 103 may provide improved fracture toughness and resistance to crack propagation by deflection of cracks along the interfaces between the differing phases. Further, use of the machinable, third layer 103 as disclosed herein may reduce formation of defects, and thereby maintain mechanical strength, in the composite oxide second layer 102 by absorbing energy generated during machining within the multi-phase, machinable third layer 103. Thus, in embodiments, the multilayer sintered ceramic bodies comprise a machinable, third layer 103 comprising combinations of the first layer 100 comprising YAG and the second layer 102 wherein the second layer comprises a composite oxide layer of zirconia and alumina in the amounts as disclosed. In preferred embodiments, the third layer 103 comprises YAG in an amount of about 51% by weight, and zirconia/alumina in about 49% by weight wherein the zirconia/alumina comprises about 16% by volume of zirconia.

The third layer 103 may further provide improved uniformity during sintering by combining powders to form a mixture that has sintering characteristics intermediate to that of YAG first layer 100 and zirconia/alumina second layer 102. The third layer 103 may provide more uniform heat transfer, and thereby more uniform sintering characteristics (such as sintering temperature and rate of densification of the respective layers), across the first, second and third calcined powder mixtures during sintering according to the method as disclosed herein.

A second interface 105 between the third layer 103 and the composite oxide, second layer 102 is depicted in the schematic of FIG. 11 a) and b). As illustrated, the second interface 105 which is described in greater detail herein, may provide for enhanced toughness between the third layer 103 and the composite oxide second layer 102. This improved toughness may be achieved by a number of factors, such as the multi-phase characteristics of the second interface 105, which may provide an increased area between phases to lessen crack propagation, and an interlocking effect provided by the morphology of the multiple phases within the second interface 105. Intermixing of the calcined powder mixtures forming the third layer 103 and the second layer 102 provides for a second interface 105 which may be indistinct (not having a clearly delineated boundary between the third layer 103 and the second layer 102). As such, second interface 105 may comprise a diffuse boundary and as such, properties such as composition, strength, etc. across the second interface 105 may have a gradient, and as such be inhomogeneous ("inhomogeneous" as used herein is meant that the properties are spatially nonuniform, i.e., substantially nonuniform). In embodiments, it may be preferable that the second and third layers are in contact, forming second interface 105, and thus second and third layers are contiguous. In other embodiments, circuitry, heating elements, RF coils/antennae and the like may be disposed between second and third layers as required by the specific component application, and irrespective of these features, first and second layers may be contiguous or substantially contiguous.

In embodiments, it may be preferred to select compositions for third layer 103 and second layer 102 wherein the absolute value of the coefficient of thermal expansion (CTE) of the second layer and the third layer differ in an amount of from 0 to less than 0.55 x 10⁻⁶/°C, preferably from about 0.003 x 10⁻⁶/°C to less than 0.5 x 10⁻⁶/°C, as measured in accordance with ASTM E831. The CTE matching between second layer 102 and third layer 103 may be provided across a temperature range of ambient to about 1700°C in accordance with that of the method as disclosed herein. Selection of these materials providing this difference in CTE may reduce the interfacial stress on second interface 105, thereby improving adhesion between the second layer 102 and third layer 103.

To form a plasma processing chamber component from the multilayer sintered ceramic bodies as disclosed, the multilayer sintered ceramic bodies may be machined, drilled, surface ground, polished and other processes as necessary to form them into sintered components having the required through holes, surface finish and dimensional tolerancing dependent upon component design. However, these necessary processes invariably create defects, such as cracking and/or microcracking (those cracks which are not readily visible by eye) in the sintered ceramic components. In order to minimize particle release from a surface 96 of the corrosion resistant first layer 100 of FIG. 1 into the chamber, generation of surface and/or subsurface defects during machining is preferably minimized. These surface and/or subsurface defects may cause microcracking on a surface 96 of the first layer 100 at a scale unable to be readily visibly apparent, which thereafter may lead to subsequent release of particles into the plasma processing chamber from the first layer 100. Additionally, the presence of defects on a larger scale in second layer 102 may result in fracture of the sintered body at a strength less than typical for the material according to an interrelation between the material type itself (in this case brittle, nonmetallic ceramics), the flaw or defect size (resulting from machining), and the applied stress (remaining from processing, and/or due to CTE differences between the layers, and/or arising during use as a sintered ceramic component). This relationship between material, flaw size and stress is in accordance with fracture mechanics as reported by A.A. Griffith in "The phenomena of rupture and flow in solids" Phil. Trans. Roy. Soc. London, Volume 221, Issue 582-593, 01 January 1921.

Residual stress, which may remain in the sintered body, may arise from differences in CTE which may manifest during the heating, sintering, annealing and cooling steps to form the multilayer sintered ceramic bodies herein. Thus, it is preferable to minimize these internal stresses which come about by differences in CTE of the subject materials by providing those materials as layers which are matched in CTE across a temperature range of from ambient temperature to the sintering and annealing temperatures as disclosed herein, of about 1700°C and less (or at least from 200°C to 1400°C as illustrated in the figures).

As such, in embodiments, preferable are those materials selected for first, second and third layers wherein the absolute value of the coefficient of thermal expansion (CTE) of the first, second and third layers differ in an amount of from about 0 to less than 0.6 x 10-6/°C, preferably from 0 to 0.55 x 10⁻⁶/°C, preferably from 0 to 0.5 x 10⁻⁶/°C, preferably from 0 to 0.45 x 10⁻⁶/°C, preferably from 0 to 0.4 x 10⁻⁶/°C, preferably from 0 to 0.35 x 10⁻⁶/°C, preferably from 0 to 0.3 x 10⁻⁶/°C, preferably from 0 to 0.25 x 10⁻⁶/°C, preferably from 0 to 0.2 x 10⁻⁶/°C, preferably from 0 to 0.15 x 10⁻⁶/°C, preferably from 0 to 0.1 x 10⁻⁶/°C, preferably from 0 to 0.08 x 10⁻⁶/°C, preferably from 0 to 0.06 x 10⁻⁶/°C, preferably from 0 to 0.04 x 10⁻⁶/°C, preferably from 0 to 0.02 x 10⁻⁶/°C, and preferably from 0 to 0.01 x 10⁻⁶/°C as measured in accordance with ASTM E831.

In alternate embodiments, the absolute value of the coefficient of thermal expansion (CTE) of the first, second and third layers may differ in an amount of from about 0.003 x 10⁻⁶/°C to less than 0.55 x 10⁻⁶/°C, preferably from 0.003 x 10⁻⁶/°C to 0.5 x 10⁻⁶/°C, preferably from 0.003 x 10⁻⁶/°C to 0.45 x 10⁻⁶/°C, preferably from 0.003 x 10⁻⁶/°C to 0.4 x 10⁻⁶/°C, preferably from 0.003 x 10⁻⁶/°C to 0.35 x 10⁻⁶/°C, preferably from 0.003 x 10⁻⁶/°C to 0.3 x 10⁻⁶/°C, preferably from 0.003 x 10⁻⁶/°C to 0.25 x 10⁻⁶/°C, preferably from 0.003 x 10⁻⁶/°C to 0.2 x 10⁻⁶/°C, preferably from 0.003 x 10⁻⁶/°C to 0.15 x 10⁻⁶/°C, preferably from 0.003 x 10⁻⁶/°C to 0.1 x 10⁻⁶/°C, preferably from 0.003 x 10⁻⁶/°C to 0.08 x 10⁻⁶/°C, preferably from 0.003 x 10⁻⁶/°C to 0.06 x 10⁻⁶/°C, preferably from 0.003 x 10⁻⁶/°C to 0.04 x 10⁻⁶/°C, preferably from 0.003 x 10⁻⁶/°C to 0.02 x 10⁻⁶/°C, and preferably from 0.003 x 10⁻⁶/°C to 0.01 x 10⁻⁶/°C as measured in accordance with ASTM E831.

The disclosed ranges of difference in the absolute value of the coefficient of thermal expansion between the first, second and third layers (and combinations thereof) are preferably maintained across a temperature range in accordance with the method as disclosed herein. For example, the desired ranges of difference in the absolute value of the coefficient of thermal expansion between the first, second and third layers may be maintained across a sintering temperature of from 1000°C to 1700°C, and/or an annealing temperature of from 900°C to 1800°C.

Use of the CTE matched multilayer structure as disclosed may reduce the stress (and thereby the likelihood of particle generation in plasma processing chambers) on the corrosion resistant first layer 100, and improve machinability (by reductions in subsurface and/or surface damage) by providing a third layer 103, by way of symmetrically balanced, matching CTEs on either side of the composite oxide second layer 102. Additionally, compositions of the composite oxide second layer 102 may be selected for CTE matching with the corrosion resistant first layer 100 and/or the machinable, third layer 103 within the ranges as disclosed.

This reduced stress between and within layers may minimize surface and subsurface damage during machining and thereby reduce particle generation from the corrosion layer while improving the overall strength and machinability of the multilayer ceramic sintered bodies as disclosed herein.

When the absolute value of the CTE between any of the layers varies within these ranges, a multilayer sintered ceramic body, in particular one of large (> 100 mm) dimension, having high strength, a high degree of flatness with improved machinability, reduced surface and subsurface defects may be formed using the pressure-assisted methods as disclosed herein.

For example, flatness across a multilayer sintered ceramic body having a dimension of about 406 mm may be on the order of 5 mm and less, preferably 4 mm and less, more preferably 3 mm and less. FIG. 11 a) depicts a schematic of the multilayer sintered ceramic body 98 as disclosed herein where 100 represents the first layer comprising a corrosion resistant first layer 100 having a thickness d1, a second layer 102 illustrates the composite oxide second layer having a thickness d2, and third layer 103 illustrates the machinable third layer 103 having a thickness, d3. If the absolute value of the difference in CTE between any of the corrosion resistant first layer 100, the composite oxide second layer 102, and/or the machinable layer 103 of the multilayer sintered ceramic body is about 0.6 x 10⁻⁶/°C and greater, the multilayer sintered ceramic body may form microcracks and/or fracture upon performing the steps of the method as disclosed herein. If the difference in CTE between any of the corrosion resistant first layer 100, the composite oxide second layer 102, and/or the machinable layer 103 of the multilayer sintered ceramic body is about 0.6 x 10⁻⁶/°C and greater, during a machining or drilling step, the greater stress arising from the CTE mismatch may be placed upon the corrosion resistant first layer and may result in surface or subsurface damage in the form of microcracking in the corrosion resistant first layer. This damage to the corrosion resistant first layer may result in spalling and/or increased erosion of the layer, and subsequent release of particles into the plasma processing chambers during use. As a result, in order to form a multilayer sintered ceramic body having high strength, sufficient handleability, and minimal surface damage to the corrosion resistant first layer from machining, the CTE difference between the corrosion resistant first layer 100, the composite oxide second layer 102 and the machinable layer 103 of the multilayer sintered ceramic body is preferred to be within the disclosed ranges, and further preferably as closely matching in CTE as possible, including a value of zero where substantially no difference in the CTE was measured, across a temperature range of from ambient (or about 200°C as depicted in the figures) to about 1800°C in accordance with the method as disclosed. The term "CTE matching" as used herein refers to combinations of the corrosion resistant first layer 100, the machinable third layer 103 and/or the composite oxide second layer 102 which differ in their respective CTE values by from 0 to 0.6 x 10⁻⁶ and less across a temperature range of from ambient temperature to a sintering temperature of about 1700°C and less.

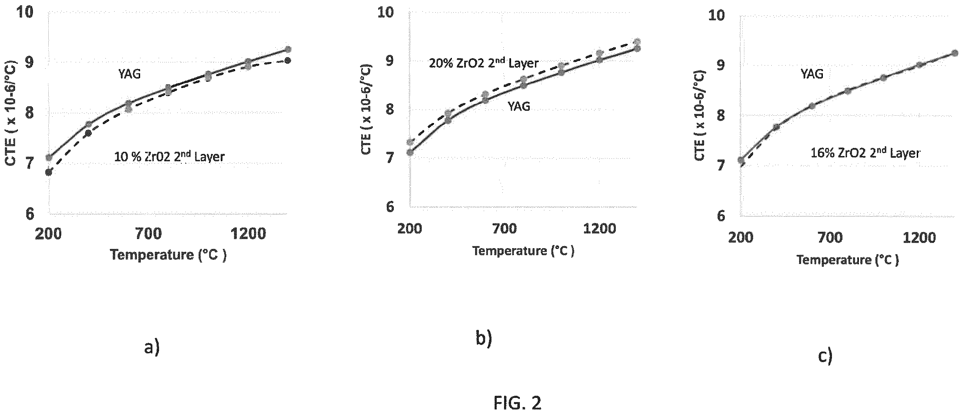

FIGS. 2 a, b and c illustrate a difference in the CTE of the first layer 100 and second layer 102 of about 0.5 x 10⁻⁶/°C and less across a temperature of from 200 to 1400°C of exemplary multilayer sintered ceramic bodies comprising a corrosion resistant first layer 100 of YAG and a composite oxide second layer 102 comprising zirconia in amounts of from 10 to 20% by volume as depicted. FIG. 2 a) depicts the YAG corrosion resistant first layer 100 as disclosed herein and a composite oxide second layer 102 comprising about 10% by volume of zirconia and the balance alumina. As depicted in FIG. 2 a) the difference in the absolute value of the CTE of the composite oxide second layer 102 and the first layer 100 was measured to be from about 0.083 x 10⁻⁶/°C to about 0.22 x 10⁻⁶/°C across a temperature range of from ambient (or 200°C as supported by the figures) to 1800°C of the method as disclosed herein (or 1400°C as supported by the figures). The CTE of the composite oxide second layer 102 comprising 10% zirconia by volume was measured to be less than that of the YAG corrosion resistant first layer across the specified temperature range. FIG 2 b) depicts the YAG corrosion resistant first layer 100 and a composite oxide second layer 102 comprising about 20% by volume of zirconia and the balance alumina. As depicted in FIG. 2 b) the difference in the absolute value of the CTE of the composite oxide second layer 102 and the first layer 100 was measured to be from about 0.13 x 10⁻⁶/°C to about 0.35 x 10⁻⁶/°C across a temperature range of from ambient (or 200°C as supported by the figures) to 1800°C of the method as disclosed herein (or 1400°C as supported by the figures). The CTE of the composite oxide second layer 102 comprising 20% zirconia by volume was measured to be greater than that of the YAG corrosion resistant first layer across the specified temperature range. FIG 2. c) depicts the YAG corrosion resistant first layer 100 and a composite oxide second layer 102 comprising about 16% by volume of zirconia and the balance alumina. The CTE of the composite oxide second layer 102 was measured to be from about 0.003 x 10⁻⁶/°C to about 0.17 x 10⁻⁶/°C across a temperature range of from ambient (or 200°C as supported by the figures) to 1800°C of the method as disclosed herein (or 1400°C as supported by the figures). The difference in the absolute value of the CTE of the composite oxide second layer 102 and the first layer 100 CTE of the composite oxide second layer 102 wherein the second layer comprised 16% zirconia by volume was measured to vary by about 0.05 x 10⁻⁶/°C on average across the specified temperature range of from ambient (or 200°C as supported by the figures) to 1800°C of the method as disclosed herein (or 1400°C as supported by the figures). While a composite oxide second layer 102 comprising zirconia in amounts from about 10 to at least 20% by volume may be acceptable to CTE match the corrosion resistant first layer 100 comprising YAG within the ranges as disclosed, having a first layer 100 comprising YAG, a composite oxide second layer 102 comprising zirconia in an amount of about 16% by volume, and a third layer 103 comprising YAG in an amount of about 50% by weight and the balance comprising the second layer 102 may be preferable due to the very close, at times substantially matching, absolute value of the CTE difference between the respective layers across the temperature range of from ambient (or 200°C as supported by the figures) 1800°C of the method as disclosed herein (or 1400°C as supported by the figures). In embodiments, the second layer 102 may have a CTE which is greater than or less than that of the corrosion resistant layer 100 yet within the ranges as disclosed, thus the absolute value of the difference in CTE within the ranges as disclosed is reported.

In order to provide high mechanical strength and rigidity combined with machinability to form the multilayer sintered ceramic components from the multilayer sintered bodies as disclosed herein, the thickness d2 of the composite oxide second layer 102 as depicted in FIG. 11 is preferably greater than the thickness d1 of the corrosion resistant first layer 100 and/or the thickness d3 of the machinable layer 103. The thickness d1 of the corrosion resistant first layer 100 and/or the thickness d3 of the machinable layer may each be from 0.5 to 5 mm, preferably from 0.5 to 4 mm, preferably from 0.5 to 3 mm, preferably from 0.5 to 2 mm, preferably from 0.5 to 1 mm, preferably from 0.75 to 5 mm, preferably from 0.75 to 3 mm, preferably from 1 to 5 mm, preferably from 1 to 4 mm, preferably from 1 to 3 mm, preferably from 2 to 4 mm, preferably from 2 to 3 mm. A multilayer sintered ceramic body as disclosed herein may have a total thickness (d1 + d2 + d3) of from about 10 to about 50 mm, preferably from about 10 to about 40 mm, preferably from about 10 to about 35 mm, preferably from about 10 to about 33 mm, preferably from about 10 to about 30 mm, preferably from about 10 to about 25 mm, preferably from about 10 to about 20 mm. In certain embodiments where it may be desirable to minimize the thickness d1 of the corrosion resistant first layer 100 and/or the thickness (d3) of the machinable layer 103, the multilayer sintered ceramic body may be optionally machined after sintering and/or after annealing to reduce the thicknesses d1 and/or d3 of layers 100 and/or 103 to modify electrical properties such as dielectric loss, thermal conductivity or other properties such as mechanical strength of the multilayer ceramic sintered body. The multilayer sintered ceramic bodies produced according to the method as disclosed herein may have a first layer 100 wherein the first layer has a thickness, a second layer 102 wherein the second layer has a thickness, and a third layer 103 wherein the third layer has a thickness, wherein the thickness of the second layer 102 is from 70 % to 95%, preferably from 70 % to 90%, preferably from 70 % to 85%, preferably from 80 % to 95%, preferably from 85 % to 95% of the combined thickness of the 3 layers 100, 102 and 103, respectively.

FIG. 15 illustrates example embodiments of a multilayer sintered ceramic body and a multilayer sintered ceramic component fabricated therefrom. Through holes **112** may be created through the corrosion resistant first layer **100,** the composite oxide second layer 102, and the machinable layer 103 by any number of machining, grinding and/or drilling processes as known to those skilled in the art. The multilayer sintered ceramic component formed from the sintered bodies as disclosed herein may have any number of through holes 112. As depicted in FIG. 15 a) b) and c), thru holes 112 may comprise sidewalls 110 wherein the sidewalls 110 are selected from the group consisting of composite oxide second layer 102, first layer 100, and third layer 103. In some embodiments, a thickness comprising the composite oxide second layer **102** is maximized, and a thickness of the corrosion resistant first layer **100** and/or the machinable layer 103 are minimized each to a range of from 0.5 to 1 mm, thereby providing corrosion resistance and machinability with the preferred properties of high mechanical strength, high thermal conductivity and low dielectric loss. As disclosed herein, the composite oxide second layer 102, made within the compositional ranges as disclosed, may have the combined properties of high thermal conductivity, low dielectric loss and high mechanical strength as required for high frequency chamber applications. As such, in embodiments it is preferred that the multilayer sintered ceramic bodies and components fabricated therefrom as disclosed herein comprise a composite oxide second layer thickness which may in preferred embodiments maximized relative to the first and third layers. The combination of high strength, corrosion resistance, low dielectric loss and thermal conductivity of the multilayer sintered ceramic body as disclosed herein makes it particularly well suited as a material for fabrication of dielectric or RF window and many other components for use in semiconductor processing chambers.

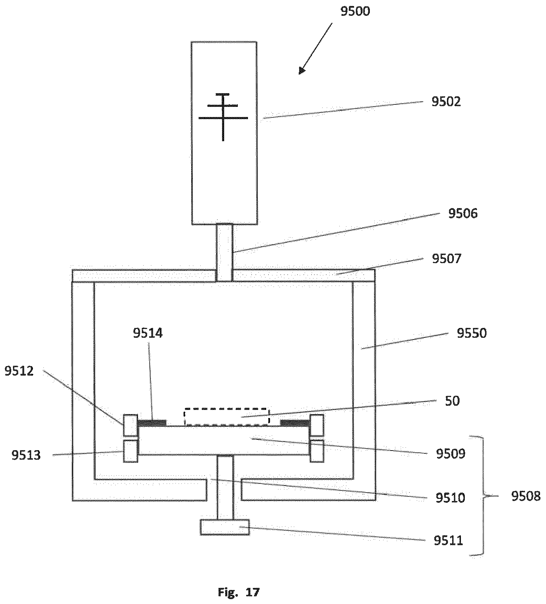

As shown in FIG. 17, embodiments of the technology as disclosed herein may include a semiconductor processing system 9500, also denoted as processing system. Processing system 9500 may include a remote plasma region. The remote plasma region may include a plasma source 9502, which is also denoted as remote plasma source ("RPS").

Processing system 9500, which may represent a capacitively coupled plasma processing apparatus, comprises a vacuum chamber 9550, a vacuum source, and a chuck 9508 on which a wafer 50, also denoted as semiconductor substrate, is supported. A window 9507 forms an upper wall of the vacuum chamber 9550. Window 9507 may be made from the multilayer sintered ceramic body as disclosed herein.

The remote plasma source 9502 is provided outside of the window 9507 of the chamber 9550 for accommodating the wafer 50 to be processed. In the chamber 9550, a capacitively coupled plasma may be generated by supplying a processing gas to the chamber 9550 and a high frequency power to the plasma source 9502. By using the capacitively coupled plasma thus generated, a predetermined plasma processing is performed on the wafer 50. A planar antenna having a predetermined pattern is widely used for the high frequency antenna of the capacitively coupled processing system 9500.

System 9500 may further include an electrostatic chuck 9508 that is designed to carry a wafer 50. The chuck 9508 may comprise a puck 9509, for supporting the wafer 50. The chuck 9508 and puck 9509 may be formed from a dielectric material such as the multilayer sintered ceramic body as described herein and may have a chucking electrode disposed within the puck proximate a support surface of the puck 9509 to electrostatically retain the wafer 50 when disposed on the puck 9509. The chuck 9508 may comprise a base 9511 having a ring-like extending to support the puck 9509; and a shaft 9510 disposed between the base and the puck to support the puck above the base such that a gap is formed between the puck 9509 and the base 9510, wherein the shaft 9510 supports the puck proximate a peripheral edge of the puck 9509.

In physical vapor deposition (PVD) processes, a substrate ring comprising a cover ring 9514 is provided about the periphery of the substrate. The cover ring 9514 typically surrounds the substrate and has a lip or ledge that rests on the substrate supporting surface of the puck 9509. The cover ring 9514 shields the sidewall surfaces and peripheral edge of the puck that would otherwise be exposed to the energized gas in the chamber, from deposition of process residues. Thus, the cover ring 9514 reduces the accumulation of process residues on the puck 9509, which would eventually flake off and contaminate the substrate. The cover ring can also reduce erosion of the puck 9509 by the energized gas. Providing a cover ring 9514 also lowers the frequency with which the chuck and/or the puck 9509 requires cleaning, be-cause cover ring itself can be periodically removed from the chamber and cleaned, for ex-ample, with HF and HNO3, to remove process residues that accumulate on the ring during substrate process cycles. The arrangement of a cover ring 9514 can be seen in FIG. 17, where it covers parts of the supporting surface of the puck 9509. Further parts of the surface of the puck 9509 may be covered with a top shield ring 9512 and/or a shield ring 9513. The cover ring 9514, top shield ring 9512 and/or shield ring 9513 may be made of the multilayer sintered ceramic body as described herein.

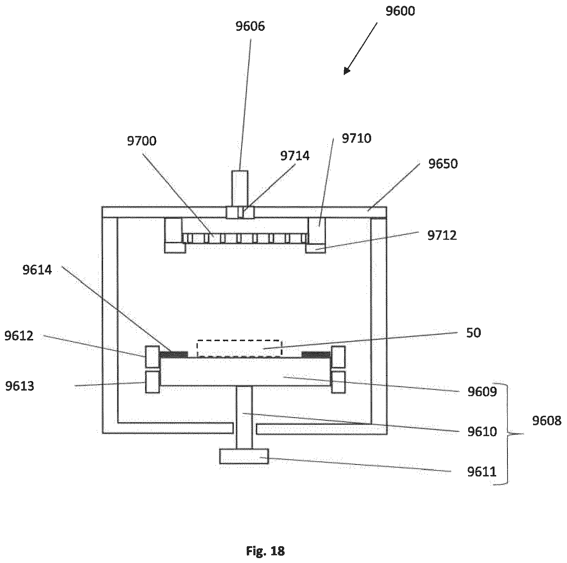

As shown in FIG. 18, another embodiment of the technology as disclosed herein may include a semiconductor processing system 9600, also called processing system. Processing system 9600, which may represent an inductively coupled plasma processing apparatus, comprises a vacuum chamber 9650, a vacuum source, and a chuck 9608 on which a wafer 50, also denoted as semiconductor substrate, is supported. A showerhead 9700 forms an upper wall or is mounted beneath an upper wall of the vacuum chamber 9650. The ceramic showerhead 9700 includes a gas plenum in fluid communication with a plurality of showerhead gas outlets for supplying process gas to the interior of the vacuum chamber 9650. The showerhead 9700 is in fluid communication with a gas delivery system 9606. Furthermore, the showerhead 9700 may comprise a central opening configured to receive a central gas injector (also referred to as nozzle), 9714. An RF energy source energizes the process gas into a plasma state to process the semiconductor substrate. The flow rate of the process gas supplied by the central gas injector and the flow rate of the process gas supplied by the ceramic showerhead can be independently controlled. The showerhead 9700, the gas delivery system 9606 and the central gas injector 9714 may be made from the multilayer sintered ceramic body as disclosed herein.

System 9600 may further include an electrostatic chuck 9608 that is designed to carry a wafer 50. The chuck 9608 may comprise a puck 9609, for supporting the wafer 50. The puck 9609 may be formed from a dielectric material and may have a chucking electrode disposed within the puck proximate a support surface of the puck 9609 to electrostatically retain the wafer 50 when disposed on the puck 9609. The chuck 9608 may comprise a base 9611 having a ring-like extending to support the puck 9609; and a shaft 9610 disposed between the base and the puck to support the puck above the base such that a gap is formed between the puck 9609 and the base 9610, wherein the shaft 9610 supports the puck proximate a peripheral edge of the puck 9609. Chuck 9608 and puck 9609 may be made from the multilayer sintered ceramic body as disclosed herein.

Parts of the surface of the showerhead 9700 may be covered with a shield ring 9712. Parts of the surface of the showerhead 9700, especially radial sides of the surface of the showerhead 9700 may be covered with a top shield ring 9710. Shield ring 9712 and top shield ring 9710 may be made from the multilayer sintered ceramic body as disclosed herein.

Parts of the supporting surface of the puck 9609 may be covered with a cover ring 9614. Further parts of the surface of the puck 9609 may be covered with a top shield ring 9612 and/or a shield ring 9613. Shield ring 9613, cover ring 9614 and top shield ring 9612 may be made from the multilayer sintered ceramic body as disclosed herein.

The aforementioned corrosion resistant, multilayer sintered ceramic components, comprising at least one composite oxide second layer 102 of high strength and CTE within a specific range, may lend themselves to fabrication of large corrosion resistant, multilayer sintered components of dimensions from 100 mm to about 625 mm, with regard to the greatest dimension of the sintered body.

### Apparatus/ Spark Plasma Sintering Tool

The apparatus for preparing the multilayered ceramic sintered bodies disclosed herein is preferably a spark plasma sintering (SPS) tool comprising: a die comprising a sidewall comprising an inner wall and an outer wall, wherein the inner wall has a diameter that defines an inner volume capable of receiving at least one ceramic powder; and an upper punch and a lower punch operably coupled with the die, wherein each of the upper punch and the lower punch have an outer wall defining a diameter that is less than the diameter of the inner wall of the die thereby creating a gap between each of the upper punch and the lower punch and the inner wall of the die when at least one of the upper punch and the lower punch are moved within the inner volume of the die, wherein the gap is from 10 µm to 70 µm wide and the yttrium oxide powder has a specific surface area (SSA) of from 1 to 10 m²/g as measured according to ASTM C1274.

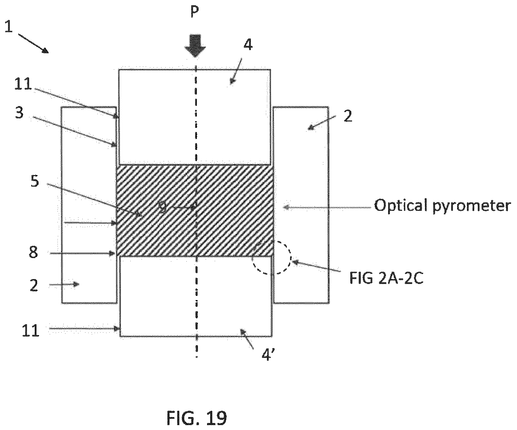

FIG. 19 depicts an SPS tool 1 with a simplified die/punch arrangement used for sintering ceramic powders. Typically, the die/punch arrangement is within a vacuum chamber (not shown) as will be recognized by one of ordinary skill in the art. Referring to FIG. 19, the spark plasma sintering tool 1 comprises a die system 2 comprising a sidewall comprising an inner wall 8 having a diameter that defines an inner volume capable of receiving a yttrium oxide powder 5.

Still referring to FIG. 19, the spark plasma sintering tool **1** comprises an upper punch **4** and a lower punch **4'** operably coupled with the die system **2,** wherein each of the upper punch **4** and the lower punch **4'** have an outer wall **11** defining a diameter that is less than the diameter of the inner wall **8** of the die system **2** thereby creating a gap **3** between each of the upper punch **4** and the lower punch **4'** and the inner wall **8** of the die system **2** when at least one of the upper punch **4** and the lower punch **4'** are moved within the inner volume of the die system **2.**

The die system **2** and upper **4** and lower **4'** punches may comprise at least one graphite material. In certain embodiments, the graphite material/s disclosed herein may comprise at least one isotropic graphite material. In other embodiments, the graphite material/s disclosed herein may comprise at least one reinforced graphite material such as for example a carbon-carbon composite, and graphite materials comprising fibers, particles or sheets or mesh or laminates of other electrically conductive materials such as carbon in a matrix of an isotropic graphite material. In other embodiments, the die and upper and lower punches may comprise combinations of these isotropic and reinforced graphite materials.

The graphite materials used for some or all of the parts of the tool such as, for example, die **6** and punches **4** and **4'** may comprise porous graphite materials which exhibit a porosity of from about 5 % to about 20%, from about 5 % to about 17 %, from about 5 % to about 13 %, from about 5 % to about 10 %, from 5 % to about 8 %, from about 8 % to about 20 %, from about 12 % to 20 %, from about 15 % to about 20 %, from about 11 % to about 20 %, from about 5 % to 15 %, from 6 % to about 13 %, and preferably from about 7% to about 12 %.

Preferably, the graphite material has an average pore size (pore diameter) of from 0.4 to 5.0 µm, preferably from 1.0 to 4.0 µm and comprises pores with a surface pore diameter of up to 30 µm, preferably up to 20 µm, preferably up to 10 µm. More preferably, pores with a surface pore diameter of from 10 to 30 µm may be present.

The graphite materials used for the tool as disclosed herein may have an average grain size of < 0.05 mm, preferably < 0.04 mm, preferably < 0.03 mm, preferably < 0.028 mm, preferably < 0.025 mm, preferably < 0.02 mm, preferably < 0.018 mm, preferably < 0.015 mm, and preferably < 0.010 mm.

The graphite materials used for the tool as disclosed herein may have an average grain size of > 0.001 mm, preferably > 0.003 mm, preferably > 0.006 mm, preferably > 0.008 mm, preferably > 0.010 mm, preferably > 0.012 mm, preferably > 0.014 mm, preferably > 0.020 mm preferably > 0.025 mm and preferably > 0.030 mm.

The graphite materials used for the tool as disclosed herein may have a density of ≥ 1.45 g / cm³, preferably ≥ 1.50 g / cm³, preferably ≥ 1.55 g / cm³, preferably ≥ 1.60 g / cm³, preferably ≥ 1.65 g / cm³, preferably ≥ 1.70 g / cm³, and preferably ≥ 1.75 g / cm³.

The graphite materials used for the tool as disclosed herein may have a density of ≤ 2.0 g / cm³, preferably 1.90 g / cm³, preferably ≤ 1.85 g / cm³ and preferably ≤ 1.80 g / cm³.

In embodiments, the graphite materials have a coefficient of thermal expansion (CTE) across a temperature range from about 400 to about 1400°C of ≥ 3.3 x 10⁻⁶/°C, ≥ 3.5 x 10⁻⁶/°C, ≥ 3.7 x 10⁻⁶/°C, ≥ 4.0 x 10⁻⁶/°C, ≥ 4.2 x 10⁻⁶/°C, ≥ 4.4 x 10⁻⁶/°C, ≥ 4.6 x 10⁻⁶/°C, ≥ 4.8 x 10⁻⁶/°C.

In embodiments, the graphite materials may have a coefficient of thermal expansion (CTE) across a temperature range from about 400 to 1400°C of ≤ 7.2 x 10⁻⁶/°C, preferably ≤ 7.0 x 10⁻⁶/°C, preferably ≤ 6.0 x 10⁻⁶/°C, preferably ≤ 5.0 x 10⁻⁶/°C, preferably ≤ 4.8 x 10⁻⁶/°C, and preferably ≤ 4.6 x 10⁻⁶/°C.

Table A lists properties of exemplary graphite materials as disclosed herein.

**Table A**

| Property | Range |
|---|---|
| Density (g/cc) | 1.45 to 2.0 |
| Average Grain Size (um) | 1 to < 50 |
| Resistivity (Ohm- cm) | 0.001 to 0.003 |
| Flexural Strength (MPa) | 40 - 160 |
| Compressive Strength (MPa) | 80 - 260 |
| CTE (x10⁻⁶/C) at 400°C to 1400°C | 3.3 to 7 |
| Porosity % | 5 to 20 |
| Average Pore Diameter (um) | 0.4 to 5 |
| Thermal K (W/m K) | 40-130 |
| Shore Hardness (HSD) | 55 to 59 |
| Tensile Strength (MPa) | 25 to 30 |
| Elastic Modulus (GPa) | 9 to 11 |
| Impurities / Ash (ppm) | 3 to 500 |

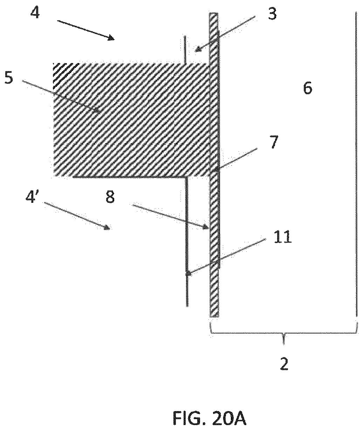

The die system **2** comprises a die **6** and optionally but preferably at least one conductive foil **7** located on the inner wall of the die as depicted in the embodiments of FIGS. 20A to 20C. The number of conductive foils on the inner wall of the die is not limited and 1, 2, 3, 4, 5, 6, 7, 8, 9, or 10 conductive foils may be provided as a circumferential liner between die **6** and each of upper **4** and lower **4'** punches whereby the inner wall **8** of the die system **2** (including the at least one conductive foil, if present) and the outer wall **11** of each of the upper and lower punches defines the gap **3.** The at least one conductive foil **7** may comprise graphite, niobium, nickel, molybdenum, platinum and other ductile, conductive materials and combinations thereof which are stable within the temperature range according to the method as disclosed herein.

In certain embodiments, the conductive foil may comprise a flexible and compressible graphite foil as disclosed herein having one or more of the following characteristics:
- carbon content of more than 99 wt%, preferably more than 99.2 wt%, more preferably more than 99.4 wt%, more preferably more than 99.6 wt%, more preferably more than 99.8 wt%, more preferably more than 99.9 wt%, more preferably more than 99.99 wt%, and more preferably more than 99.999 wt%;
- impurities of less than 500 ppm, preferably less than 400 ppm, more preferably less than 300 ppm, more preferably less than 200 ppm, more preferably less than 100 ppm, more preferably less than 50 ppm, more preferably less than 10 ppm, more preferably less than 5 ppm, and more preferably less than 3 ppm;
- tensile strength of the graphite foil in a range of from 4.0 to 6.0 MPa, preferably from 4.2 to 5.8 MPa, and more preferably from 4.4 or 5.6 MPa; and/or
- bulk density of the graphite foil preferably in a range of from 1.0 to 1.2 g/cc, preferably 1.02 to 1.18 g/cc, more preferably 1.04 to 1.16 g/cc, and more preferably 1.06 to 1.16 g/cc.

In embodiments, the at least one foil typically comprises graphite. In certain embodiments, the at least one foil as part of the die system may comprise a circumferential liner between a surface of the die and each of the upper and lower punches.

The graphite foils may improve the temperature distribution across the powder during sintering. Table B lists properties of exemplary graphite foils according to embodiments as disclosed herein such as Neograf Grafoil^{®}, Sigraflex^{®} graphite foils, and Toyo Tanso Perma-Foil^{®}.

**Table B**

| | |
|---|---|
| Thickness (mm) | 0.030 to 0.260 |
| Density (Mg/m3) | 0.5 to 2 |
| Tensile Strength (MPa) | 4.9 - 6.3 |
| Resistivity (µOPhm-m; 25°C) (parallel to surface) | 5 to 10 |
| Resistivity (µOhm-m; 25°C) (perpendicular to surface) | 900 to 1100 |
| CTE (x10-6/C; parallel to surface) at 350°C to 500°C | 5 to 5.5 |
| CTE (perpendicular to surface) at 350°C to 500°C | 2 x 10⁻⁴ |
| Compressibility (%) | 40 - 50 |
| Recovery (%) | 10 to 20 |
| thermal conductivity (W/mK at 25°C; parallel to surface) | 175 to 225 |
| thermal conductivity (W/mK at 25°C; perpendicular to surface) | ∼5 |
| Impurities / Ash (wt %) | < 0.5 |

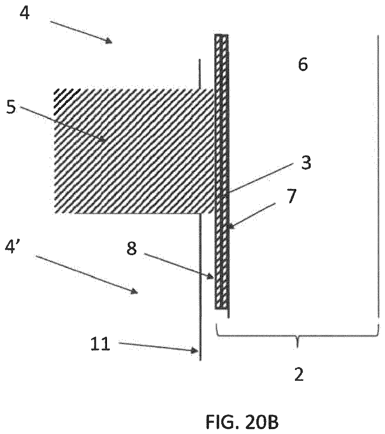

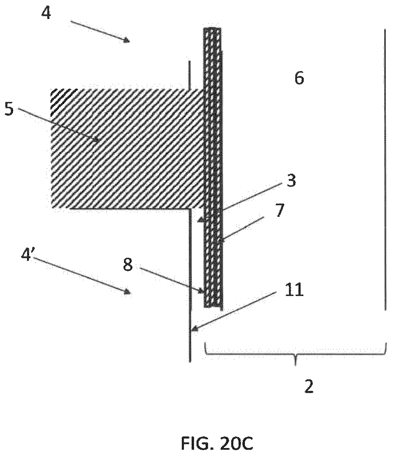

Referring now to FIGS. 20A, 20B and 20C, an SPS tool set with embodiments of the graphite foil arrangement is shown. A ceramic powder or mixture of powders **5** is disposed between at least one of upper and lower punches **4** and **4'** and gap **3** is shown between the outer wall **11** of each of the upper and lower punches and the inner wall **8** of the die system **2.** FIGS. 20A, 20B and 20C depict 1 to 3 layers of conductive foil **7** respectively and die **6** as part of the die system **2.** Accordingly, the gap extends from the inner wall **8** of the die system **2** to the outer wall **11** of each of the upper and lower punches. The gap distance is arranged such that the powder may degas before and/or during heating and sintering, while also maintaining ohmic contact between punch and die to improve the temperature distribution across the ceramic powder during heating and sintering.

The graphite foils **7** may have a thickness of, for example, from 0.025 to 0.260 mm, preferably from 0.025 to 0.200 mm, preferably from 0.025 to 0.175 mm, preferably from 0.025 to 0.150 mm, preferably from 0.025 to 0.125 mm, preferably from 0.035 to 0.200 mm, preferably from 0.045 to 0.200 mm, and preferably from 0.055 to 0.200 mm.

The distance of gap **3** is measured from an inwardly facing surface of the foil **7** closest to the upper and lower punches **4** and **4'** to the outer wall **11** of each of the upper and lower punches. Preferred ranges for the distance of gap **3** are preferably from 10 to 70 µm, preferably from 10 to 60 µm, preferably from 10 to 50 µm, preferably from 30 to 70 µm, preferably from 20 to 60 um, and preferably from 30 to 60 µm.

Moreover, the width of gap 3 between the inner wall 8 of the die system 2 and the outer wall 11 of each of the upper 4 and lower 4' punches may be determined by the person skilled in the art so that the powder degassing during the preheating, heating and sintering processes are sufficiently facilitated on one hand and that a sufficient electrical contact for Joule or resistive heating and, thereby, sintering is achieved on the other hand. If the distance of gap 3 is less than 10 µm, the force required to move at least one of the upper and lower punches within the inner volume of the die system, and thereby assemble the tool set, may cause damage to the tool set. Further, a gap **3** of less than 10 um may not allow for escape of adsorbed gases, organics, humidity and the like within the powder **5** which would extend processing time during manufacturing and may result in residual porosity, and thereby lowered density, in the resulting sintered ceramic body. If the width of gap **3** is greater than 70 µm when sintering ceramic powders, localized overheating may occur, resulting in thermal gradients within the tool set during sintering. As a result, in order to form a sintered ceramic body (such as that disclosed herein) of a large dimension, a gap of from 10 to 70 um is preferable. Thus, in some embodiments, the distance of the gap **3** between the inner wall **8** of the die system **2** and the outer wall **11** of each of the upper and lower punches when sintering yttrium oxide powders is preferably from 10 to 70 µm, preferably from 10 to 60 µm, preferably from 10 to 50 µm, preferably from 10 to 40 µm, preferably from 20 to 70 µm, preferably from 30 to 70 µm, preferably from 40 to 70 µm, preferably from 50 to 70 um, preferably from 30 to 60 µm.

These thermal gradients may result in low overall or bulk density and high-density variations and a sintered ceramic body which is fragile and prone to breakage. As a result, the distance of gap **3** between the inner wall **8** of the die system **2** and the outer wall **11** of each of the upper and lower punches when sintering ceramic powders as disclosed herein is from 10 to 70 µm, preferably from 10 to 60 µm, preferably from 10 to 40 µm, preferably from 20 to 70 µm, preferably from 40 to 70 µm, preferably from 50 to 70 µm, preferably from 30 to 70 um, preferably from 40 to 60 µm. Without intending to be bound by a particular theory, it is believed that the gap distance between the the inner wall **8** of the die system **2** and the outer wall **11** of each of the upper and lower punches during sintering functions to facilitate powder degassing of organics, moisture, adsorbed molecules, etc. during the sintering process. This leads to a sintered ceramic body, such as the multilayered body disclosed herein, of a large size having high density and low volumetric porosity, low density variation and improved mechanical properties such that the body may be easily handled without breakage. Sintered ceramic bodies made as disclosed herein may have dimensions of from 100 mm to 610 mm with regard to the greatest dimension of the sintered ceramic body.

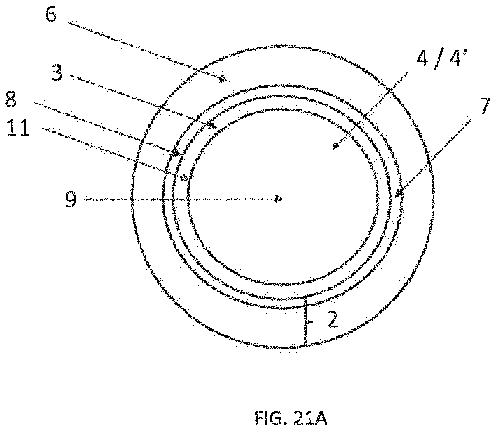

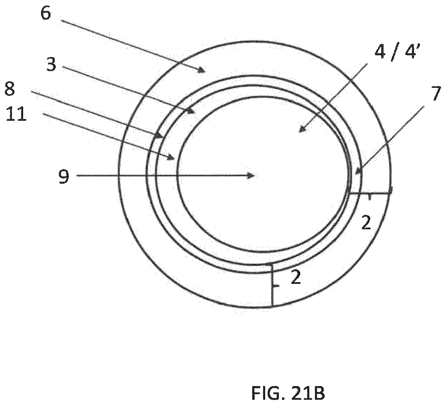

In practice, the upper and lower punches **4** and **4'** are not always perfectly aligned about a central axis. FIG. 4A and FIG. 4B are plan views of the tool set **1,** illustrating alignments of upper and lower punches **4** and **4',** gap **3,** any number of conductive foils **7,** and die system **2** about central axis **9.** In embodiments as depicted in FIG. 21A, the gap may be axisymmetric about central axis **9.** In other embodiments as depicted in FIG. 21B, the gap may be asymmetric about central axis, **9.** The gap **3** may extend between from 10 um to 70 um when sintering the ceramic powder to form a sintered ceramic body as disclosed herein, in both axisymmetric and asymmetric embodiments as depicted.

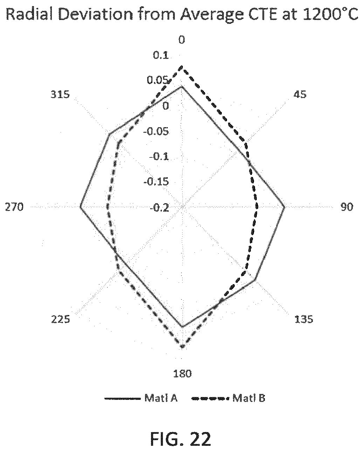

Gap asymmetry performance can be measured by performing an absolute radial CTE deviation analysis over a range of temperatures. For example, FIG. 22 shows the radial deviation from average CTE of two isotropic graphite materials (A and B) used as the punches and die of the apparatus disclosed herein at 1200 °C. FIG. 22 shows that for a material to be successful at maintaining the desired gap over a large temperature range, the radial deviation cannot vary in the x-y plane by > 0.3 x 10-6 at the maximum from, e.g., room temperature to 2000 °C. Material B displays an unacceptable CTE expansion in the x-y plane whereas Material A exhibited an acceptable CTE expansion throughout the temperature range.

The advantages of the specific tool set design used according to an embodiment may lead to the overall technical effect to provide a large ceramic body of very high purity and having a high and uniform density and low volumetric porosity and thereby a reduced tendency towards breakage in the sintering process, in particular in the SPS process, according to the present disclosure. Therefore, all features disclosed with respect to the tool set also apply to the product of a sintered ceramic body of dimension greater than 100 mm.

By using the tool set as disclosed herein it becomes possible to achieve a more homogeneous temperature distribution in the ceramic powder **5** to be sintered, and make a sintered ceramic body, in particular one of large dimension, exceeding for example 100 mm and/or 200 mm in greatest dimension, having very high (> 98% of theoretical density of yttrium oxide) and uniform density (< 4% variation across a greatest dimension) and thereby a reduced tendency towards breakage. The word "homogeneous" means that a material or system has substantially the same property at every point; it is uniform without irregularities. Thus, by "homogeneous temperature distribution" is meant that the temperature distribution is spatially uniform and does not have considerable gradients, i.e., a substantially uniform temperature exists regardless of position in a horizontal x-y plane along the ceramic powder **5.**

The tool set as disclosed may further comprise spacer elements, shims, liners and other tool set components. Typically, such components are fabricated from at least one of the graphite materials having the properties as disclosed herein.

### Method of Preparing

Preparation of the multilayer sintered ceramic body may be achieved by use of pressure assisted sintering, such as for example Spark Plasma Sintering (SPS), also known as Field Assisted Sintering Technology (FAST), or Direct Current Sintering (DCS). These direct current sintering and related techniques employ a direct current to heat up an electrically conductive die configuration or tool set, and thereby a material to be sintered. This manner of heating allows the application of very high heating and cooling rates, enhancing densification mechanisms over grain growth promoting diffusion mechanisms, which may facilitate preparation of ceramic sintered bodies of very fine grain size, and transferring the intrinsic properties of the original powders into their near or fully dense products. The direct current, pressure assisted methods as disclosed herein utilize a preferably unpulsed, continuous direct current.

Disclosed is a method of making a multilayer sintered ceramic body, the method comprising the steps of: a) combining yttria powder and alumina powder to make a first powder mixture, b) combining zirconia powder and alumina powder to make a second powder mixture, c) calcining the first and second powder mixtures by applying heat to raise the temperature of the powder mixtures to a calcination temperature and maintaining the calcination temperature to perform calcination to form first and second calcined powder mixtures, d) combining first and second calcined powder mixtures to make a third calcined powder mixture, e) separately disposing the first, second and third calcined powder mixtures inside a volume defined by a tool set of a sintering apparatus to form at least one layer of the first calcined powder mixture, at least one layer of the second calcined powder mixture, and at least one layer of the third calcined powder mixture, and creating vacuum conditions inside the volume, and f) applying pressure to the layers of the first, second and third calcined powder mixtures while heating to a sintering temperature and performing sintering to form the multilayer sintered ceramic body, wherein the at least one layer of the first calcined powder mixture forms a first layer 100, the at least one layer of the second powder mixture forms a second layer 102, and the at least one layer of the third powder mixture forms a third layer 103, and g) lowering the temperature of the multilayer sintered ceramic body, wherein the first layer 100 comprises YAG, the second layer 102 comprises Al₂O₃ and ZrO₂ wherein the ZrO₂ is present in an amount of not less than 10 % ZrO₂ by volume and not greater than 25% ZrO₂ by volume, and the third layer 103 comprises combinations of the first layer and the second layer, wherein the second layer 102 is disposed between the first layer 100 and the third layer 103, wherein the absolute value of the coefficient of thermal expansion (CTE) of the first, second and third layers differ in an amount of from 0 to less than 0.6 x 10⁻⁶/°C as measured in accordance with ASTM E831. In embodiments, the method further comprises the optional steps of: g) annealing the multilayer sintered ceramic body by applying heat to raise the temperature of the multilayer sintered ceramic body to reach an annealing temperature, performing annealing, h) lowering the temperature of the annealed multilayer sintered ceramic body and i) machining the multilayer ceramic sintered body or the annealed multilayer ceramic sintered body to create a sintered ceramic component in the shape of a dielectric window or RF window, a focus ring, a nozzle or a gas injector, a shower head, a gas distribution plate, an etch chamber liner, a plasma source adapter, a gas inlet adapter, a diffuser, an electronic wafer chuck, a chuck, a puck, a mixing manifold, an ion suppressor element, a faceplate, an isolator, a spacer, and/or a protective ring in etch and deposition chambers.

Step a) of the method as disclosed herein comprises combining yttria powder and alumina powder to make a first powder mixture; the starting powder materials comprising the first powder mixture including yttrium oxide and aluminum oxide for forming the first layer 100 are preferably high purity commercially available powders. However, other oxide powders may be used, for example those produced from chemical synthesis processes and related methods.

The d10 particle size of the yttrium oxide powder used as a starting material according to one embodiment of the present invention is preferably from 1 to 7 µm, preferably from 1 to 6 µm, preferably from 1 to 5 µm, preferably from 2 to 7 µm, preferably from 3 to 7 µm, preferably from 4 to 7 µm, preferably from 5 to 7 µm.

The d50 particle size of the yttrium oxide powder used as a starting material according to one embodiment of the present invention is preferably from 3 to 11 µm, preferably from 3 to 9.5 µm, preferably from 3 to 8.5 µm, preferably from 3 to 7.5 µm, preferably from 4 to 11 µm, preferably from 5 to 11 µm, preferably from 6 to 11 µm, and preferably from 7 to 11 µm.

The d90 particle size of the yttrium oxide powder used as a starting material according to one embodiment of the present invention is preferably from 6 to 20 µm, preferably from 6 to 18 µm, preferably from 6 to 16 µm, preferably from 8 to 20 µm, preferably from 10 to 20 µm, preferably from 15 to 20 µm, preferably from 8 to 18 µm, and preferably from 10 to 18 µm.

The yttrium oxide powder usually has a specific surface area (SSA) of from 0.75 to 12 m²/g, preferably from 0.75 to 10 m²/g, preferably from 0.75 to 8 m²/g, preferably from 0.75 to 6 m²/g, preferably from 0.75 to 4 m²/g, preferably from 0.75 to 2 m²/g, preferably from 1 to 6 m²/g, preferably from 1 to 4 m²/g, preferably from 2 to 10 m²/g, preferably from 4 to 10 m²/g, preferably from 6 to 10 m²/g, and preferably from 1 to 4 m²/g.

The purity of the yttrium oxide starting material is preferably higher than 99.99%, preferably higher than 99.995%, preferably higher than 99.999%, more preferably higher than 99.9995%, and more preferably higher than 99.9999%. This corresponds to impurity levels of 100 ppm and less, preferably 50 ppm and less, preferably 25 ppm and less, preferably 10 ppm and less, more preferably about 1 ppm, preferably from 1 to 100 ppm, preferably from 1 to 50 ppm, preferably from 1 to 25 ppm, preferably from 1 to 10 ppm, and preferably from 1 to 5 ppm, each relative to a total mass of the yttrium oxide starting material.

The d10 particle size of the aluminum oxide powder used as a starting material according to one embodiment of the present invention is preferably from 0.05 to 4 µm, preferably from 0.05 to 3 µm, preferably from 0.05 to 2 µm, preferably from 0.05 to 1 µm, preferably from 0. 05 to 0.75 µm, preferably from 0.05 to 0.5 µm, preferably from 0.2 to 4 µm, preferably from 0.2 to 3 µm, preferably from 0.2 to 2 µm, preferably from 0.2 to 1 µm, preferably from 0.4 to 4 µm, preferably from 0.4 to 3 µm, preferably from 0.4 to 2 µm, preferably from 0.4 to 1 µm, preferably from 0.75 to 2 µm, preferably from 0.75 to 3 µm, preferably from 1 to 3 µm, and preferably from 2 to 3 µm.

The d50 particle size of the aluminum oxide powder used as a starting material according to one embodiment is usually from 0.15 to 8 µm, preferably from 0.15 to 5 µm, preferably from 0.15 to 3 µm, preferably from 0.15 to 1 µm, preferably from 0.15 to 0.5 µm, preferably from 1 to 8 µm, preferably from 1 to 6 µm, preferably from 1 to 4 µm, preferably from 2 to 6 µm, preferably from 3 to 8 µm, preferably from 4 to 8 µm, preferably from 5 to 8 µm, and preferably from 3.5 to 6.5 µm.

The d90 particle size of the aluminum oxide powder used as a starting material according to one embodiment of the present invention is from 0.35 to 60 um, preferably from 0.35 to 10 um, preferably from 0.35 to 5 µm, preferably from 0.35 to 3 µm, preferably from 0.35 to 1 µm, preferably from 0.35 to 0.75 µm, preferably from 3 to 80 um, preferably from 3 to 60 µm, preferably from 3 to 40 µm, preferably from 3 to 20 µm, preferably from 10 to 60 µm, preferably from 10 to 40 µm, preferably from 10 to 30 µm, preferably from 10 to 20 µm, preferably from 30 to 60 µm, preferably from 15 to 60 µm, preferably from 40 to 60 µm, and preferably from 6 to 15 µm.

The aluminum oxide powder usually has a specific surface area of from 3 to 18 m²/g, preferably from 3 to 16 m²/g, preferably from 3 to 14 m²/g, preferably from 3 to 12 m²/g, preferably from 3 to 10 m²/g, preferably from 3 to 6 m²/g, preferably from 6 to 18 m²/g, preferably from 6 to 14 m²/g, preferably from 8 to 18 m²/g, preferably from 10 to 18 m²/g, preferably from 8 to 10 m²/g, preferably from 4 to 9 m²/g, preferably from 5 to 10 m²/g, and preferably from 6 to 8 m²/g.

The purity of the aluminum oxide starting material is typically higher than 99.99%, preferably higher than 99.995%, preferably higher than 99.999%, preferably higher than 99.9995%, as measured using ICPMS methods. Correspondingly, the impurity content of the alumina powder may be 100 ppm and less, preferably 50 ppm and less, preferably 25 ppm and less preferably 10 ppm and less, and more preferably 5 ppm and less, each relative to a total mass of the aluminum oxide starting material.

The yttria and alumina powders are combined in a first powder mixture to form the YAG crystalline phase upon sintering. For example, a preferred powder mixture composition to form YAG is a stoichiometric first powder mixture of 37.5 mol % yttrium oxide and 62.5 mol % aluminum oxide. Studies reported in "Mechanisms of nonstoichiometry in Y3Al5O12" Patel et al, 2008, Appl. Phys. Lett. 93, 191902 (2008) indicated that the width of the phase domain for formation of the YAG phase may have a variance of 0.1 mol % and less. Thus, deviations in powder mixture compositions of 0.1 mol % and less from that of stoichiometric YAG (37.5% alumina/62.5% yttria) may result in formation of phase pure yttrium aluminum oxide garnet (YAG). Accordingly, in embodiments a multilayer sintered ceramic body comprising a first layer 100 comprising yttrium aluminium garnet (YAG) garnet cubic phase (Y3Al5O12) in an amount of greater than 99% by volume may be formed from starting powders combined into a powder mixture in a ratio of from 37.4 to 37.6 mol % yttrium oxide and 62.6 and 62.4 % mol aluminum oxide.

Combining the alumina and yttria powders to make a powder mixture may be performed using the conventional powder preparation techniques of ball milling, wet mixing and dry mixing. Ball milling may be accomplished using alumina media as one example and conducted according to methods as known to those skilled in the art. In other instances, a harder media such as zirconium oxide may be used. Use of ball milling is a high energy process which breaks down particulates and agglomerates and may provide for a homogeneous powder mixture prior to calcination. Ball milling may be performed either in wet or dry conditions. Wet mixing may be performed using various solvents, for example ethanol or water, with minimal or no media during mixing, and may be conducted according to methods as known to those skilled in the art. Wet mixing provides for improved dispersion of the powders through increased mobility, resulting in fine scale, uniform mixing before heat treatment or calcination. Dry mixing may be conducted with or without media according to purity requirements in the final ceramic sintered body, and performed in accordance with methods known to those skilled in the art. Jet milling processes as known to those skilled in the art may also be used to thoroughly mix the powders to form a powder, powder mixture or calcined powder mixture having a narrow particle size distribution. Jet milling uses high velocity jets of either inert gases or air to collide particles of the starting powders and/or powder mixtures and/or calcined powder mixtures without the use of milling or mixing media, thus preserving initial purity of the powder to be milled. The jet milling chamber may be designed such that larger particles may be preferentially reduced in size, which may provide a narrow particle size distribution in the final powders, powder mixture or calcined powder mixture. Powders exit the jet milling chamber upon reaching a desired particle size as determined at setup of the machine prior to processing. Starting powders, powder mixtures and/or calcined powder mixtures as disclosed herein may be subjected to jet milling at pressures of about 100 psi, whether separately, or in combination with any, or all of, the as disclosed powder milling/mixing processes as disclosed herein.

The additional powder preparation procedures of attrition milling, high shear mixing, planetary milling, and other known procedures may also be applied. The powder slurries are dried according to known methods. The aforementioned powder preparation techniques may be used alone or in any combination thereof, or upon more than one powder mixture which are thereafter combined into a final, ceramic sintered body.

In embodiments, the multilayer sintered ceramic body may comprise a first layer 100 comprising magnesium aluminate spinel or at least one crystalline phase comprising yttria and zirconia, wherein the zirconia is present in an amount of not less than 10 mol % ZrO₂ and not greater than 25 mol % ZrO2. As such, the first powder mixture according to step a) of the method may in embodiments comprise zirconium oxide or magnesium oxide powders.

The zirconium oxide powder forming a corrosion resistant layer comprising yttria and zirconia may have the characteristics according to the second powder mixture of step b) of the method.

The average or d50 particle size of the magnesium oxide powder used as a starting material according to one embodiment of the present invention is typically from 1.5 to 5.5 µm, from 2 to 5.5 µm, from 2.5 to 5.5 µm, from 3 to 5.5 µm, from 1.5 to 5 µm, from 1.5 to 4.5 µm, more preferably from 2 to 4.5 µm.

The d90 particle size of the magnesium oxide powder used as a starting material according to one embodiment of the present invention is typically from 4 to 9 µm, preferably from 5 to 9 µm, preferably from 6 to 9 µm, preferably from 4 to 8 µm preferably from 4 to 7 µm and more preferably from 5 to 7.5 µm.

The magnesium oxide powder usually has a specific surface area of from 0.5 to 10 m²/g, preferably from 0.5 to 8 m²/g, preferably from 0.5 to 6 m²/g, preferably from 1 to 10 m²/g preferably from 2 to 10 m²/g preferably from 3 to 10 m²/g and more preferably from 2 to 6 m²/g. The purity of the magnesium oxide starting material is preferably higher than 99.99%, preferably higher than 99.995%, more preferably higher than 99.9975%, preferably higher than 99.999%, preferably higher than 99.9992% as measured using ICPMS methods as known in the art. Correspondingly the impurity content of the magnesia powder may be 100 ppm and less, preferably 50 ppm and less, preferably 25 ppm and less, and preferably about 14 ppm.

Step b) of the method as disclosed herein comprises combining zirconia and alumina to make a second powder mixture; the starting powder materials comprising the second powder mixture are combined and mixed in proportions such that the second powder mixture upon sintering forms the composite oxide second layer 102 wherein the zirconia is present in the second layer in an amount of not less than 10 volume % ZrO₂ and not greater than 25 volume % ZrO₂, and the balance comprising Al₂O₃. The powders selected to form the composite oxide second layer 102 are preferably high purity commercially available powders. However, other oxide powders may be used, for example those produced from chemical synthesis processes and related methods.

The zirconium oxide powder may have a particle size distribution having a d10 of from 0.08 to 0.20 um, a d50 of from 0.3 to 0.7 um and a d90 of from 0.9 to µm. The average particle size of the zirconium oxide powder used as a starting material for the mixture according to one embodiment of the present invention may be from 0.3 to 1 um.

The zirconia powder typically has a specific surface area of from 1 to 18 m²/g, preferably from 4 to 18 m²/g, preferably from 6 to 18 m²/g, preferably from 4 to 16 m²/g, preferably from 4 to 14 m²/g, and more preferably from 5 to 16 m²/g.

The purity of the zirconia powder material is typically higher than 99.5%, preferably higher than 99.8%, preferably higher than 99.9%, preferably higher than 99.99%, preferably higher than 99.995%, preferably higher than 99.999%. This corresponds to a total impurity content of 5000 pm and less, preferably 2000 ppm and less, preferably 1000 ppm and less, preferably 100 ppm and less, preferably 50 ppm and less, preferably 10 ppm and less.

Zirconia as used according to embodiments disclosed herein comprises Hf in an amount of about 2 to 5 mol % as is common in many commercially available zirconia powders. In order to enhance toughness performance of the composite oxide through control of the tetragonal to monoclinic phase transformation as known to those skilled in the art, the zirconia may be fully yttria stabilized (about 8 mol % and greater yttria), partially stabilized (less than 8 mol % yttria) by using yttria, or unstabilized zirconia (comprising no yttria). Thus, in embodiments when fully stabilized, the zirconia may comprise from about 1 to 10 mol % yttria, preferably from 1 to 8 mol % yttria, preferably from 1 to 5 mol % yttria, preferably from 2 to 4 mol % yttria, preferably from 8 to 10 mol % yttria. In certain embodiments, the second powder mixture forming the composite oxide second layer comprises zirconia selected from the group consisting of unstabilized, partially yttria stabilized or fully yttria stabilized zirconia. In embodiments, the zirconia comprising the second powder mixture forming the composite oxide second layer 102 comprises about 3 mol % and less yttria and is partially stabilized.

The alumina powder comprising the second powder mixture has the characteristics as disclosed in step a) of the method.

The mixing processes for step b) were performed in accordance with the procedures as disclosed in step a) of the method.

The d50 as used herein is defined as the median and represents the value where half of the particle size distribution resides above this point, and half resides below this point. Similarly, 90 percent of the distribution lies below the d90, and 10 percent of the distribution lies below the d10.

The starting powders as disclosed herein of yttria, zirconia and alumina are preferably crystalline, and thereby have a long-range crystallographic order. Either or all of the starting powders of yttria, zirconia and alumina may be sieved, tumbled, blended, milled, etc. according to methods known to those skilled in the art. In some embodiments, the starting powders of yttria, zirconia and/or alumina may be optionally calcined according to methods as known to those skilled in the art. Starting powders, powder mixtures and calcined powder mixtures having high specific surface areas (SSAs) such as those nanopowders exceeding 20 m²/g pose issues in handleability when loading the tool set with powder, achieving uniform particle dispersion and mixing during the powder combination/mixing step, and formation of the first layer comprising the YAG phase during the in-situ, reactive sintering method to form YAG as disclosed in International Application No. PCT/US20/60918, which is herein incorporated by reference. The starting powders in accordance with the method as disclosed herein comprise yttria, zirconia and alumina and preferably have specific surface areas which are less than those of nanopowders as defined herein. Thus, it is preferable that the powder mixtures as disclosed herein are free of, or substantially free of nanopowders as disclosed herein, and have a specific surface area (SSA) of about 18 m2/g and less.

Starting powders, powder mixtures and/or calcined powder mixtures having specific surface areas of less than about 0.5 m²/g may suffer from agglomeration, require higher energy for mixing and longer mixing times to combine to form the powder mixtures as disclosed herein. Further, powders having surface areas in this range may reduce the driving force necessary for sintering to the high densities as disclosed herein. Thus, preferable are those starting powders, powder mixtures and/or calcined powder mixtures having surface areas of from about 0.75 m²/g to about 18 m²/g.

Combining the alumina, yttria and zirconia powders to make at least first and second powder mixtures in accordance with steps a and b may be performed by similar methods using the conventional powder preparation techniques of wet or dry ball milling, wet or dry tumble mixing and jet milling. Ball milling may be accomplished using alumina media as one example and conducted according to methods as known to those skilled in the art. In other instances, a harder media such as zirconium oxide may be used. Use of ball milling is a high energy process which breaks down particulates and agglomerates and may provide for a homogeneous powder mixture prior to calcination. Ball milling may be performed either in wet or dry conditions. Wet mixing may be performed using various solvents, for example ethanol or water, with minimal or no media during mixing, and may be conducted according to methods as known to those skilled in the art. Wet mixing provides for improved dispersion of the powders through increased mobility, resulting in fine scale, uniform mixing before heat treatment or calcination. Dry mixing may be conducted with or without media according to purity requirements in the final ceramic sintered body, and performed in accordance with methods known to those skilled in the art. Jet milling may be performed in accordance with the disclosure of step a) of the method. The additional powder preparation procedures of attrition milling, high shear mixing, planetary milling, and other known procedures may also be applied. The powder slurries are dried according to known methods. The aforementioned powder preparation techniques may be used alone or in any combination thereof, or upon more than one powder mixture which are thereafter combined into a final, ceramic sintered body.

Step c) of the method disclosed herein comprises calcining the first and second powder mixtures by applying heat to raise the temperature of the powder mixtures to a calcination temperature and maintaining the calcination temperature to perform calcination to form first and second calcined powder mixtures. This step may be conducted such that moisture may be removed and surface condition of the powder mixture is uniform prior to sintering. Calcination in accordance with the heat treatment step may be performed at temperatures of from 600°C to 1200 °C, preferably from 600 to 1100°C, preferably from 600 to 1000°C, preferably from 600 to 900°C, preferably from 700 to 1100°C, preferably from 800 to 1100°C, preferably from 800 to 1000°C, and preferably from 850 to 950°C. Calcination may be performed for durations of from 4 to 12 hours, preferably from 4 to 10 hours, preferably from 4 to 8 hours, preferably from 6 to 12 hours, preferably from 4 to 6 hours in an oxygen containing environment. After calcination, the powder mixtures may be sieved and/or tumbled and/or blended according to known methods to form at least the first and second calcined powder mixtures. Calcination may or may not result in a reduction in specific surface area.

The first calcined powder mixture may have a d10 particle size of preferably from 0.06 to 4 µm, preferably from 0.08 to 4 µm, preferably from 0.1 to 4 µm, preferably from 0.2 to 4 µm, preferably from 0.3 to 4 µm, preferably from 0.4 to 4 µm, preferably from 0.08 to 3 µm, preferably from 0.08 to 2 µm, preferably from 0.08 to 1 µm, preferably from 0.5 to 3 µm, preferably from 1 to 2 µm, preferably from 1 to 3 µm.

The second calcined powder mixture may have a d10 particle size of from 0.075 to 0.4 um, preferably from 0.075 to 0.3 um, preferably from 0.075 to 0.2 µm, preferably from 0.1 to 0.4 um, preferably from 0.1 to 0.3 um, preferably from 0.1 to 0.2 um, preferably about 0.2 um.

The first calcined powder mixture may have a d50 particle size of from 0.7 to 50 µm, preferably from 1 to 40 µm, preferably from 1 to 30 µm, preferably from 1 to 20 µm, preferably from 1 to 10 µm, preferably from 1 to 5 µm, preferably from 5 to 50 µm, preferably from 10 to 50 µm, preferably from 20 to 50 µm, preferably from 30 to 50 µm, preferably from 3 to 8 µm, preferably from 5 to 10 µm, preferably from 6 to 15 µm.

The second calcined powder mixture may have a d50 particle size of from 1 to 100 µm, preferably from 1 to 80 µm, preferably from 1 to 60 µm, preferably from 1 to 40 µm, preferably from 10 to 100 µm, preferably from 20 to 100 µm, preferably from 30 to 100 µm, preferably from 20 to 80 µm, preferably from 20 to 60 µm, preferably from 20 to 40 µm.

The first calcined powder mixture may have a d90 particle size of from 10 to 350 µm, preferably from 10 to 300 µm, preferably from 10 to 250 µm, preferably from 10 to 200 µm, preferably from 10 to 175 µm, preferably from 10 to 150 µm, preferably from 10 to 100 µm, preferably from 10 to 75 µm, preferably from 10 to 50 µm, preferably from 10 to 40 µm preferably from 10 to 25 µm, preferably from 20 to 350 µm, preferably from 40 to 350 µm, preferably from 60 to 350 µm, preferably from 100 to 350 µm, preferably from 150 to 350 µm, preferably from 200 to 350 µm, preferably from 12 to 330 um, preferably from 100 to 330 µm, preferably from 100 to 250 µm.

The second calcined powder mixture may have a d90 particle size of from 20 to 250 µm, preferably from 20 to 220 µm, preferably from 20 to 150 µm, preferably from 20 to 100 µm, preferably from 50 to 220 µm, preferably from 70 to 220 µm, preferably from 100 to 220 µm.

In certain embodiments, higher temperature calcination conditions as disclosed herein may result in formation of crystalline phases and agglomeration of the calcined powder mixtures and thus greater variability in particle size distributions overall and in particular larger variance and overall d50 and d90 particle sizes may result. In other embodiments, lower temperature calcination conditions as disclosed herein may not affect particle size distributions of the calcined powder mixtures relative to the starting materials and thereby particle size distributions are in the same range, or similar to, the starting powder materials. Lot to lot variation and management of heat transfer during calcination may also contribute to particle size distributions. Thus, a broad range of particle size distributions, and in particular d50 and d90 particle sizes of the powder mixtures, may result from calcination conditions as disclosed herein.

The first and second calcined powder mixtures may have a specific surface area (SSA) of from 2 to 12 m²/g, preferably from 2 to 10 m²/g, preferably from 2 to 8 m²/g, preferably from 2 to 6 m²/g, preferably from 4 to 12 m²/g, preferably from 6 to 12 m²/g, preferably from 8 to 12 m²/g, preferably from 4 to 10 m²/g, preferably from 6 to 10 m²/g, preferably from 8 to 10 m²/g, preferably from 3 to 9 m²/g, preferably from 2 to 8 m²/g, preferably from 4 to 8 m²/g, and preferably from 4 to 6 m²/g.

The first calcined powder mixture may have a total impurity content of from 5 to 200 ppm, preferably from 5 to 150 ppm, preferably less than 100 ppm, preferably less than 75 ppm, preferably less than 50 ppm, preferably less than 25 ppm, preferably less than 15 ppm, preferably less than 10 ppm, preferably less than 8 ppm, preferably less than 5 ppm, preferably from 5 to 50 ppm, preferably from 5 to 30 ppm, preferably from 3 to 20 ppm.

The second calcined powder mixture may have a total impurity content of from 5 to 200 ppm, preferably from 5 to 150 ppm, preferably less than 100 ppm, preferably less than 50 ppm, preferably less than 25 ppm, preferably less than 15 ppm, preferably from 10 to 100 ppm, preferably from 10 to 80 ppm, preferably from 10 to 60 ppm, preferably from 10 to 40 ppm, preferably from 20 to 80 ppm, preferably from 30 to 60 ppm.

Step d) of the method as disclosed herein comprises combining first and second calcined powder mixtures to make a third calcined powder mixture. In this step, the third calcined powder mixture is made from combinations of the first and second calcined powder mixtures in a range of combinations by weight to form the third layer 103, which may be CTE matched upon sintering to the first and second layers (100 and 102 respectively) of the multilayer sintered ceramic body. The third calcined powder mixture may comprise mixtures of the second calcined powder mixture (batched to form the composite oxide second layer upon sintering) and the first calcined powder mixture (batched to form the first layer comprising YAG upon sintering). The third calcined powder mixture may comprise the first calcined powder in an amount of not less than 10% and not greater than 60%, preferably not less than 20% and not greater than 60%, preferably not less than 30% and not greater than 60%, preferably not less than 40% and not greater than 60%, preferably not less than 45% and not greater than 55%, preferably about 50%, each by weight relative to the total weight of the third calcined powder mixture and the balance comprising the second calcined powder mixture.

In preferred embodiments, the third powder mixture comprises the first powder mixture (batched to form YAG upon sintering) in an amount of about 51% by weight, and the second calcined powder mixture comprising zirconia/alumina in about of about 49% by weight wherein the second calcined powder mixture comprises about 16% by volume of zirconia. The third calcined powder mixture upon sintering results in a multi-phase structure comprising the third layer 103.

The third calcined powder mixture may be dry ball milled, roller blended, and other similar mixing methods as known to those skilled in the art.

Step e) of the method disclosed herein comprises separately disposing the first, second and third calcined powder mixtures inside a volume defined by a tool set of a sintering apparatus to form at least one layer of the first calcined powder mixture, at least one layer of the second calcined powder mixture, and at least one layer of the third calcined powder mixture, and creating vacuum conditions inside the volume.

In preferred embodiments, the tool set comprises a die comprising a sidewall comprising an inner wall and an outer wall, wherein the inner wall has a diameter that defines a volume capable of receiving at least one calcined powder mixture; and an upper punch and a lower punch operably coupled with the die, wherein each of the upper punch and the lower punch have an outer wall defining a diameter that is less than the diameter of the inner wall of the die thereby defining a gap between each of the upper punch and the lower punch and the inner wall of the die when at least one of the upper punch and the lower punch are moved within the inner volume of the die, wherein the gap is from 10 µm to 70 µm wide. Preferably, the die and punches are made of graphite. Such SPS tool is disclosed in U.S. provisional patent application Serial No. 63/087,204, filed October 3, 2020, which is herein incorporated by reference.

In embodiments, three or more calcined powder mixtures may be disposed within the graphite die. Vacuum conditions as known to those skilled in the art are established within the calcined powder mixtures between the punches surrounded by the die. Typical vacuum conditions include pressures of 10⁻² to 10⁻³ torr. The vacuum is applied primarily to remove air to protect the graphite from burning and to remove a majority of the air from the powder. The order of powder mixture disposition may be reversed or repeated as necessary to achieve the desired structure of the multilayer sintered ceramic body and component formed therefrom. In preferred embodiments, the second calcined powder mixture is disposed between the first and third, and thus the second calcined powder mixture is contiguous with the first and third calcined powder mixtures during sintering. The at least first, second and third calcined powder mixtures may be directly loaded into the tool set of the sintering apparatus and sintered, without pre-sintering steps such as use of binders, dispersants and the like, which may contribute to contamination.

The process as disclosed utilizes commercially available, starting powders having micron-sized average or d50 particle size distributions or those prepared from chemical synthesis techniques without the requirement of forming a green body or machining the same prior to sintering.

The high densities and low porosities associated with the multilayer sintered ceramic bodies resulting from the disclosed process and powder materials are achieved without the use of binders or sintering aids in the initial powders. Other sintering techniques require use of sintering aids to lower sintering temperatures, which may adversely impact etch performance and densification. Polymeric binders are also often used to create the aforementioned green bodies, which may contribute to residual porosity and lower densities upon burn out. No binders or sintering aids are required in the making of the multilayer corrosion resistant bodies or components formed therefrom as disclosed herein. The combination of CTE matching of the respective layers and pressure assisted sintering is preferable to form the multilayer sintered ceramic bodies having the characteristics as disclosed herein, including high density and adhesion strength between layers.

Step f) of the method as disclosed herein comprises applying pressure to the layers of the first, second and third calcined powder mixtures while heating to a sintering temperature and performing sintering to form the multilayer sintered ceramic body, wherein the at least one layer of the first calcined powder mixture forms a first layer, the at least one layer of the second powder mixture forms a second layer, and the at least one layer of the third powder mixture forms a third layer, and g) lowering the temperature of the multilayer sintered ceramic body.

After the at least first, second and third calcined powder mixtures are disposed inside the volume of the die, pressure is applied axially to the calcined powder mixtures disposed between the graphite punches. The pressure is increased to a pressure of from 5 MPa to 100 MPa, preferably from 5 MPa to 60 MPa, preferably from 5 MPa to 40 MPa, preferably from 5 MPa to 20 MPa, preferably from 5 MPa to 15 MPa, preferably from 10 MPa to 60 MPa, preferably from 10 MPa to 40 MPa, preferably from 10 MPa to 30 MPa, preferably from 10 MPa to 20 MPa, preferably from 13 MPa to 18 MPa, preferably from 15 MPa to 60 MPa preferably from 15 MPa to 40 MPa, preferably from 15 MPa to 30 MPa, preferably from 20 to 40 MPa.

The application of heat to the powder mixture provided in the die facilitates sintering temperatures of from 1000 to 1700 °C, preferably from 1200 to 1700 °C, preferably from 1400 to 1700 °C, preferably from 1500 to 1700 °C, more preferably from 1600 to 1700 °C, preferably from 1200 to 1600 °C, preferably from 1200 to 1400 °C, preferably from 1400 to 1600 °C, preferably from 1500 to 1600 °C. Sintering may typically be achieved with a time of from 0.5 to 180 minutes, preferably from 0.5 to 120 minutes, preferably from 0.5 to 100 minutes, preferably from 0.5 to 80 minutes, preferably from 0.5 to 60 minutes, preferably from 0.5 to 40 minutes, preferably from 0.5 to 20 minutes, preferably from 0.5 to 10 minutes, preferably from 0.5 to 5 minutes, preferably from 5 to 120 minutes, preferably from 10 to 120 minutes preferably from 20 to 120 minutes preferably from 40 to 120 minutes preferably from 60 to 120 minutes, preferably from 80 to 100 minutes, preferably from 100 to 120 minutes preferably from 30 to 60 minutes, preferably from 15 to 45 minutes. In certain embodiments, sintering may be achieved with an isothermal time of zero and upon reaching the sintering temperature, a cooling rate as disclosed herein is initiated. According to process step g), the ceramic sintered body is passively cooled by removal of the heat source. Natural or forced convection may be used until a temperature is reached which may facilitate the optional annealing process.

In preferred embodiments, the calcined powder mixtures are heated directly by the punches and die of the sintering apparatus. The die and punches may be comprised of an electrically conductive material such as graphite, which facilitates resistive/joule heating. The sintering apparatus and procedures are disclosed in US 2010/0156008 A1, which is incorporated herein by reference.

In accordance with the method as disclosed, the at least one layer of the first calcined powder mixture, the at least one layer of the second calcined powder mixture and the at least one layer of the third calcined powder mixture are simultaneously formed in-situ into the first, second and third layers, respectively, of the multilayer sintered ceramic body during step f) of the method. Powders comprising the first powder mixture may be selected and combined in ratios to form (upon sintering) a first layer selected from the group consisting of YAG, magnesium aluminate spinel and at least one crystalline phase comprising yttria and zirconia, wherein the zirconia is present in an amount of not less than 10 mol % ZrO2 and not greater than 25 mol % ZrO2. This single step sintering of the first, second and third calcined powder mixtures into the first, second and third layers of the multilayer sintered ceramic body may provide enhanced interfacial adhesion, high mechanical strength and improved flatness of the multilayer sintered ceramic body. The CTE matching of the at least one composite oxide second layer 102 and the corrosion resistant first layer 100, in particular across the range of sintering temperatures as disclosed herein, prevents the generation of stress due to CTE mismatching at the interface between the at least one composite oxide layer 102 and the at least one corrosion resistant first layer 100 upon heating, during sintering, during annealing and upon cooling, thus enabling the formation of multilayer sintered ceramic bodies of large dimension having high strength combined with corrosion resistance.

During sintering, a volume reduction typically occurs such that the ceramic sintered body may comprise a volume that is about one third that of the volume of the starting powder mixture when disposed in the tool set of the sintering apparatus.

The temperature of the sintering apparatus according to the present disclosure is measured usually within the graphite die of the apparatus. Thereby, it is preferred that the temperature is measured as close as possible to the powder mixtures being processed so that the indicated temperatures are indeed realized within the powder mixtures to be sintered.

The order of application of pressure and temperature may vary as disclosed herein. In an embodiment, the indicated pressure may be applied and thereafter heat may be applied to achieve the desired temperature of sintering. In another embodiment, heat may be applied to achieve the desired temperature of sintering and thereafter the indicated pressure may be applied. In a further embodiment, the temperature and the pressure may be applied simultaneously to the powder mixtures to be sintered and raised until the indicated values are reached.

The method as disclosed may comprise a pre-sintering step with a specific heating ramp of from 1 to 100 °C/min, preferably 2 to 50 °C/min, preferably 3 to 25 °C/min, preferably 3 to 10 °C/min, more preferably 5 to 10 °C/min until a specific pre-sintering time is reached.

The method as disclosed may comprise a pre-sintering step with a specific pressure ramp of from 0.50 MPa/min to 30 MPa/min, preferably 0.75 MPa/min to 10 MPa/min, more preferably 1 to 5 MPa/min until a specific pre-sintering time is reached.

The method as disclosed herein may comprise a pre-sintering step with the above-mentioned specific heating ramp and with the above-mentioned specific pressure ramp.

In the aforementioned pre-sintering steps, the temperature and pressure are maintained for a time period of 10 min to 360 minutes.

Inductive or radiant heating methods may also be used for heating the sintering apparatus and indirectly heating the powders in the tool set.

Step h) of the method as disclosed herein comprises optionally annealing the multilayer sintered ceramic body (or component formed therefrom) by applying heat to raise the temperature of the multilayer sintered ceramic body to reach an annealing temperature, performing annealing; and step i) lowering the temperature of the annealed multilayer sintered ceramic body. In some embodiments, the method as disclosed herein may further include an optional annealing step. In the optional annealing step in accordance with embodiments as disclosed herein, the multilayer sintered ceramic body may be subjected to an annealing procedure by removal from the sintering apparatus and annealing in a furnace at temperatures of from about 900 to about 1800°C, preferably from about 1250 to about 1700°C, preferably from about 1300 to about 1650 °C, preferably from about 1350 to about 1550 °C.

The optional annealing of the multilayer sintered ceramic body may be carried out at a heating and/or a cooling rate of from 0.5°C/min to 50°C/min, preferably from 0.5°C/min to 25°C/min, more preferably from 0.5°C/min to 10°C/min, and more preferably from 0.5°C/min to 5°C/min, more preferably from 1°C/min to 50°C/min, more preferably from 3°C/min to 50°C/min, more preferably from 5°C/min to 50°C/min, more preferably from 25°C/min to 50°C/min, preferably from 1°C/min to 10°C/min, preferably from 2°C/min to 10°C/min, preferably from 2°C/min to 5°C/min.

Durations of the optional annealing step may be from 1 to 24 hours, preferably from 1 to 18 hours, preferably from 1 to 16 hours, preferably from 1 to 8 hours, preferably from 4 to 24 hours, preferably from 8 to 24 hours, preferably from 12 to 24 hours, preferably from 4 to 12 hours, preferably from 6 to 10 hours.

In an embodiment, annealing in accordance with this disclosure may be performed after the sintering process and within the sintering apparatus. The optional process of annealing may be performed under oxidizing conditions such as forced convection or in air. Annealing leads to a refinement of the chemical and physical properties of the multilayer sintered ceramic body or component fabricated therefrom through reduction of oxygen vacancies for stoichiometric correction and reduced stress in the sintered body or component. The optional process step of annealing the sintered multilayer corrosion resistant component is carried out in an oxidizing atmosphere, whereby the annealing process may provide increased albedo, improved mechanical handling and reduced porosity.

In some embodiments, the step of annealing may be performed by conventional methods used for the annealing of glass, ceramics and metals, and the degree of refinement may be selected by the annealing temperature and the duration of time that annealing is conducted. In other embodiments, annealing may not be performed on the sintered ceramic body.

After the optional process step of annealing the multilayer sintered ceramic body is performed, the temperature of the sintered, and in some instances annealed, multilayer sintered ceramic body is decreased to an ambient temperature by removal of the heat source to the multilayer sintered body or component fabricated therefrom in accordance with step i). The sintered and annealed multilayer sintered ceramic body or component fabricated therefrom is thereafter taken out of either the furnace in the instance that the annealing step is performed external to the sintering apparatus or removed from the tool set in case annealing is carried out in the sintering apparatus.

Step j) of the method as disclosed herein comprises machining the multilayer sintered ceramic body to create a sintered ceramic component in the shape of a focus ring, a deposition ring, a shield ring, a dielectric window, an RF window, a nozzle, an injector, a shower head, a gas distribution plate, a chamber liner, a plasma source adapter, a gas inlet adapter, a diffuser, an electronic wafer chuck, an ESC chuck, a mixing manifold, an ion suppressor element, and a faceplate. Machining, drilling, surface grinding and the like as known to those skilled in the art may be performed as required to form the multilayer sintered ceramic body into a desired component shape for use in plasma processing chambers as disclosed herein. Use of the calcined powder mixtures in the compositional ranges as disclosed herein may provide a multilayer sintered ceramic body having improved machinability through use of CTE matched layers, thereby reducing stress during performance of the method.

An improved multilayer sintered ceramic body and methods for fabrication of the same, in particular of large body size for use in plasma etching chambers, is disclosed herein. The multilayer sintered ceramic bodies as disclosed may have a size of from 100 mm to 622 mm, and about 625 mm, with regard to the longest extension of the sintered body.

The process as disclosed herein provides for an improved control over the maximum pore size, higher density in particular within the corrosion resistant first layer, improved adhesion between layers of the multilayer component, high mechanical strength and thereby handleability of the multilayer sintered ceramic body, and machinability of the multilayer sintered ceramic body.

The previously mentioned characteristics of the multilayer sintered ceramic body according to one embodiment are achieved in particular by adapting the purity of the first and second powders, the pressure applied to the first and second powders, the temperature while heating to sintering of the first and second powders, the duration of sintering, the temperature of the multilayer component during the optional annealing step, the environment during the optional annealing step, and the duration of the optional annealing step.

The process steps as disclosed may have an order and repetitions varying from that as disclosed and may not be done in a particular order or specific number of repetitions. Further, it may be appreciated that additional powders beyond those disclosed may be used. The lack of sintering aids and the use of high purity rare earth elements or compounds as starting materials, from between 99.9% to 99.99%, between 99.99% to 99.999% to between 99.999% and 99.9999% purity, enables the fabrication of a high purity, sintered multilayer corrosion resistant body as disclosed herein which provides improved etch resistance particularly suitable for use as a multilayer corrosion-resistant member in a plasma processing-involving apparatus such as a semiconductor manufacturing apparatus. Furthermore, the process as disclosed herein does not require the formation of green or sintered bodies prior to the sintering step to join the at least one composite oxide 102 and corrosion resistant first layer 100. The multilayer corrosion resistant body as disclosed herein is formed directly from powders which are sintered within a single process step without the use of green bodies, polymeric binders or sintering aids.

The pressure and current assisted process according to embodiments disclosed herein is suitable for use in the preparation of large multilayer sintered ceramic bodies, such as for example having a greatest dimension of from 100 mm to 622 mm, preferably from 200 mm to 622 mm, preferably from 300 mm to 622 mm, preferably from 400 mm to 622 mm wherein the multilayer sintered ceramic bodies are formed in a disc shape having a diameter as greatest dimension. The process as disclosed provides for rapid powder consolidation and densification, retaining a maximum grain size of less than about 10 um in the sintered ceramic body, and achieving high densities and low porosities within the at least one composite oxide layer across a greatest dimension. Reducing the variation in density may improve handleability and reduce overall stress in the ceramic sintered body, in addition to CTE matching between the corrosion resistant first layer and the at least one composite oxide layer within the ranges as disclosed herein. This combination of fine grain size, uniform and high density and CTE matching provides for a high strength multilayer sintered ceramic body of large dimension suitable for machining, handling and use as a component in a semiconductor processing chamber.

A multilayer sintered ceramic component that is prepared by spark plasma sintering is proposed for use in plasma etch and deposition processing chambers. Examples of chamber components that may include the multilayer component as disclosed herein include a substrate support assembly such as a wafer chuck or wafer puck, an electrostatic chuck (ESC), a ring (e.g., a process kit ring or single ring), a chamber wall, a base, a gas distribution plate, a shower head, a liner, a liner kit, a shield, a plasma screen, a flow equalizer, a cooling base, a chamber viewport, a window, an RF window, a dielectric window, a chamber lid, a gas injector, an isolator, plasma adapters, diffusers, gas mixing gas mixing manifolds, gas box, ion restriction elements, and so on.

The methods and compositions disclosed herein will be illustrated in more detail with reference to the following Examples, but it should be understood that the it is not deemed to be limited thereto.

### Examples

The multilayer sintered ceramic bodies and components fabricated therefrom according to the present disclosure are disclosed following. Measurements as disclosed within the examples section are performed in accordance with methods, standards and procedures as described in the specification.

### Sample 604, multilayer sintered ceramic body comprising a YAG corrosion resistant first layer;

A multilayer sintered ceramic body was formed from first, second and third powder mixtures. The first powder mixture comprised alumina and yttria combined in relative amounts to form a corrosion resistant, first layer 100 comprising about 99% by volume of YAG as disclosed herein. The second powder comprised a mixture of alumina and zirconia to form a composite oxide second layer 102 wherein the second powder mixture comprised zirconia in an amount of about 16% by volume.

The first powder mixture comprised an alumina powder wherein the alumina powder has a specific surface area of from 6 to 8 m²/g, a d10 particle size of from 0.05 to 0.15 um, a d50 particle size of from 0.2 to 0.5 um, a d90 particle size of from 0.4 to 1 um, and a yttria powder having a specific surface area of 2 to 3 m²/g, a d10 particle size of from 2 to 4 µm, a d50 particle size of from 6 to 8 µm and a d90 particle size of from 11 to 13 µm. Total impurity content of the alumina and yttria powders was from about 2 to 10 ppm. Reporting limits to detect presence of lighter elements using ICPMS as disclosed herein are higher than reporting limits of heavier elements. In other words, heavier elements, such as from Sc and higher in atomic number, are detected with greater accuracy than those lighter elements, from for example Li to Ca. Use of ICPMS to detect lighter elements such as Si, Li and Mg may be done within a confidence of about 14 ppm and greater. Si and Mg were not detected using ICPMS as known to those skilled in the art in the yttria and alumina powders and as such, the yttria and alumina powders comprise about 14 ppm or less of Si, and 2 ppm and less of Li and Mg, in the form of silica, lithium fluoride and magnesia. The powders were combined in ratios to form a corrosion resistant first layer comprising YAG (yttrium aluminum oxide, garnet phase) upon sintering. Combining the alumina and yttria powders to make a first powder mixture was performed using the conventional powder preparation techniques of wet ball milling wherein high purity (> 99.9%) media was used at about 60% loading relative to powder weight. A slurry was formed at about 40 volume % by adding ethanol. The slurry was milled for about 15 hours at an RPM of 150 and thereafter dried, tumbled, and sieved according to methods known to those skilled in the art to form the first powder mixture. The first powder mixture was calcined at 850°C for 6 hours. The first calcined powder mixture had a specific surface area of from 2 to 4 m²/g, and a d50 particle size of from 9 to 13 um. The first calcined powder mixture had total impurities of about 8 ppm and comprised about 14 ppm or less of Si and about 2 ppm or less of Mg, in the form of silica and magnesia, each relative to the total powder weight.

The second powder mixture comprised an alumina powder wherein the alumina powder has a specific surface area of from 6 to 8 m²/g, a d10 particle size of from 0.05 to 0.15 um, a d50 particle size of from 0.2 to 0.5 um, a d90 particle size of from 0.4 to 1 um, and a zirconia powder having a surface area of from 6 to 8 m²/g, a d10 particle size of from 0.08 to 0.2 um, a d50 particle size of from 0.2 to 0.5 um, and a d90 particle size of from 1.2 to 3 um. Total impurity content of the alumina powder was from about 2 to 10 ppm relative to the total powder mass. The zirconia powder comprised from about 2 to 4 mol % Hf and was stabilized with yttria in an amount of about 3 mol %. Hf and Y are not considered impurities in zirconia as disclosed herein. Excluding Hf and Y, the zirconia powder had total impurities of about 20 ppm relative to the total powder mass. Use of ICPMS according to the methods disclosed herein to detect lighter elements such as Si may be done within a confidence of about 14 ppm and greater relative to the total powder mass. Si was not detected using ICPMS as known to those skilled in the art in the zirconia and alumina powders and as such, the zirconia and alumina powders comprise about 14 ppm or less of Si in the form of silica relative to the total powder mass. Magnesia may be detected using the ICPMS methods as disclosed to about 2 ppm or less in the form of magnesia, thus the powders disclosed herein comprised magnesia in an amount of about 2 ppm or less relative to the total powder mass. The powders comprising the second powder mixture were combined in ratios to form at least one composite oxide layer upon sintering comprising about 16% by volume of zirconia and the balance alumina. Combining the alumina and zirconia powders to make the second powder mixture was performed using the conventional powder preparation techniques of wet ball milling wherein high purity (> 99.99%) alumina media was used at about 75 to 80% loading relative to powder weight. A slurry was formed at about 40 volume % by adding ethanol. The slurry was ball milled for about 20 hours at an RPM of about 150 and thereafter dried, tumbled, and sieved according to methods known to those skilled in the art to form the first powder mixture. The second powder mixture was calcined at 600°C for 8 hours in air. The second calcined powder mixture had a specific surface area of from 6 to 8 m²/g. The second calcined powder mixture had total impurities of about 15 ppm and comprised about 14 ppm or less of Si and about 2 ppm or less Mg, each relative to the total powder mass, in the form of silica and magnesia. The calcined powder mixtures may be sieved, tumbled, blended, etc. as known to those skilled in the art.

The first and second calcined powder mixtures were combined in an amount of about 51% by weight of the first calcined powder mixture and about 49% by weight of the second powder mixture to make the third calcined powder mixture. The third calcined powder mixture was dry blended, without the use of media, on a roller for about 12 hours in order to thoroughly mix the powders and preserve the high purity of the calcined powder mixtures. The third calcined powder mixture had a specific surface area of from about 4 to about 5.5 m²/g, a d10 particle size of from 0.75 to 1.5 um, a d50 particle size of from 50 to 60 um, and a d90 particle size of from 170 to 190 um. In certain embodiments, the calcination conditions as disclosed herein may result in formation of crystalline phases and agglomeration of the powder mixtures and thus greater variability in particle size distributions overall and in particular larger variance and overall d50 and d90 particle sizes may result. Lot to lot variation and management of heat transfer during calcination may also contribute to particle size distributions. Thus, a broad range of particle size distributions, and in particular d50 and d90 particle sizes, of the powder mixtures may result.

First, second and third calcined powder mixtures may be sieved, tumbled, blended, etc. as known to those skilled in the art.

First, second and third calcined powder mixtures were separately disposed inside a volume defined by a tool set of a sintering apparatus to form at least one layer of the first calcined powder mixture, at least one layer of the second calcined powder mixture, and at least one layer of the third calcined powder mixture, and creating vacuum conditions inside the volume.

A pressure of 15 MPa was applied to the layers of the first, second and third calcined powder mixtures while heating to a sintering temperature of 1625°C for 60 minutes, and the at least one layer of the first calcined powder mixture forms the first layer 100, the at least one layer of the second powder mixture forms the second layer 102, and the at least one layer of the third powder mixture forms a third layer 103, thus forming a multilayer sintered ceramic body having a greatest dimension of 572 mm. Due to the multilayer structure comprising regions of different densities, density measurements were unable to be performed accurately. Density was measured for at least one composite oxide layer 102 comprising 16% by volume of zirconia and the balance alumina, and the density was measured to be 4.319 g/cc, corresponding to nearly 100% of theoretical density as measured in accordance with ASTM B962-17. The multilayer sintered ceramic body according to this embodiment comprising a composite oxide layer 102 of about 16% zirconia by volume and the balance alumina is shown to be closely CTE matched to the corrosion resistant first layer 100 comprising YAG as depicted in FIG. 2 c).

A number of embodiments have been described as disclosed herein. Nevertheless, it will be understood that various modifications may be made without departing from the spirit and scope of the embodiments as disclosed herein. Accordingly, other embodiments are within the scope of the following claims.

## Claims

1. A multilayer sintered ceramic body comprising: a first layer selected from the group consisting of: YAG, magnesium aluminate spinel and at least one crystalline phase comprising yttria and zirconia, wherein the zirconia is present in an amount of not less than 10 mol % ZrO₂ and not greater than 25 mol % ZrO2, a second layer comprising Al₂O₃ and ZrO₂ wherein ZrO₂ is present in an amount of not less than 10 % ZrO₂ by volume and not greater than 25% ZrO₂ by volume, and a third layer comprising combinations of the first layer and the second layer,
wherein the second layer is disposed between the first layer and the third layer, and
wherein an absolute value of the coefficient of thermal expansion (CTE) of the first, second and third layers differ in an amount of from 0 to less than 0.6 x 10⁻⁶/°C as measured in accordance with ASTM E831.

2. The multilayer sintered ceramic body of any of the preceding claims wherein the third layer comprises YAG in an amount of not less than 10% and not greater than 60%, preferably not less than 20% and not greater than 60%, preferably not less than 30% and not greater than 60%, preferably not less than 40% and not greater than 60%, preferably not less than 45% and not greater than 55%, each by weight relative to the total weight of the third layer.

3. The multilayer sintered ceramic body of any of the preceding claims wherein the second layer comprises zirconia in an amount by volume of ZrO₂ of not less than 12% and not greater than 25 %, preferably not less than 15% and not greater than 25 %, preferably not less than 18% and not greater than 25 %, preferably not less than 10% and not greater than 23 %, preferably not less than 10% and not greater than 20 %, preferably not less than 12% and not greater than 23 %, preferably not less than 15% and not greater than 20 %, preferably not less than 15% and not greater than 18 %, relative to a total volume of the second layer.

4. The multilayer sintered ceramic body of any of the preceding claims wherein a difference in the absolute value of the coefficient of thermal expansion between any of the layers is from 0 to 0.5 x 10⁻⁶/°C, preferably from 0 to 0.45 x 10⁻⁶/°C, preferably from 0 to 0.4 x 10⁻⁶/°C, preferably from 0 to 0.35 x 10⁻⁶/°C, preferably from 0 to 0.3 x 10⁻⁶/°C, preferably from 0 to 0.25 x 10⁻⁶/°C, preferably from 0 to 0.2 x 10⁻⁶/°C, preferably from 0 to 0.15 x 10⁻⁶/°C, preferably from 0 to 0.1 x 10⁻⁶/°C, preferably from 0 to 0.08 x 10⁻⁶/°C, preferably from 0 to 0.06 x 10⁻⁶/°C, preferably from 0 to 0.04 x 10⁻⁶/°C, preferably from 0 to 0.02 x 10⁻⁶/°C, preferably from 0 to 0.01 x 10⁻⁶/°C as measured in accordance with ASTM E831.

5. The multilayer sintered ceramic body of any of the preceding claims wherein the first layer comprises YAG in an amount of from about 98% to about 99.5% by volume and the balance comprises at least one crystalline phase selected from the group consisting of aluminum oxide, yttrium oxide, YAM and YAP.

6. The multilayer sintered ceramic body of any of the preceding claims wherein the first layer comprises pores wherein the pores have a maximum size of from 0.1 um to 5 um, preferably from 0.1 um to 4 um, preferably from 0.1 um to 3 um, preferably from 0.1 um to 2 um, from 0.1 um to 1 um.

7. The multilayer sintered ceramic body of any of the preceding claims wherein the first layer comprises porosity by percentage of total area of from 0.0005 to 2%, preferably from 0.0005 to 1%, preferably from 0.0005 to 0.5%, preferably from 0.0005 to 0.05%, preferably from 0.0005 to 0.005%, preferably from 0.0005 to 0.003%, preferably from 0.0005 to 0.001%, preferably from 0.005 to 2%, preferably from 0.05 to 2%, preferably from 0.5 to 2%, preferably from 0.005 to 2%, preferably from 0.005 to 1%, preferably from 0.05 to 2%, preferably from 0.05 to 1%, preferably from 0.5 to 2%.

8. The multilayer sintered ceramic body of any of the preceding claims wherein the second layer comprises ZrO₂ in an amount of about 16% by volume, having a CTE of about 7.112 x 10⁻⁶/°C and a density of about 4.319 g/cc as measured in accordance with ASTM B962-17.

9. The multilayer sintered ceramic body of any of the preceding claims wherein the first and second layers are contiguous.

10. The multilayer sintered ceramic body of any of the preceding claims wherein the second and third layers are contiguous.

11. The multilayer sintered ceramic body of any of the preceding embodiments wherein the first layer comprises YAG in an amount of from about 98% to about 99.5% by volume and the balance comprises at least one crystalline phase selected from the group consisting of aluminum oxide, yttrium oxide, YAM and YAP.

12. The multilayer sintered ceramic body of claim 11 wherein the second layer has a thermal conductivity at ambient temperature of about 27 W/m K as calculated from thermal diffusivity measurements as performed in accordance with ASTM E1461-13.

13. The multilayer sintered ceramic body of claim 12 wherein the second layer has a thermal conductivity at 200°C of about 14 W/m K as calculated from thermal diffusivity measurements as performed in accordance with ASTM E1461-13.

14. The multilayer sintered ceramic body of claim 13 wherein the second layer has a dielectric loss of 0.7 x 10⁻⁴ and less at a frequency of 1 MHz at ambient temperature as measured in accordance with ASTM D150.

15. The multilayer sintered ceramic body of any of the preceding claims wherein the second layer and the first layer are contiguous at an interface having an interfacial area of 2,919 cm² and less, preferably from 78 to 2,919 cm², preferably from 314 to 2,919 cm², preferably from 707 to 2,919 cm²,
